Europäisches Patentamt

European Patent Office

Office européen des brevets

(19)

(11) **EP 1 450 280 A1**

(12) **EUROPEAN PATENT APPLICATION**
published in accordance with Art. 158(3) EPC

(43) Date of publication:
**25.08.2004 Bulletin 2004/35**

(51) Int Cl.⁷: **G06F 17/60**

(21) Application number: **02780042.4**

(22) Date of filing: **07.11.2002**

(86) International application number:
**PCT/JP2002/011611**

(87) International publication number:
**WO 2003/040978 (15.05.2003 Gazette 2003/20)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **07.11.2001 JP 2001341981
07.11.2001 JP 2001341993**

(71) Applicant: **TERASAWA, Takafumi
Okayama-shi, Okayama 700-0082 (JP)**

(72) Inventor: **TERASAWA, Takafumi
Okayama-shi, Okayama 700-0082 (JP)**

(74) Representative: **Mounteney, Simon James et al
MARKS & CLERK,
57-60 Lincoln's Inn Fields
London WC2A 3LS (GB)**

(54) **SCHEDULE DATA DISTRIBUTION EVALUATING METHOD**

(57) To provide a schedule making method for collecting the individual's reaction in accordance with a prescribed schedule via a network even when a strict schedule cannot be substantially applied, and capable of analyzing and predicting the reaction in consideration of the individual's attribution and a quality of a content.

According to the schedule making method of the present invention, an event cycle unit for executing a content of the same event at a prescribed interval after effecting an event once is generated for each day of the inputted period, and a presentation unit allocating the number of times for each kind of the content at a day of execution is allocated to an event cycle unit for each day in accordance with the attribution information. Then, a schedule table is generated, in which the schedule table corresponds the data to which a content to satisfy the kind of the content that is inputted from a database and the attribution information is allocated by the number of times of the attribution information to a month and a day of the period.

FIG. 4

THE ORDER OF ARRANGEMENT OF CONTENT ITEMS (AND PRESENTATION CONDITIONS) WITHIN EACH INTERVAL UNIT ARE MADE EQUAL AS MUCH AS POSSIBLE

**Description**

BACKGROUND OF THE INVENTION

Field of the Invention

The present invention relates to a schedule table making method; a method for collecting the reaction data of individuals to an event arising in accordance with the schedule table and corresponding them to the schedule so as to make the tendencies of the individuals clear from the reaction data; a method for accumulating the reaction data of the individuals to the event arising in accordance with a given schedule and assuming a future reaction pattern of a given individual by using the accumulated data; and a learning schedule data distribution evaluation system for receiving the contents on the basis of a learning schedule at a learner terminal and transmitting the response results to a learner schedule providing apparatus so as to acquire a future evaluation result.

Description of the Related Art

It has been performed commonly to collect the reactions of the individuals and grasp the entire tendency by using a multivariable analysis (i. e. an analysis method for summarizing a characteristic of a large amount of data having various characteristics by analyzing their cross references; and predicting and classifying the data by finding a cause behind an event) like a general questionnaire.

For example, the multivariable analysis is used for assuming an attribute of a person who prefers a commodity by an image research of the commodity using a questionnaire or for assuming a record of an individual at a certain point of time by a relative position of the individual in a group in mock exams for university entrance exams.

However, there is a limitation in an inspection method by means of a multivariable analysis that has been conventionally performed. It is that the available information is limited to the data regarding the status of the individuals at a certain point of time.

Originally, various reactions of the individuals are largely changed due to their experiences. For example, if they heard a popularity of a certain commodity just before the questionnaire or they saw the commodity before the questionnaire, their image to the commodity should be largely changed.

In addition, in the mock exams, the evaluation of the record of a child having C-assessment at a certain point of time should be changed depending on if he.or she had E-assessment or A-assessment at the prior mock exams.

In other words, the data analysis due to the current multivariable analysis mainly uses the data indicating the status at a certain point of time and it cannot be said that the time-series changes are sufficiently considered, so that it is not possible to acquire a precise analysis result.

In addition, for interpretation and prediction of the human reactions, the information of "change" from the past to the future of the individual has a significant meaning. It depends on the differences in the individuals' experiences what content and at what temporal pace they encounter or react.

In addition, the analysis of the reaction data that have been widely common are focused on the attributions of the individuals at a certain time period and the qualities of the contents or the like, however, they scarcely consider the time-series encounter pace and changes.

In other words, there is a problem such that, since it is not possible to make a time-series schedule considering the attributes of the individuals at a certain point of time and a quality of the content or the like, the analysis cannot be performed precisely.

On the other hand, among the inspection researches, there is a vertical research. This intends to observe the change of a specific individual by continuously repeating a specific inspection during a certain period of time.

However, the inspection of the above vertical research is carried out in a laugh schedule such as one a month or once a year, so that this involves a problem such that the change in the reaction to the enormous amount of information that we frequently encounter day by day is not a target for analysis.

As a reason, in the case of evaluating the data at a determined pace such as once a month or the like, it is difficult to judge the enormous amount of contents at a predetermined pace and under the same condition.

For example, the case is thought that 1000 English words are learned once a month. If the learner learns once a month conventionally, he or she will learn all of 1000 English words and will learn another 1000 English words after one month. This does not ensure the equivalent learning on the first day and the last day of assessment and a great load rests on the learner.

The case of learning one word once to tenth times becomes furthermore burden. A specific method has not been suggested yet to make the enormous amount of assessment items to be learned at the equal pace, make the assessment conditions equal, and making the load of a rater less.

A substantial reason why an encounter pace (hereinafter, referred to as a schedule condition) with the contents (or the targets) is not considered for analysis is that the infinite number of patterns of the schedules can be assumed and there is no frame for considering this that has been suggested.

For example, in consideration of a schedule of learning English words, its learning effect is largely different between the case of learning once a day during ten days and the case of learning five times at a first day and a last day. Further, the length of interval between learning and a test has a significant meaning.

The result is largely different between the case that the test is performed just after the learning and the case that the test is performed after one month from the learning. It is possible to finitely assume the patterns about in what schedule the learning is performed and when its result is assessed.

Since there is the infinite number of schedules in this way, it is difficult to analyze the results on the basis of the schedules. Further, if the schedules are assumed to various contents, there are enormous number of causes to be considered.

On the contrary, it is effective to set a specific schedule, to require the individuals to react in accordance with the schedule, and to collect the data. In other words, this is a method to introduce an experimental design into an inspection method. The vertical inspection once a year is an example thereof, however, only by setting a schedule, the problems cannot be solved because it is very difficult for the individuals to be inspected to react in a uniformed and prescribed schedule. Even if the schedule to perform learning for ten minuets every day can be made for senior high students, it is unimaginable that the senior high students can actually continue such learning as the schedule. In other words, it is not possible to acquire meaningful data from a freedom operation such daily learning only by unifying the schedule simply.

On the other hand, in the learning of English words requiring repeat and continuous learning for a prescribed long period, even such repeat learning leads the learner to a comment such as "I cannot learn words even if I learn them many times" or " Can I learn them in truth?". Therefore, the learner will give up learning at last.

As described above, it is a significant cause of the fact that the schedule has not been considered for a conventional inspection research that there is no prediction about on what focus and in what frame the schedule is incorporated. In addition, there is a problem such that, if the learner cannot experience the result and the achievement, motivation for the learning should be lowered with certainty.


SUMMARY OF THE INVENTION

The present invention has been made taking the foregoing problems into consideration and an object of which is to provide a schedule table making method of collecting the reactions of the individuals in accordance with a prescribed schedule even in the case that a strict schedule cannot be applied substantially and enabling to analyze and predict the results in consideration of the attributes of the individuals and the qualities of the contents.

In addition, another object of which is to provide a learning schedule data distribution evaluation system of providing the guidance such as "how may times should the learner repeat the learning for a certain learning?" or "how the learning is progressed?" or the like to the learner and evaluating the reactions.

A schedule making method according to the present invention may express a schedule condition under which an event relating to a given content arises by a combination of the kinds of a timing condition and a presentation condition.

A storage media storing a schedule table according to the present invention may have one or a plurality of schedule data, wherein the attribution information of the contents to be presented within the presentation unit; the number of repetition of the contents within this presentation unit; a presentation method of the contents; and the number of the contents to execute the events matching a combination condition thereof are corresponded to the order of repetition of the above-described event cycle unit and the order of the presentation unit to be executed within each event cycle unit, and they are provided with an execution expected date or a through number.

A presentation list making method according to the present invention may comprise the steps of: generating a schedule table by deciding a stage for storing many and various contents to which the attribution information is added in a database, a timing condition, a length of an event cycle unit, a length of a presentation unit, a length of a condition unit, a presentation condition, the attribution information of the content, and the number of repetition of the content; writing a condition code made by combining a timing condition, a number of a presentation unit, the attribution information of the content, the number of repetition of the content, and a presentation method of the content on the basis of the above-described schedule table while corresponding it to each content of a content database; designating a kind of the content, a schedule condition, and a number or a through number of a presentation unit; and corresponding the designated content database to the schedule table, abstracting the content corresponding to the designated presentation unit as a presentation list together with various information, and deciding the order of presentation and a presentation method of the contents so that the contents that are abstracted according to need can be presented in accordance with a presentation condition of the schedule table.

As described above, according to the present invention, the schedule table may have a plurality of the schedule data corresponding an event cycle period for executing the same event again after executing the event once at a prescribed interval; the minimum unit of the event of the event cycle period; the content of the event and the attribution information of this content; the number of repetition of the content; and a year, a month, and a day when the content of the event is executed with each other, so that a time-series schedule in consideration of the attribution of the individual at a given time and a quality of the content or the like can be acquired.

In addition, according to the schedule making method of the present invention, an event cycle unit for executing a content of the same event at a prescribed interval after effecting an event once for each day of the inputted period, and a presentation unit allocating the number of times for each kind of the content at a day of execution is allocated to an event cycle unit for each day in accordance with the attribution information. Then, a schedule table is generated, in which schedule table corresponds the data to which a content to satisfy the kind of the content that is inputted from a database and the attribution information is allocated by the number of times of the attribution information to a month and a day of the period.

In other words, according to the present invention, it is possible to easily acquire a time-series schedule in consideration of the attribution of the individual at a given time and a quality of the content or the like.

A learning schedule data distribution evaluating method according to the present invention serves to distribute a presentation unit of learning from a site to a learner terminal by a computer system via a network and evaluating an effect.

The above-described site may have a stage wherein, with respect to a set composed of one or a plurality of contents, in order to generate a schedule under which events relating to all contents repeatedly arise at a preserved timing, a period (referred to as an interval) that is not shorter than the above-described presentation unit relating to arising of the event and is not longer than a period from start of a given event till before a next event arises is provided as an event cycle unit; and a content is arranged so that a specific event relating to each content arises once within that event cycle unit or the information for arranging the content is transmitted to the above-described learner terminal; a stage for adding an evaluating event such as a test to the event of the above-described event cycle unit; and a stage for offering the reaction to the content of the event arising under a specific schedule before the above-described distributed event cycle unit from the above-described learner terminal and measuring and evaluating an effect of this event.

A learning schedule data distribution evaluating system according to the present invention may offer index information that is required to master a learning content from the side of a server via a computer network, wherein the above-described learning schedule offering device may comprise means for prompting a learner terminal to input a content name to be learned, in accordance with input of the above-described content name, making the above-described learner terminal to display a plurality of learning effect patterns corresponding to the above-described content name that has been stored therein in advance, and prompting the above-described learner terminal to select any one of the above-described plural learning effect patterns; means for generating a presentation list corresponding a month and a day to the content when the above-described learner terminal selects the above-described learning pattern on the basis of a schedule table defining a distribution schedule of the above-described selected content by the number of repetition and the attribution information, and transmitting the above-described presentation list to the above-described learner terminal; and means for collecting an assessment result of each content with respect to the above-described presentation list at a learner terminal of the above-described learner; collecting the above-described assessment results having similar individual attribution and schedule; selecting a central value from among them; prediction an effect to the above-described selected content hereafter; and transmitting the predicted effect to the above-described learner terminal.

The above-described learner terminal may have means for displaying many learning effect patterns from the above-described learning schedule offering device, and transmitting a content name of the selected learning effect pattern to the above-described learning schedule offering device; and means for storing a presentation list from the above-described learning schedule offering device, sequentially displaying each content of the above-described presentation list on a screen, displaying the prescribed number of question items after a prescribed time has passed to select any one of the question items, and transmitting the above-described selected question item to the above-described learning schedule offering device as the above-described assessment result.

According to the learning schedule data distribution evaluating method, at the learner terminal, a future prediction patter is displayed by a year, a month, and a day; and a level of effects with respect to the number of times of learning a desired content to be offered, so that it is possible for the learner to acquire an effect an index such as "How many number of times the learning should be repeated in order to acquire a clear effect" and "How the learning is progressing" can be known.

In addition, since the learning effect patterns of the other learners who lean the same content are offered, it is possible to acquire the effect such that the individual himself or herself can know his or her level.

In addition, since a presentation list to which the contents to be learned for each month and day are allocated is generated from the schedule table corresponding to the content name of the learning pattern, the above-described presentation list is transmitted to the above-described learner terminal, and the assessment at several stages is performed with respect to the content of this presentation list, it is possible to realize a fine prediction.

BRIEF DESCRIPTION OF THE DRAWINGS

FIG. 1 is an explanatory view for explaining an example of a schedule of an embodiment according to the present invention.
FIG. 2 is an explanatory view for explaining an example of a timing condition of an embodiment according to the present invention.
FIG. 3 is an explanatory view for explaining an event cycle unit of an embodiment according to the present invention.
FIG. 4 is an explanatory view of a uniform arrangement of a presentation condition and homogenization of a condition unit and a presentation unit of an embodiment according to the present invention.
FIG. 5 is an explanatory view for explaining a schedule table of an embodiment according to the present invention.
FIG. 6 is an explanatory view for explaining allocation of a timing condition and a content item.
FIG. 7 is an explanatory view for explaining allocation of a timing condition and a content item.
FIG. 8 is an explanatory view for explaining allocation of a timing condition and a content item.
FIG. 9 is an explanatory view for explaining allocation of a timing condition and a content item.
FIG. 10 is an explanatory view for explaining allocation of a timing condition and a content item.
FIG. 11 is an explanatory view for explaining a summary of items generalizing all conditions and learning hours to be predicted.
FIG. 12A is an explanatory view for explaining an example (one month interval) of content data in which an identification condition is written.
FIG. 12B is an explanatory view for explaining an example (two month interval) of content data in which an identification condition is written.
FIG. 13 is an explanatory view for explaining an example of a presentation list doubling with a reaction history list.
FIG. 14A is an explanatory view for explaining an example of an individual history file.
FIG. 14B is an explanatory view for explaining an example of an individual history file.
FIG. 15A is an explanatory view for explaining an example of an individual reaction database in which the reactions are stored.
FIG. 15B is an explanatory view for explaining an example of an individual reaction database in which the reactions are stored.
FIG. 16A is an explanatory view for explaining an example such that the contents are written into the individual reaction database.
FIG. 16B is an explanatory view for explaining an example such that the contents are written into the individual reaction database.
FIG. 16C is an explanatory view for explaining an example such that the contents are written into the individual reaction database.
FIG. 17 is an explanatory view for explaining the change of a self assessment value of an entire average.
FIG. 18A is an explanatory view for explaining a relation between the individual data of three learners that are acquired from the actual tests and their prediction functions.
FIG. 18B is an explanatory view for explaining a relation between the individual data of three learners that is acquired from the actual tests and their prediction functions.
FIG. 18C is an explanatory view for explaining a relation between the individual data of three learners that is acquired from the actual tests and their prediction functions.
FIG. 19A is a flow chart for explaining a fourth embodiment according to the present invention.
FIG. 19B is an explanatory view for aiding FIG. 19A.
FIG. 19C is an explanatory view for aiding FIG. 19A.
FIG. 20 is a flow chart for explaining an embodiment according to the present invention.
FIG. 21A is an explanatory view for explaining a relation between a presentation unit and a presentation list of a fourth embodiment according to the present invention.
FIG. 21B is an explanatory view for explaining a relation between the presentation unit and the presentation list of a fourth embodiment according to the present invention.
FIG. 22 is a schematic block diagram of a schedule data distribution evaluation system.
FIG. 23 is a schematic block diagram of a site of a schedule data distribution evaluation system.
FIG. 24A is an explanatory view for explaining each table.
FIG. 24B is an explanatory view for explaining each table.
FIG. 24C is an explanatory view for explaining each table.

FIG. 25 is an explanatory view for explaining a schedule table.

FIG. 26 is an explanatory view for explaining a presentation list table.

FIG. 27 is an explanatory view for explaining a learning result.

FIG. 28 is a sequence view for explaining the operation of a main system.

FIG. 29 is a sequence view for explaining the operation of the main system.

FIG. 30A is an explanatory view for explaining an individual reaction file.

FIG. 30B is an explanatory view for explaining an individual reaction file.

FIG. 30C is an explanatory view for explaining an individual reaction file.

FIG. 30D is an explanatory view for explaining an individual reaction file.

FIG. 31A is an explanatory view for explaining a screen example of self assessment of a learning level.

FIG. 31B is an explanatory view for explaining a screen example of self assessment of a learning level.

FIG. 32A is an explanatory view for explaining a reaction result.

FIG. 32B is an explanatory view for explaining a reaction result.

FIG. 32C is an explanatory view for explaining a reaction result.

FIG. 32D is an explanatory view for explaining a reaction result.

FIG. 33 is a sequence view for explaining a sixth embodiment.

FIG. 34 is a sequence view for explaining the sixth embodiment.

DESCRIPTION OF THE PREFERRED EMBODIMENTS

In the embodiments according to the present invention, a scheduling due to A: a schedule fixing method and B: a free accumulation method will be described at first.

<A first embodiment>

The schedule fixing method is a method of collecting the data after unifying timing and improving a prediction capability by making an impact of the timing smaller.

In many cases, it is conceivable that the timing can be easily performed, however, this involves a very serious problem when actually fixing a variation of the timing and collecting the reaction data. For example, the case of requiring the reaction taking about five seconds per content from 1000 contents once a month will be considered. In simple thinking, the reaction is performed with respect to 1000 contents and after one month, the reaction is performed with respect to 1000 contents again.

In this case, it is necessary that the reaction should be continued during one and half hours on the reaction day without rest. Therefore, the first reaction has a different meaning from that of the last reaction. Further, under the condition such that 1000 contents should be assessed five times per day, the individuals must assess the contents continuously for seven hours. This is impossible.

The present invention may comprises a schedule structuring method, whereby all of the events regarding a given content can arise at predetermined intervals and the reaction per day can be completed for a few minuets even if there are 1, 000 contents or 2,000 contents, and the number of repetition is five or ten in the above-described example.

In order to solve this problem, a schedule setting an event cycle unit is provided. Prior to explaining a schedule method, a meaning of a schedule in the present invention will be made clear hear.

A schedule of the present embodiment uses a schedule condition. This schedule condition is a condition indicating when, at what timing, and what attribution is presented and how it is presented; and this schedule condition is divided into three conditions, namely, a timing condition, an attribution condition, and a presentation condition.

The timing condition means timing that the event once a month or once per two weeks may arise. The strict definition thereof will be described later.

A period of the event cycle unit is a period for giving the contents and various conditions and does not always correspond to the period of the interval, however, the event unit becomes a short period not more than the period of the interval.

According to the present embodiment, it is suggested that a cause of a schedule is incorporated into the inspection research of learning and further, the methods for this and the using methods of the data are suggested. By collecting the data vaguely, the common information is only acquired. Therefore, a frame for analyzing the data in consideration of the temporal change is needed.

(A measure to incorporate a cause of a schedule into analysis)

In order to incorporate a schedule pattern into analysis, at first, it is suggested to introduce an idea of an experimental design into a conventional inspection method.

It is not rational that a schedule capable of being assumed infinitely is defined as a target of analysis at first in order to consider the cause of the schedule. After all, it is necessary to add a limitation to a presentation schedule such as a content or the like, to collect the data corresponding to this, and to analyze it. In other words, in order to incorporate the schedule pattern into analysis, it is necessary to add a limitation to the schedule to be presented and a specific limitation method has a significant meaning.

Only by setting the schedule, the problem cannot be solved. Particularly, in the case of collecting the reactions against the event regarding the enormous amount of the contents in accordance with a prescribed schedule, this involves a very serious problem that it is very difficult to unify the schedule. When requesting the reaction to the enormous amount of the contents from the individuals, in order to collect each reaction in accordance with a specific schedule, the individuals should react in accordance with the very unified schedule in their daily lives. However, it is impossible to ask the general individuals for this because it is very difficult for the individual to be inspected to perform the reactions in accordance with a uniform and predetermined schedule.

Accordingly, a frame capable of analyzing the collected data while corresponding them to the predetermined schedule even when collecting the reactions in the daily lives of the individuals with a large freedom is necessary. A scheduling method is necessary, whereby the data can be collected and analyzed while corresponding the data to the predetermined schedule even when the freedom of the timing that the individuals react to the contents is high.

According to the above-described method, by incorporating the cause of the schedule into the analysis of the reaction data, analysis and prediction with a high degree of accuracy can be realized.

Thereby, the analysis further considering the cause of the schedule other than various combinations between the attributions of the individuals and of the contents such as the sexuality, the locality, the age, a recognition style, a learning style, and a personality or the like becomes possible.

A specific measure about collecting the data so as to incorporate the cause of the schedule into the analysis will be described below. In the meantime, in the following methods, by employing the individual methods and the combination thereof more, the accuracy of analyses in consideration of the cause of the schedule becomes higher and on the contrary, if they are not employed, the accuracy of analyses is lowered (the analysis is carried out by a computer).

(1) A definition of a schedule of an embodiment according to the present invention

At first, it is necessary to strictly grasp a meaning of a general schedule. Therefore, a general schedule rising a prescribed event is considered as divided into three, namely, a timing condition $A_i$ to be defined by the minimum period rising the event (referred to as a presentation unit) and intervals from the start of a certain event till a next event arises; a presentation condition $B_i$ representing aquality of the event; and the details of the contents (a degree of difficulty or the like) according to need. For example, in the case of the general schedule of having a rest for four days after learning one day, a day is assumed as the minimum unit (a presentation unit) and five days are assumed as intervals.

In the meantime, at first, it is necessary to define the minimum period (the presentation unit) rising the event. In the case of learning English words, it is general to learn them for many days, and it is not possible to assume that the learner learns the same word in several hundred times one day. Accordingly, it is general that one day is defined as a presentation unit. However, in the case of the content such as a shooting game pulling a trigger or not that the event several seconds before has an impact thereto, it is also conceivable that one second is defined as a presentation unit and the impact of the timing is analyzed.

Taking learning of English words as an example, a schedule for learning one kind of the English words one day and continuing this for ten days (here, referred to as a schedule A) ; a schedule for learning one kind of the English words in five times at the first day and the sixth day (referred to as a schedule B) ; and a schedule for learning one kind of English words once at the first day and the sixth day, respectively (referred to as a schedule C) are assumed.

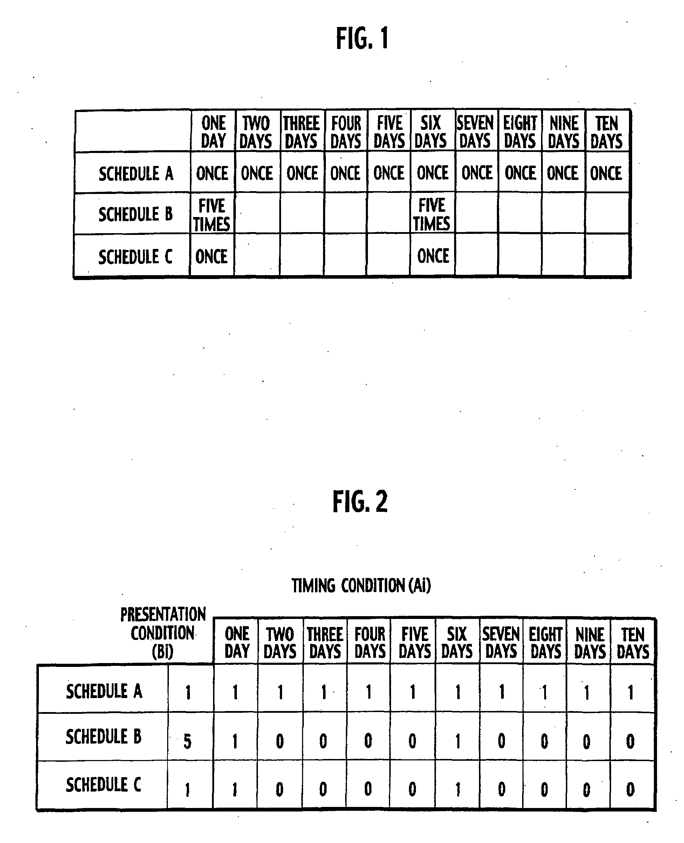

As shown in FIG. 1, when learning once a day and continuing this for ten days as the schedule A, and when learning in five times at the first day and the sixth day, respectively, as the schedule B, both cases mean learning in ten times in total, however, qualities of respective learning schedules are clearly different from each other.

These schedules are considered as follows to be divided into two, namely, a timing condition $A_i$ (a timing taking five days interval from a point of time when one event arises till a next event arises in the schedule B) and a presentation condition $B_i$ (in this example, a dimension representing the number of learning (intensity of the learning).

In other words, when the minimum period (the presentation unit) rising the event regarding one kind of English words is defined as one day, a condition of the timing rising a specific event during this period is represented (coded) by corresponding presence or absence of arising of the event in the minimum period included in ten days one-to-one without reference to the number of repetition and the kinds of various conditions. Specifically, as shown in FIG. 2, the schedule A is represented as (1, 1, 1, 1, 1, 1, 1, 1, 1, 1) and the schedules B and C are represented as (1, 0, 0, 0, 0, 1, 0, 0, 0, 0) by codes (by the computer). According to this, the schedules B and C are the same in the timing condition, however, they are different in the repetition number and the dimension of the presentation condition from each other.

As the kinds of the presentation conditions, other than the repetition number, various kinds such as a time for presentation (for example, presentation for three seconds) and the process to be requested at the point when the presentation is carried out (the assessment of familiarization of English words, the self assessment of achievement of learning or the lie) may be considered and the representation methods thereof may be variously thought, however, it may be also possible to represent all of the events (namely, the details of the individual's experience) arising at a unspecified timing by combining a notation method of these presentation conditions and a notation method of the timing conditions.

As described above, according to the present embodiment, at first, the minimum period rising the event is defined as the presentation unit, and then, a condition that are referred to a schedule conventionally is divided into two dimensions, namely, a timing condition and a presentation condition to be decolorized and it is suggested to review their impacts. In the meantime, according to need, it is also possible to decolorize the details of the contents (a degree of difficulty or the like) as another dimension.

(Set an event cycle unit)

As a frame for unifying the timings rising the events regarding the enormous amount of the contents, it is suggested to assume an event cycle unit. If it is difficult to present the enormous amount of the contents by the gross, it is obviously necessary to distribute the contents for a given period. This period is defined as an event cycle unit. One point is that there is limitation in setting this period.

In other words, in order to generate a schedule repeatedly rising the events regarding all contents at the same timing, it is necessary to arrange the contents so that a short prescribed period is set at not more than a period of the shortest interval among the intervals that are set in the assumed period as the event cycle unit and a specific event regarding respective contents arises once in this event cycle unit.

Learning English words for one year, namely, learning English words at a timing of once for two months in the first half year and once for one month in the last half year will be considers as an example. In this case, in order to unify the timing conditions, a period for distributing (arranging) the contents should be made one month at the maximum length since the minimum interval is one month. In the case of setting the event cycle unit over one month, it is not possible to strictly unify the timing of rising the events regarding the contents.

In the meantime, it may be general that all of the event cycle units are fixed starting from a point of time when the events to be considered arise first and the event cycle units have the same periods.

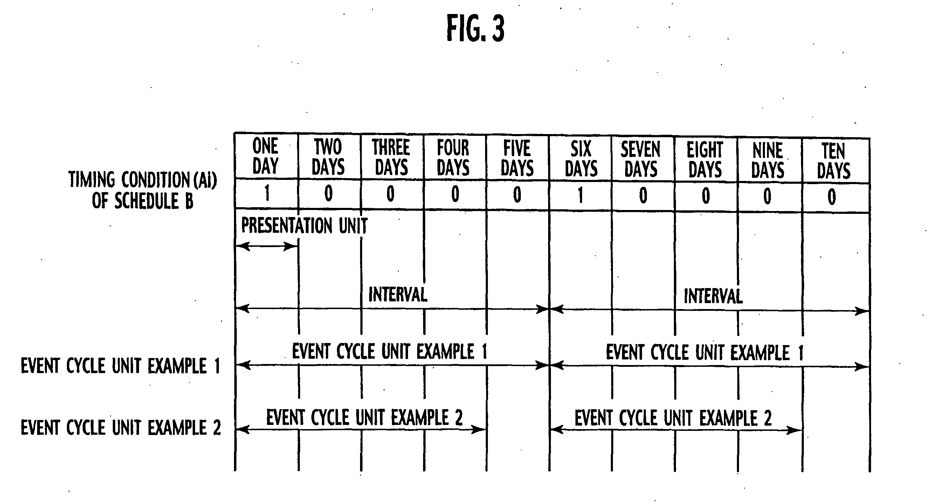

FIG. 3 shows two examples of the event cycle unit capable of being set corresponding to the schedule B shown in FIG. 2. The present embodiment may comprise a method for arranging each content so as to be presented once to each unit.

In addition, as shown in FIG. 3, spacing since a given content (English words) is presented (learning: event) till it is presented again is referred to as an interval; a period longer than the presentation unit and shorter than the interval is fixed as an event cycle unit mi; and its starting point is made corresponded to the starting point of the event arising timing (they are not always corresponded to each other, however, the start of the event cycle unit after the first event cycle unit is defined to be in the range from the starting point of the first event cycle after the interval). In addition, it is defined that a given one content arises once within one event cycle unit mi.

Depending on concept, it is possible to assume the event cycle unit mi as the fifth learning of the first day of the schedule B and in this case, an interval between the first and second learning (a minute and a second or the like) is defined as the minimum unit of one event cycle unit mi = the presentation unit (bi) (in other words, it is also necessary to clear what the minimum unit of the event cycle unit = the presentation unit is). However, when reviewing the general learning event and its effect, as shown in FIG. 1, one day is allowed to be defined as the minimum unit of a 1 event cycle unit mi = the presentation unit (bi).

Here, returning to FIG. 1, the explanation will be added again.

In the schedules B and C shown in FIG. 1, one day is defined as the minimum unit of the event cycle unit mi (the presentation unit) bi, and the timing conditions Ai are identical but the presentation conditions Bi are different from each other.

In the meantime, as the presentation condition Bi, not only mere number of times but also various variations such as the presentation time and the reaction method may be observed.

In other words, it is only focused that the schedule indicates at how many days of interval the event is performed and representing the event by 1, 0, "5" of the schedule B is merely indicated as "1". Since one content arises once within a 1 event cycle unit, as shown in FIG. 2, "1" is set at the first day and the sixth day.

Accordingly, as shown in FIG. 2, the timing condition Ai of the above-described schedules A, B and C and the presentation condition Bi can be coded. Thus, the timing conditions of the schedules A, B and C and the presentation condition are coded.

In other words, the schedule (the learning standard schedule) may be represented as a matrix corresponding the timing condition Ai to a date (a time) with the presentation condition Bi of the event (the content) 1 - 0 when one day is assumed as the presentation unit.

(2) Groping of the contents

In order to make characteristics of the individuals and the general tendencies or to perform the accurate prediction, it is necessary to make a quality of the content requiring the reaction such as evaluation or the like clear. If change of the reaction to each commodity and English words is a main interest, grouping is not necessary, however, for observing the reaction tendency of the individual, it is preferable that a central value of the reactions of a plurality of contents that is transmitted to the individual is taken (by a computer).

In such a case, for each combination of the timing condition Ai (a pattern of a rest interval of the learning) and the presentation condition Bi (the number of times of learning; the strength of learning), plural similar contents are prepared. This is grouping of the contents. For example, regarding the English words, the contents items are unified based on a predetermined attribute (the attribution information is added) such as the words having the same level of a degree of difficulty, the words necessary for each year, the words that are assessed by the learner to have the same level of a degree of difficulty, and the words having no difference between a degree of difficulty assessed by the learner and that assessed by an expert (for example, the expert is a senior who passed the exams of a desired university for the senior high students). In the meantime, the degree of difficulty in this case is not only a general degree of difficulty but also may be a degree of difficulty corresponding to worthiness of the record of the individual to each content.

In a questionnaire about a calculation of an area of a triangle, a questionnaire about a formula: an area = a base x an altitude/2 and a calculation of multiplication and division can be unified, however, in this case, it is preferable that the details of the contents are broken up as much as possible and the data is taken while corresponding respective contents to respective presentation conditions and respective timing conditions of the schedule because a hierarchical relation between the questionnaires can be also reviewed to know at what level of abilities of multiplication and division the learner can calculate the area of the triangle.

Hereinafter, in order to make the terms clear, the explanation about the content items and the content groups will be complemented.

The content item means a clump of the presentation contents of which reactions are expected (or they may be merely seen).

As the content item, regarding English words, a pair of one English word and its Japanese mean is available, and regarding addition, a calculation of 1 + 2 = ? is available. In addition, it is also possible to separate a calculation process as content in a questionnaire by a sentence of mathematics. It is a matter of course that all of the contents that can be presented by the voice data and a video or the like are included. The minimum unit of the content item depends on how to grasp the details.

The content group means an assembly of the similar content items , namely, an assembly of the content items that are unified by the prescribed attributions such as the English words having the same level of a degree of difficulty, the English words necessary for each year, and the English words necessary for learning a given unit.

In the meantime, as described above, the content item is presented only once in a 1 event cycle unit of the timing condition (please pay attention that once presentation is not included in the presentation condition)

(A reason for grouping the contents)

The contents are grouped because it is considered that the effects of a specific schedule are different depending on the contents. The effects of the schedule on the assembly of the contents having a plurality of attributions are more likely different if the assembly of the contents is changed. In other words, the grouping of the contents intends to improve the accuracy of analysis by separating the cause of the content and the cause of the schedule as much as possible.

In the meantime, by homogenizing the contents and grouping them finely as much as possible, it is possible to predict a relation between different kinds of the contents from among the schedule and the reactions to respective content groups by means of the acquired data.

Taking the above-described calculation of the area of the triangle, if the contents are separated into three content groups, namely, a calculation of the area of the triangle; a questionnaire about a formula: an area = a base x an altitude/2 and a calculation of multiplication and division; and the records of respective content groups are collected according to various schedules, it should be possible to predict the optimum schedule for presenting the calculation of the area of the triangle to children with corresponding to the learning schedules of the formula, and the calculation of multiplication and division.

For example, it is possible to predict that "unless the learner does not interpret the formula to some extent, the result of learning the triangle area cannot be expected so much. Therefore, when the formula is learned once a week, it is effective that the questionnaire of the triangle area is not presented till the fifth week and after three days, the questionnaire is presented once a week". In other words, it becomes possible that the content group of the questionnaire prompting memorization of the formula is separated as a combination of two schedule conditions, namely, a schedule such that the content group is presented once per three days till the first five weeks and then, it is presented once a week; and a schedule such that the content group of the questionnaire of the triangle area is not presented once during the first five weeks and then, it is presented once per three days so as to review the impact of the both schedules.

(3) Decision method of timing conditions

The kinds of the timing condition are infinitely assumed, however, in order to make the impact of the period of the event to be easily understandable visually, in the beginning, it is effective to set the presentation condition having equal intervals such as once per ten days or once a month.

Collection and analysis of the data corresponding to the schedule finally intends to have a prediction ability with respect to random schedules (the second object of the present embodiment) , however, in order to do so, it is not effective that the random schedules are set to collect the data from the beginning (if the reaction data corresponding to a predetermined timing condition is available, there is no problem).

It is because that the accumulation of the data available to some extent is needed in order to analyze the data in consideration of the cause of the schedule and particularly to predict the schedule. Therefore, it is difficult to provide an advantageous prediction to the rater himself or herself by setting the complex and fine timing condition from the beginning and further, the accumulation of the data is impossible.

In order to provide the data understandable for the rater at an early stage, it is preferable that the above-described relatively simple timing condition is set at first to collect the data. Either way, it is preferable to set the timing condition and the presentation condition for deciding the event cycle unit according to the plan.

In order to make the impact of the period of the event to be easily understandable visually, in the beginning, it is effective to set the presentation condition having equal intervals such as once per ten days or once a month.

(4) Homogeneous arrangement of the presentation condition within each event cycle unit

In a specific event cycle unit, the presentation conditions to be considered are arranged homogeneously as much as possible in a 1 event cycle unit, and then, the content items are allocated in it.

The reason of homogeneously arranging the presentation conditions (for example, the number of times of learning) is that there is a probability that the event does not arise at a predetermined pace in the event cycle unit and in this case, there is a large error upon estimating the impact of the former events in an evaluating event (a test) to be described later. This will be described in detail in a method for setting an evaluating event.

Taking learning of the English words as an example, when the items of specific presentation condition are unevenly disposed at the first and the last of a given event cycle unit, the timing conditions may be slightly different depending on the condition when the learner cannot learn because of ill or the like in the middle of the event cycle unit. In addition, as described later, upon setting the evaluating event at a shorter period than the event cycle unit and estimating the impact of the event as unifying the contents for each presentation condition, it is difficult to strictly control the period from the event for reviewing the impact till the evaluating event.

In order to prevent this, the presentation conditions are made homogeneous as much as possible within each event cycle unit. More specifically, it is effective to set a condition unit to be described later. In addition, the orders of the presentation conditions within respective interval units are made even as much as possible.

(5) A method for homogeneously arranging the presentation conditions: predict the condition unit

For the homogeneous arrangement, the following method is observed in addition to arrangement of the presentation conditions randomly. In other words, the event cycle unit is further separated into a predetermined period (referred to as a condition unit), and there are all presentation conditions (they are not content items) within this condition unit or there are the presentation condition and the attribution condition for relatively comparing the impacts of the event arising under a predetermined timing condition, these conditions are made to make an appearance once, respectively (see FIG. 3).

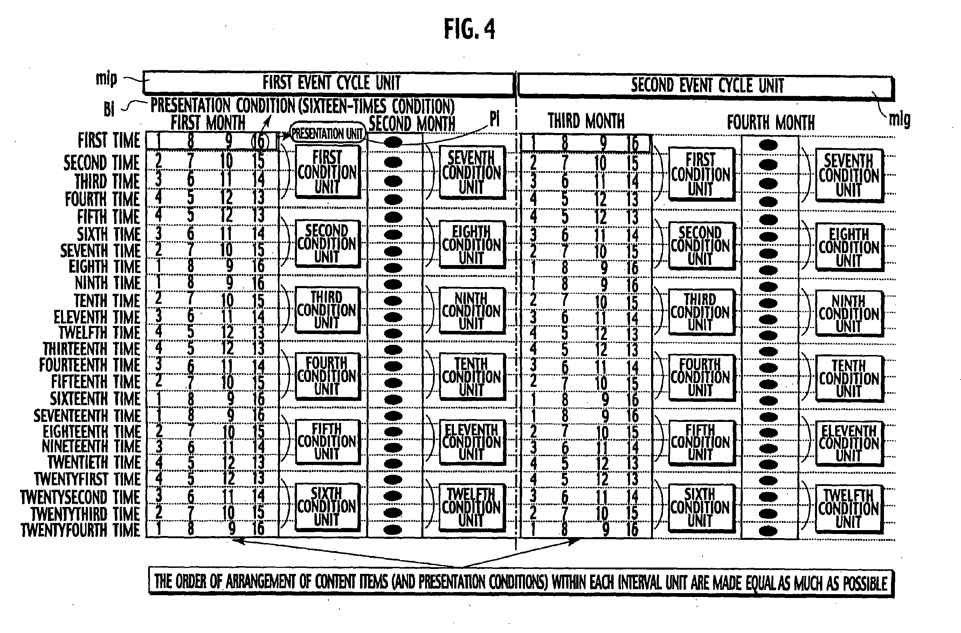

FIG. 4 shows the conditions for repeating the event cycle unit of about two months (48 days), and sixteen conditions are set, in which the number of times of presentation (the number of times of learning) is sixteenth as the presentation condition Bi. According to this example, a first event cycle unit mjp (48 days) is sectioned for each four days, and this data is separated into twelve condition units fi to be saved in a memory that is structured as shown in FIG. 4.

For example, at the first day, the conditions such that the numbers of times of learning are 1, 8, 9 and 16 are allocated; at the second day, the conditions such that the numbers of times of learning are 2, 7, 10 and 15 make an appearance, and all of sixteen conditions make an appearance each once in one condition unit (four days).

In the same way, also in the second condition unit fi from the fifth day to the eighth day, all of sixteen conditions make an appearance each once. Hereinafter, in the same way, in once cycle (48 days), twelve condition units fi will be repeated.

In the meantime, the number of the content items to be allocated to one presentation condition Bi of each condition unit fi may not be the equal. In addition, in FIG. 4, the order of the combinations of the conditions during the first to fourth days and during the fifth to the eighth days is different, and this intends to make the causes of the order in which the presentation condition Bi makes an appearance less (the order in which the presentation condition Bi makes an appearance may be random or a counter balance method that is more strict than the other methods may be used).

(6) Fixing a presentation order of the content items

In respective event cycle units, the order of presenting the content items is fixed, and the content items are arranged so that they are presented in the same order in any event cycle unit.

If the period when the specific content item is presented is different in each event cycle unit, an error may occur in the schedule condition (a generic term of the schedule condition, the presentation condition and the timing condition).

For example, even if the data is collected with the timing condition such that the event is repeated at one month interval, when the content item that is presented at the last day of the first event cycle unit is presented at the first day of a second event cycle unit miq, it becomes difficult to classify the reactions of this content item on the basis of the timing condition namely, repetition of the event cycle unit for one month.

By fixing the order of presentation of the content items within the event cycle unit, even if the presentations are not even within each unit, its impact can be relatively made small.

(7) Homogenization of each presentation unit

Here, a unit of the content items that are presented within the minimum unit of the event cycle unit is referred to as a presentation unit Pi. In the case of learning English words, the unit of the contents is like a unit of English words to be presented on a given day.

In order to make the qualities of the events to be required by each presentation unit Pi (a sum of the number of times of presentation and a sum of necessary times) equal as much as possible, the combination of presentation conditions Pi and the number of the content items or the combination of the schedule conditions are adjusted.

It is a matter of course that devices for variously adjusting the presentation unit is also effective, for example, making the presentation order within the presentation unit random or presenting the same contents temporally separated as much as possible.

This operation means that the event arising in this presentation unit Pi is not changed largely for each presentation unit Pi. For example, as shown in FIG. 4, in the case of requiring learning of one presentation unit Pi every day, if there are ten English words with the condition for the number of times of learning of sixteen times on a given day and there are ten words with this condition of once at the other day, the learning condition of each content item is far from being equal (naturally, the time required by leaning is different).

In this case, upon estimating the impacts of respective events, it is not preferable that the impacts are estimated as simply segmented only by the timing condition, the presentation condition, and the attribution condition. In order to prevent this, in FIG. 4, as an example, the content items are allocated so that the sums of the number of times of learning (the presentation condition) within the presentation units are approximately equal. In the meantime, a specific method for allocating the number of times of learning or the like will be described later (refer to generation of a schedule table of a specific procedure (a procedure 2)).

It is a matter of course that the content items can be adjusted not only by the presentation condition but also by the number of the content items to be allocated to each presentation condition and the combination of the different schedule conditions.

Even when the schedule condition is identical with the presentation condition, if the load of the reaction of a given presentation unit Pi is different from that of the other presentation unit, the meaning of the reaction within the presentation unit is different, so that it is necessary to exclude its probability as much as possible and the present embodiment provides a measure for this.

(8) Miniaturization of the presentation unit

In order to collect the reaction data with respect to various combinations of the schedule condition, the presentation condition Bi, and the attribution of the content group or the like, it is preferable that the time reacting to one presentation unit is made shorter as much as possible (if it takes too long time, a predetermined presentation condition cannot be assured and the load of the person who reacts to the presentation unit becomes larger).

Therefore, methods to make the event cycle unit longer, to make the presentation conditions Bi per presentation unit Pi less by (5), and to make the number of the content items to be allocated to the presentation condition Bi less are effective.

If one content item is allocated to the presentation conditions Bi (once, eighth, ninth, sixteenth times) of the presentation unit Pi at the first day in FIG. 4, respectively, the total number of times of learning per day is not so many. It is a matter of course that the event cycle unit mi (mip, miq) and the condition unit fi may be generally made longer.

In the meantime, the standard for assessment of the individuals may change day by day. In order to consider this variation by analysis and exclude it, a method is needed, whereby the contents with a plurality of presentation conditions are prepared within the same presentation unit and the difference of the reactions to these contents is defined as a strict conditional difference.

(9) A method to exclude the impact of the ordinary encounter experience and to make a general tendency clear

As a distribution method of the content items to the presentation conditions that are arranged in (4), in addition to a method to randomly allocate the content items for each rater, a counter balance method that has been used in a conventional experimental research may be available. Among the content items to be presented according to the plan, there are many content items that the learner may encounter by accident in his or her daily lives. It is difficult to control these content items, however, in order to grasp a general tendency, it is effective that the probabilities that the learner encounters a specific content item by accident in his or her daily lives are homogenized or randomized to take a central value of the data of plural learners upon analysis.

For example, taking English words as an example, a specific English word may be learned in a class of a senior high school or a private tutoring school. In such a case, if the uniform and identical English words are allocated to all of the raters who assess the records with a predetermined schedule, there is a probability that only the record of this specific English word may arise among the students of this senior high school and the private tutoring school, and this becomes a general tendency of this condition. This makes it impossible to use the data in this case as a general prediction. In order to improve the prediction ability, it is effective that these methods are incorporated.

(10) A measuring method of the impact of presentation and a counting method of the data

1: A gleaning method

As described above, various methods of the schedule condition of the event are described and all of them are considered to correspond to the counting method of the data. In other words, if the data is counted due to the method to be described below by using the above-described method, it is possible to collect the reactions controlling the timing condition, the presentation condition, and the attribution of the content or the like can be collected as the data.

Briefly speaking, the learner cannot react to all of the contents if there are many contents to be presented at once, so that in order to make the contents less, the above-described planning of the schedule intends to distribute the content items within the interval unit. If they are distributed at random, it becomes very difficult to control the impact of a 1 event and this schedule serves to control the impact thereof.

According to counting of the data, the reactions to the distributed contents are gathered up little by little and when they are unified, a central value thereof is acquired finally.

As one of the specific collecting methods of the data, a method like "gleaning" may be observed. As an understandable example, upon measuring the impact due to an experience of the event arising under the Ai timing condition, a schedule requiring assessment may be assumed with respect to the content items to be presented in the last event cycle unit (it is a matter of course that it is the same if the event for evaluation is set as the extension of the event in accordance with a predetermined schedule to measure the impact).

Other than the schedule saved in a memory shown in FIG. 4, if an achievement degree of the learning of the word under the leaning condition that the word is presented once at the first day of the third month of the second event cycle is self-assessed, the reaction may include the impact of the learning event that the word is learned once before two months.

In the same way, if the reaction of the self-assessment is requested from the word of the learning condition of the sixteen times, the impact of the learning condition of the sixteen times before two months may appear. When there is one content item to be allocated to each number of times of learning, if the same assessment event is continued during four days (one condition unit), the reaction data of one content item is collected to the presentation conditions with the number of times of 1 to 16. Further, if continuing it during two months, at a point of time when the second event cycle unit is terminated (at a point of time when the forth month is terminated), to each of the conditions of 1 to 16, the reactions are collected to the content item having the same twelve schedule conditions. By unifying these reactions, it is possible to acquire a central value of the reactions to the content items with the same schedule conditions.

Here, there is another meaning of setting the condition unit. In other words, according to the example shown in FIG. 4, when setting each learning number condition to three months to four months without setting the condition unit, a given repetition condition may be presented concentrated on the last of the fourth month. In this case, the reactions of the learner with respect to this learning number condition cannot be collected till the fourth month is completed. If the learner stops the learning at the third month, it is not possible to compare the impacts of the learning event at the first and second months for each learning number condition.

On the contrary, if the condition unit is set, at a point of time when the fourth day of the third month is completed, at least one data can be acquired for each learning number condition. Thereby, at a point of time when the fourth day of the third month is competed, the learner can confirm the record of the learning of himself or herself again, and it is easy to hold interest of the learner by feed-backing the record.

Furthermore, by also setting the event cycle unit for evaluation before the schedule condition to be reviewed, and comparing the reactions to the first and last evaluating events, it is possible to strictly represent the impact of the experience of the event along a predetermined schedule condition during this time. Particularly, when a large individual difference is estimated in the experience regarding the content, this method makes it possible to review the record while excluding the individual difference.

According to the gleaning method, the schedule setting the event cycle unit is employed and the evaluating event is assumed in this event cycle unit among the above-described schedule structure methods.

(11) A measuring method of the impact of presentation and a counting method of the data 2: a timing compensating method

The above-described data collecting method 1 has a difficulty such that the accurate data collection in accordance with a predetermined timing condition cannot be performed unless a period such as a predetermined event cycle unit (at least a condition unit) is provided.

Generally, a test is conducted during a short period. In this case, the method to set the event cycle unit requires to cope with a difference of a temporal interval between the evaluating events such as the learning event and the test (hereinafter, referred to as a test). For example, in FIG. 3, in the case that the learning is carried out at the first and second months, and its records are measured on a given day on and after three months, it is temporally difficult to test the learner by using all of the contents that are used during one or two months, so that it is needed to abstract some contents and to structure test items.

In such a case, if the test is conducted at the first day at the third month, for example, there is variation of 1 to 24 days in the interval from the learning to the test. Under this condition, structuring the test from the content learned at a fist half of the first month and the content learned at the last of the second month and comparing the records evenly, the impact of the difference in the interval between the learning and the test is included in the record and the strict comparison is difficult. In consideration of the difference in the interval of the learning and the test, two methods for accurate comparison are observed.

According to one method thereof, in the case of extending the learning schedule as shown in FIG. 3 to the sixth month, conducting a test at the third month, the fifth month, and the seventh month, and comparing the records to repetition of the learning, a test is structured in such a manner that the day when the test is conducted is set at the same day in any month and the same number of contents is selected from the content items at the same period in the event cycle unit. For example, when conducting the test at the first day at the third month and the fifth month, the test items are structured by selecting each one content from the content items of the presentation unit at the sixth day, the twelfth day, the eighteenth day, and the twenty-fourth day at the first month. In this case, abstracting the test items at the third and fifth months in the same way, conducting the test, and taking a central value as unifying all of them, it is found that the record may appear, on which the difference of the period from the learning to the test have an impact at the same degree, in the record of the tests at the third and fifth months. This is a method in which the counter balance method conventionally used in a filed of an experimental psychology is applied to the timing condition.

This method is effective for observing the effect of the learning for each month, however, by this method, it is difficult to compare the effects of the presentation condition. For example, upon conducting the test at the first day at the third month, in the schedule that many of the words with the learning condition of the ten times are arranged at the beginning part of the first month, and many of the words with the learning condition of once are arranged at the last part of the first month, even if the word with the learning condition of the ten times and the word with the learning condition of once are tested and the records are compared, it is not possible to evaluate the impacts of the both conditions evenly. As a method for solving such a problem, there is a method to abstract the same number of the condition items for relative comparison from the same condition unit to structure the test and to compare the reaction by the gross. Thereby, it can be regarded that the intervals of the learning and the test are equal in any presentation condition.

To abstract the same number of the test items from the same condition unit has the same effect as the former method (applying the counter balance method to the timing condition) in meaning that 'the differences in the interval from the learning to the test are made even. Further, it is important that it is possible to compare the impacts of the learning with the plural presentation conditions with the cause of the interval of the test as compensating them with each other by using a characteristic of the condition unit such that one of all presentation conditions should be included. In other words, this is also an evaluating method, whereby it is only after the condition unit is set that the analysis becomes easy.

(12) Facing up of the different schedule conditions

For example, as a structural example of the test of (11), when the test is conducted at the third, fifth, and seventh months, and the impact of a given scheduled event is continuously measured, the items used for the test has the impact of the event when it is tested. Accordingly, when observing how the result of learning is changed for each month, it is difficult to detect only the impact of the pure learning. In such a case, there is no problem if a content is separately prepared for performing the test events in the same schedules (it is a matter of course that the different schedules are available) other than the content of performing the learning event in the schedule shown in FIG. 4 (the condition learning one day per two months), the both contents are arranged in parallel with each other, and they are made to experience the events to collect the data separately.

Thus, preparing a plurality of schedules and contents that are experienced by the individuals, it is sufficiently possible to arrange them during the same period in parallel and to perform them. Particularly, in the case of experiencing the same event by using the same kind of contents, the individual reacting can separately collect the reaction data to the plural schedules and analyze them without a consciousness that he or she is requested to react in the different schedules. Further, in this case, it is preferable that the different content items are used and the loads of the individuals within the presentation unit (in FIG. 4, during one day) are made equal in any presentation unit.

Particularly, this method is effective upon specifying a relation of the reaction to the event arising under the plural schedule conditions, and estimating a variation pattern of the reaction against the other schedule condition from among the variation pattern of the reaction against one schedule condition (to be described later).

(13) A multivariate analysis in consideration of a presentation schedule

The schedule is represented as the schedule that is added with the strength (the number of presentation in the learning unit) and the dimension of the combination of the content groups with the timing condition as an axis. In other words, by using the data acquired according to the above-described method, it is possible to incorporate the cause of the timing that is difficult to be controlled conventionally as the cause of the analysis such as an explanation variable in a multiple linear regression analysis.

The encounter condition when a content item with a given attribution is presented according to a predetermined timing under a predetermined presentation condition can be represented as a combination of an axis of the timing condition, its presentation condition and an axis of the content attribution.

It is possible to express the change of the reaction against the above-described encounter condition against the combination of the timing condition, the presentation condition, and the content attribution.

A flow of generating a content list (hereinafter, referred to as a presentation list) in which the contents to be allocated to the presentation unit in practice on the basis of the above-described schedule structure method or the like are rearranged in a predetermined order will be described below. In the meantime, in order to make this explanation understandable, taking the learning of English words as an example, this will be described below.

(A procedure 1) Preparation of a content database

The content database (also referred to as a content file) is used upon making a schedule table and making a presentation list in accordance with the schedule list. The content file stores a content $C_i$ that is received from a server of a corporation via Internet or a storage medium (it is not always a content itself and the number of the content is available if this content is provided with an English word, a Japanese word, and a number).

In English words, this content $C_i$ is added with the attribution data such as (1) a content of a pair of English words and Japanese words (a questionnaire and an answer are not always paired and a unit of sentences or a picture or a moving picture' may be available), (2) an identification number capable of distinguishing a unit of the details, and if the content Ci can be used as the available information, (3) a level of mastery, a degree of difficulty, the relevant information, and a hierarchy of each content (a relation regarding how degree of an educational content such as B should be learned before learning an educational content A) and then, it is stored with linked to the content number (also referred to as an identification number of the details).

In the meantime, as the attribution information of the content, the information other than the information that has been designated by a corporation providing this content should be considered. In other words, a level of importance sensed by the learner against each content and the actual record against this content as a result of learning that is formerly performed are considered as the attribution information. For example, the learning is proceeded with respect to the prepared contents in accordance with a predetermined schedule, and at a point of time when a predetermined learning stage is achieved, the record to each content of the learner is added to each content as the information of a level of difficulty, and then, a flow of performing the learning in accordance with a new schedule again by using this information is assumed.

(A second procedure) Generation of a schedule table

A schedule table for learning the content of the above-described content table is generated on the basis of the above-described schedule structure method.

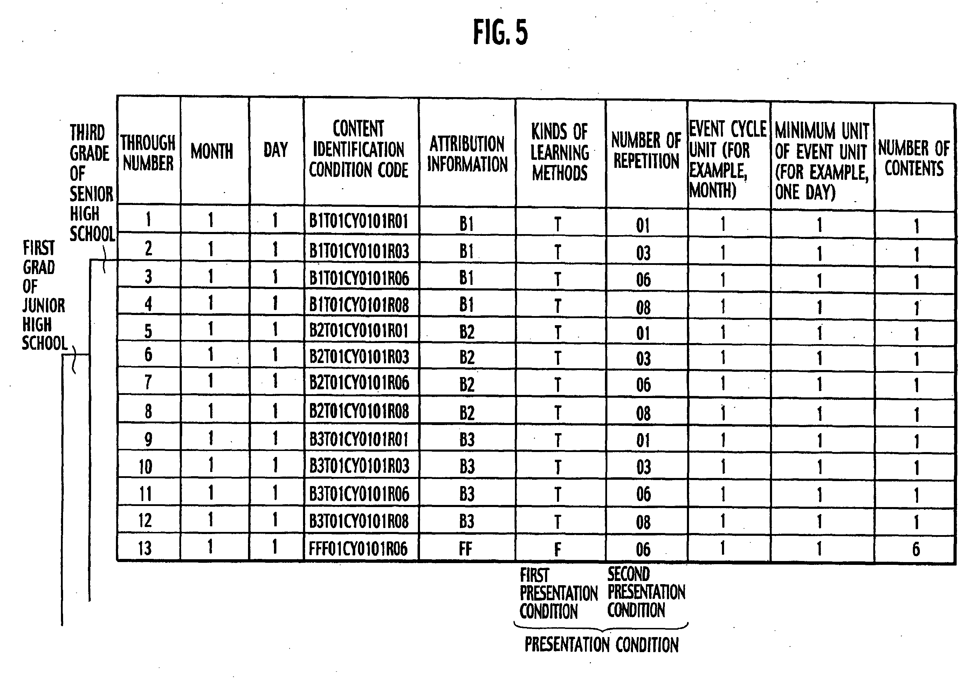

Specifically, as shown in FIG. 5, for example, the schedule table (i.e. a schedule table of a memory) is a table corresponding to a through number (NO) ; a month and a day (MONTH, DAY); a content identification code (COND) to be described later; a condition code (TYPE) of the attribution information (a degree of difficulty and a degree of importance or the like); a condition code (IDR) indicating kinds of learning methods; a condition code (REPEAT) for indicating the number of repetition; a condition code (CYCLE) for indicating a unit of an event cycle unit; a condition code (INCYCLE) indicating the minimum unit of the event cycle unit; and a condition code (N) indicating the number of the contents. The above-described degree of difficulty is, for example, a degree of difficulty that is allocated to a group when the difficulty of given learning is grouped depending on the age and the sexuality or the like of the learners (for example, five stages: a coefficient that is very difficult, a coefficient that is difficult, a coefficient that is average, a coefficient that is little difficult, a coefficient that is simple).

In the meantime, an example of this schedule table is a table including three schedules A1, A2, and A3, wherein a timing condition (A1) with a presentation unit of one day, an interval of one month (structured by 24 days, and so forth), an event cycle of one month, and a condition unit of two days; a timing condition (A2) with a presentation unit of one day, an interval of two months, an event cycle of two months, and a condition unit of four days; and a timing condition (A3) with a presentation unit of one day, an interval of one month, an event cycle of one month, and a condition unit of one day. In the case of making the table only of the timing condition A1, one month is defined as an event cycle unit. In the meantime, A1 assumes a condition for learning one day per month, A2 assumes a condition for learning one day per two months, and A3 assumes an evaluating schedule for an objective test in order to measure the effect of repeating the learning one day per month. The minimum unit (presentation unit) of the event cycle unit assumes one day. These timing conditions are set by a computer.

Regarding the timing conditions A1 and A3, a field of a month (MONTH) shown in FIG. 5 corresponds to the order of the presentation units, so that if MONTH are made to correspond to the order of the event cycle units and DAY are made to correspond to the order of the presentation units, respectively, a condition code (CYCLE) representing a unit of the event cycle unit is not necessary, however, according to this example, since the timing condition of A2 is also considered, a CYCLE filed is provided separately. In addition, in order to distinguish two timing conditions and to abstract the contents, the information showing at which number the content is located if it is converted by a period of the minimum event cycle unit within the event cycle unit under each timing condition is added to the condition code (INCYCLE) showing the minimum unit of the event unit.

This method is not provided with a complementary explanation here. In order for the event cycle unit to perform the schedule of the different two or more timing conditions at the same day, a filed describing a relation between two timing conditions is necessary, and it is required to write the condition in the content, abstract the content, and counter the content by using this information.

According to this example, since the minimum event cycle unit among A1, A2, and A3 is one month of the A1, A2, and A3 conditions, a number representing that which number the condition is located if it is converted by that one month in respective event cycle units is inputted.

The above-described kinds of learning (IDR) are an example of the presentation condition, and for example, there are three kinds thereof (TDF). The one kind of method (T) is a learning method for showing an English word to the learner before learning and making the learner to assess a level of mastery upon performing a paired-associate learning of a Japanese translation of the English word; the second kind of method (D) is a learning method not to make the learner to assess the level of mastery before learning; and the third kind of method (F) is, for example, an item to be used in the case of conducting the test of the mastery level at the last of each month, of which presentation method is different from T and D.

In addition, the number of repetition (REPEAT) is an example of the presentation condition and it shows the number that the content is repeatedly presented within one presentation unit . As the other presentation condition, a time for presentation, how to emphasize the learning items, and the order of presentation deciding the order so as to present the same contents with temporarily separated as much as possible within the presentation list are included in the condition.

These learning methods and the number of repetition may correspond to the presentation condition. In other words, if various presentation conditions are coded, it is possible to predict the content in detail for each condition.

The content identification condition code (COND) with a through number of "1" of the schedule table shown in FIG. 5 unifies the codes of various conditions that are made to correspond to the through number. For example, "B1TO1CY0101R01" of the through number "1" indicates the schedule data providing one content with a condition having a word with the attribution of a type of B1, a learning method T (or a presentation condition 1) , a repetition number of 1 (R01; or a presentation condition 2) , a first event cycle unit (CY01), and a first moth in the event cycle unit (INCYCLE = 01).

Such a schedule table is a table that is made of a schedule condition designed by using the above-described methods, and its basic deign is based on a frame of the above-described scheduling method.

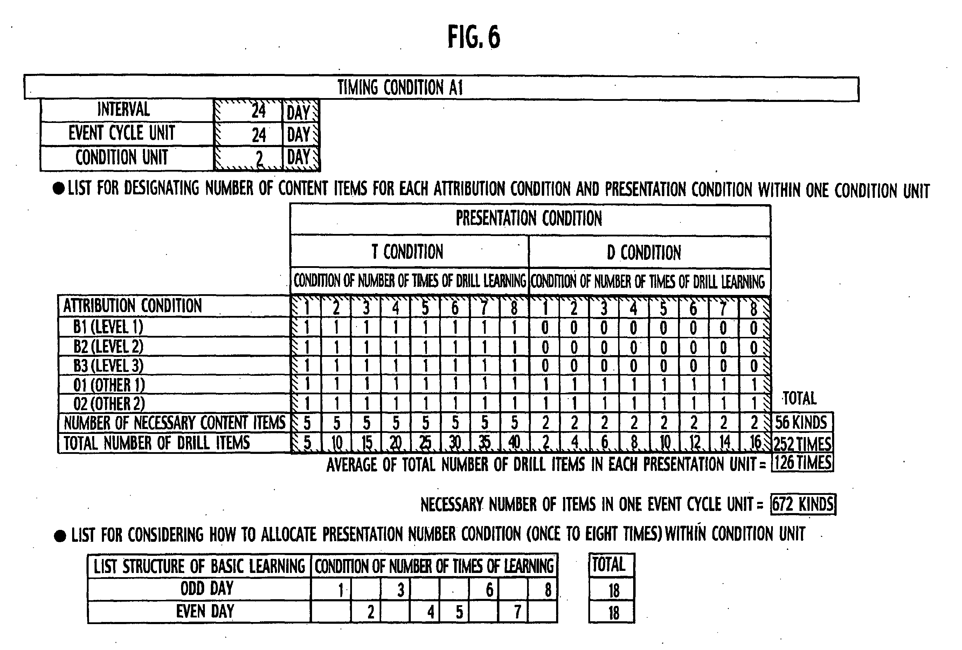

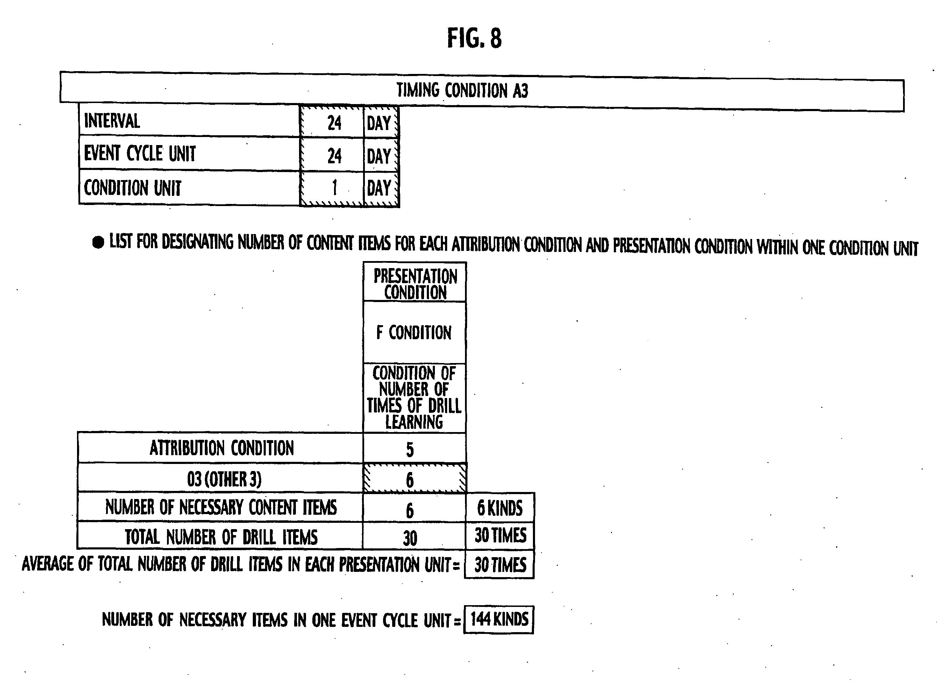

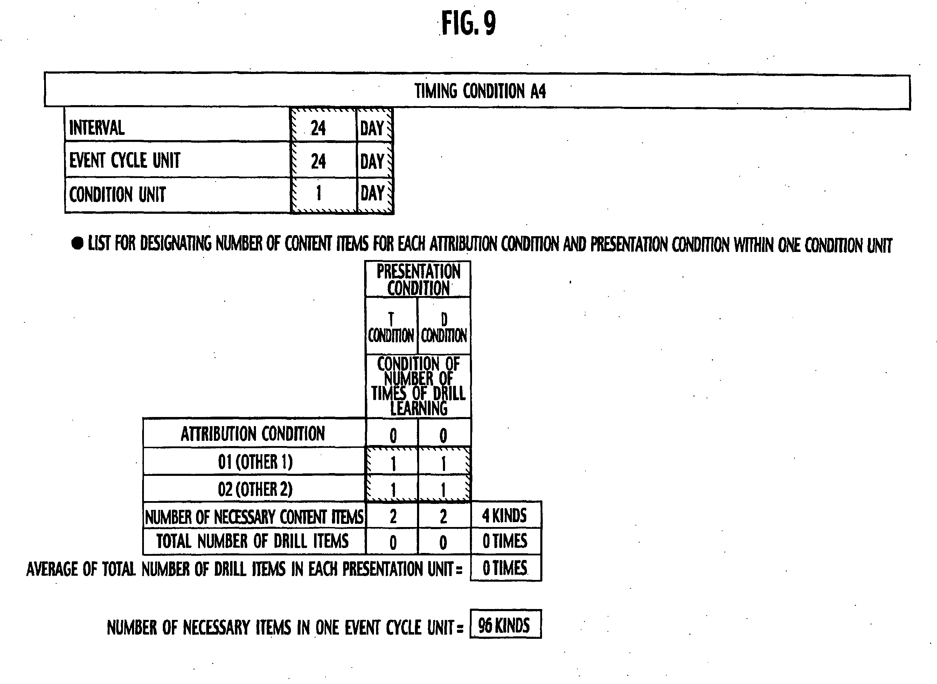

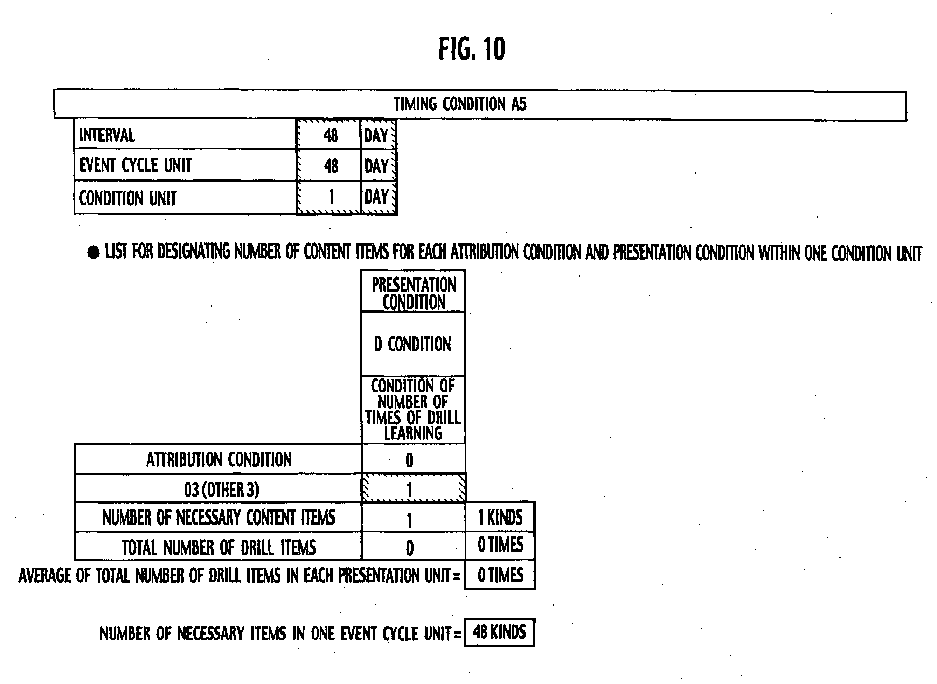

In the meantime, the number of contents to be allocated to a combination of respective conditions of respective schedule conditions is decided in such a manner that a content item number allocation list as shown in FIGS. 6 to 11 is made for each timing condition or for each schedule condition; and the number of the words to be allocated to each condition is adjusted and decided in consideration of the number of the available contents and the necessary time, thereby, allocation of the content items and the conditions to the condition can be simply performed with reference to the number of the available contents and the learning time to be expected. It is a matter of course that a list as shown in FIGS. 6 to 11 may not be made if the learning conditions in each presentation unit are equal and the learning time is ignored. However, at once the estimation accuracy of the record is lowered and various analyses cannot be performed.

FIGS. 6 to 11 are files made by Microsoft Excel, in which a calculating formula has been filled in advance so that the information such as the learning time or the like is outputted in a section of the last learning time to be expected as a brief of the items integrating all conditions" if the number of the items of the condition or the like is inputted in a bold frame encircled by a diagonal line. In this schedule, the five timing conditions of A1 to A5 are set, and among them, A3 and A4 are the conditions with the same timing. This intends to divide these conditions into two for the explanation.

In the case of planning a schedule by facing up many kinds of schedule conditions for the learning with various attributions and different stimulations (for example, a schedule learning once per month and a schedule learning once per two months, and further, when learning the words under the same schedule condition and a plurality of attribution conditions and presentation conditions), the number of learning items and the repetition condition or the like should be adjusted so that the learning time and the fatigue on a daily basis are equal. In other words, a condition such that the learning time is ten minutes at a given day or it takes one hour at other day is not defined as an equal learning condition and it is difficult to predict an effect of the learning accurately. In order to do so, it is necessary to predict in advance how long the learning time is required, how may number of the words is required for the learning item, and how many repetition conditions can be inputted under all schedule conditions. FIGS. 6 to 11 are used for this prediction.

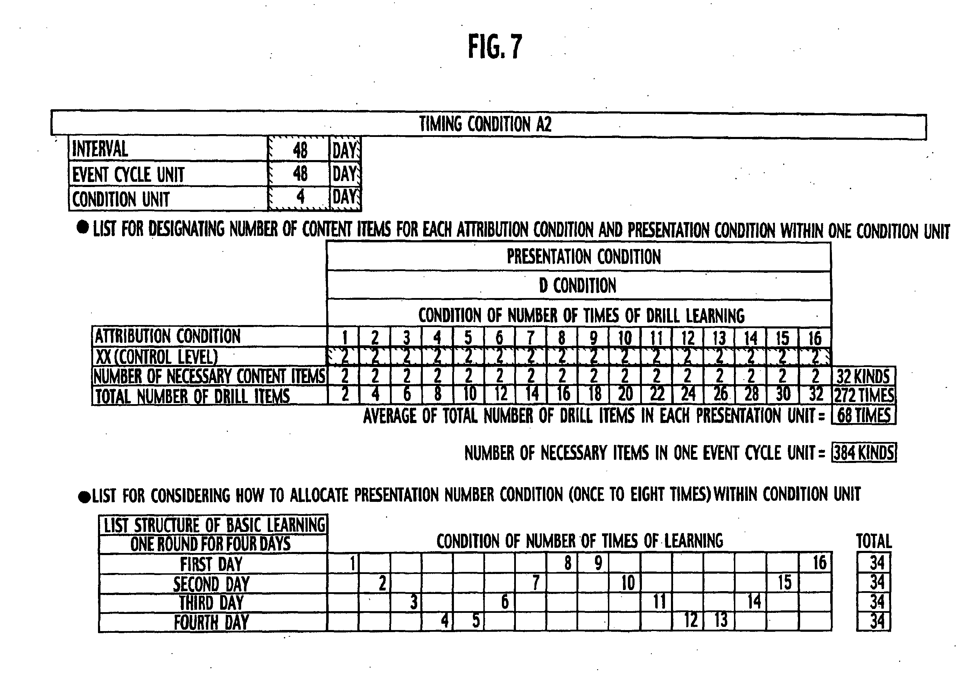

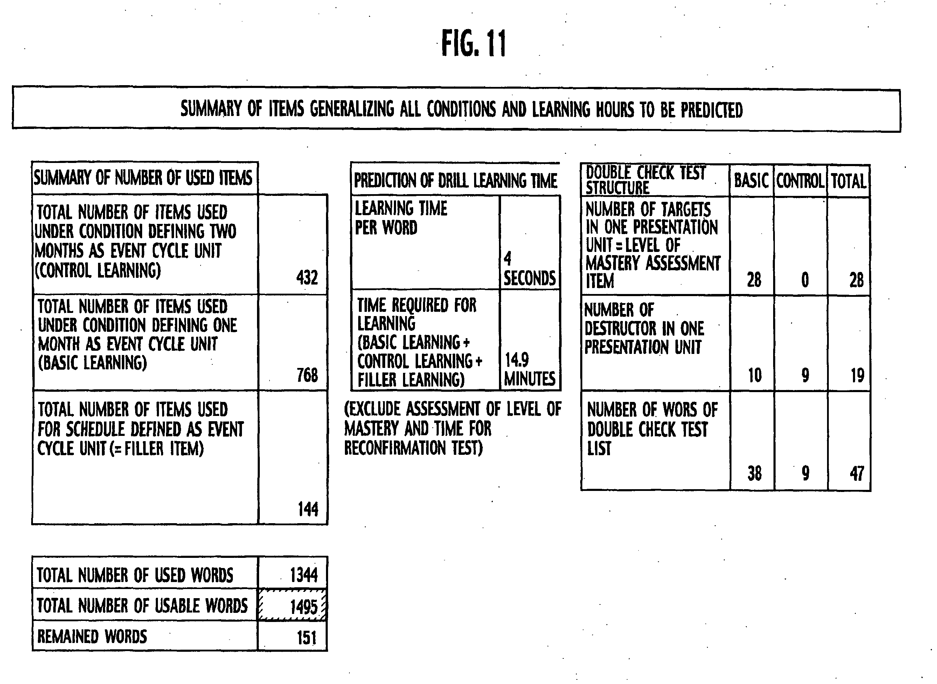

FIGS. 6 to 10 are lists for grasping how many a sum of drill items is in each presentation unit when which attribution and how many words of which presentation condition are prepared; and how many kinds of the total number of the items to be needed in the event cycle unit. For example, in FIG. 6, under a T learning (presentation) condition, when one word with the B1 attribution condition (a level 1) is allocated to the condition of learning once, 1 is entered in a corresponding place. In the same way, inputting the number of words arranged for all conditions in a frame encircled by a diagonal line, the total number of the words to which drill is performed under respective presentation condition is calculated as five or two, and further, an average (the total number 252 is divided by the number of the presentation units within the condition unit) 126 of the total item number in respective presentation unit is indicated at a right lower part of the list (in practice, a function of Microsoft Excel is inputted). Further, a value obtained by multiplying 56 of adding up the necessary item number for each condition by the number of the condition units (12) to be set within a 1 event cycle unit is indicated as a necessary number of items (672 pieces) in a 1 event cycle unit. This can be referred for judging and deciding how many words are to be allocated to each condition. The same list that is made for the A2 to A5 schedule conditions is shown in FIGS. 7 to 10. Further, in FIG. 11, the necessary total learning time and the item number are calculated and are displayed when presenting all corresponding words in one presentation unit by facing up all schedules. From FIG. 11, it is possible to grasp the learning time and the item number that are required when performing the A1 to A5 schedules in parallel.

In the meantime, for each T condition and D condition as the presentation condition in FIG. 6, and for each combination of the repeated learning conditions 1 to 6 or the attribution conditions B1, B2, B3, O1 and 02, the number of the words (1) to be allocated to each condition is inputted in the number of contents; and this may correspond to the schedule table (FIG. 5). In other words, on the basis of the checking list as shown in FIG. 6, grasping the learning condition or the like and confirming that the condition is not burden to the learner, then, for each schedule condition, the number of the items to be allocated to each attribution and presentation condition corresponding thereto is outputted as a list; and this list is the schedule table (FIG. 5).

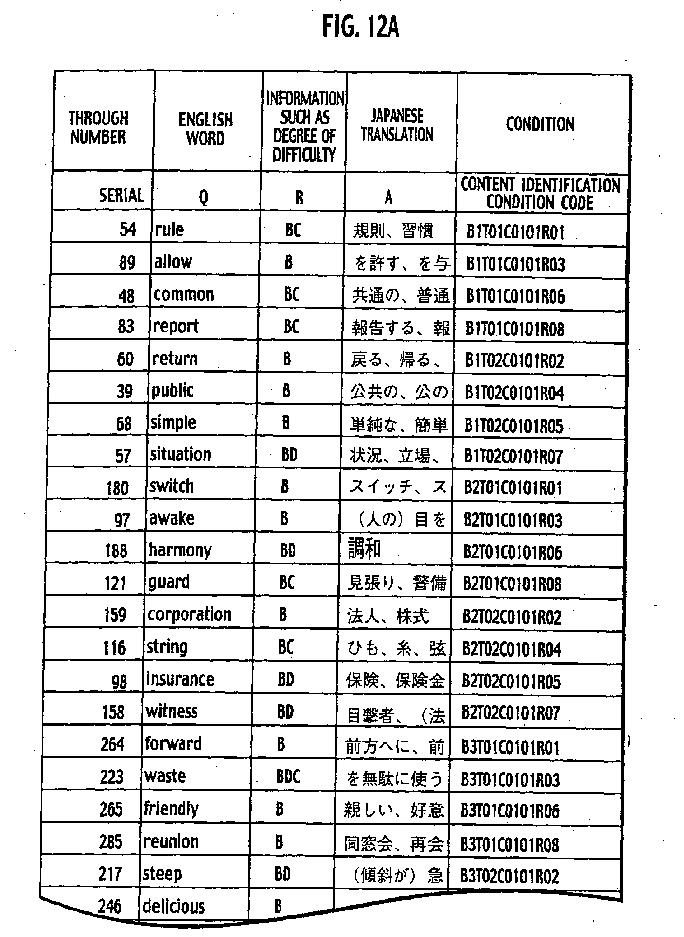

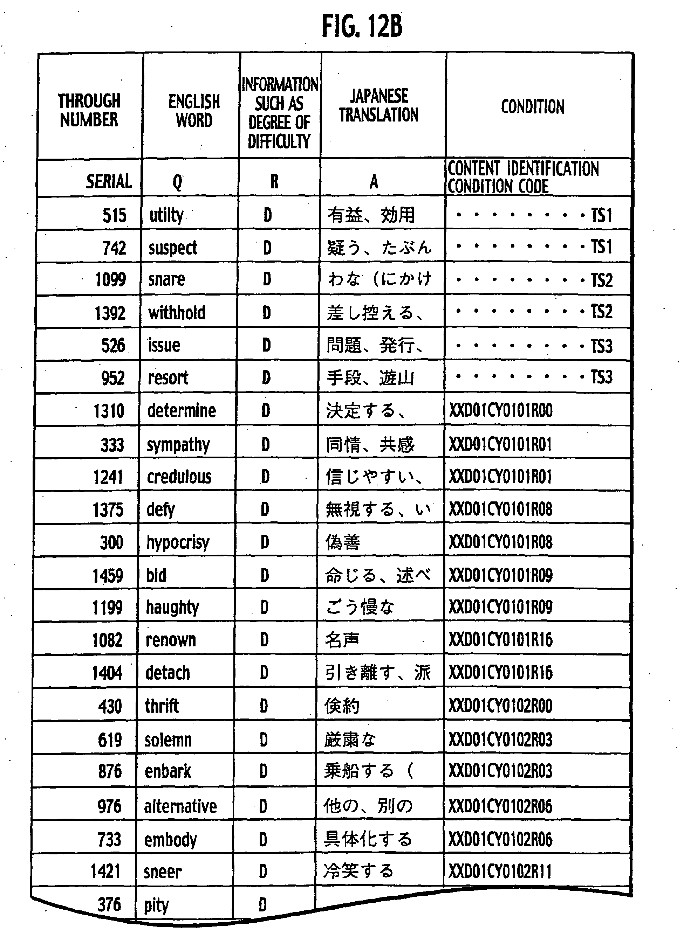

A content database shown in FIG. 12 may comprise a list, in which various conditions to be allocated to the words are associated for each word. In this list, at first, a COND condition is not allocated (the attribution information in FIG. 12 (in the example of the drawing, B and R) is the information such as a degree of difficulty or the like and represents a general level of difficulty of each word, and this information has been decided in advance for each word). The learning condition (COND) that is not included originally, however, on the basis of the schedule table, for each word, this learning condition (COND) is allocated and this example is shown in FIG. 12.

This table is made in such a manner that a schedule corresponding to a 1 event cycle unit (for example, even if there are schedules for 24 months for a schedule condition that the event cycle unit is one month, only one month is taken out among them) is taken out from the schedule table as shown in FIG. 5 for each of all schedule conditions, and it is made clear how many the words of the same learning condition are required among them. The words corresponding to the attribution condition of the condition are selected by the required number on the basis of the original content database shown in FIG. 12, and then, the condition is written into these words. This is a list shown in FIG. 12. For example, a first word "rule" in FIG. 12 has the attribution information of BC, and in this word, a COND condition of B1T01C0101R01 is written in this word. In this COND condition, the first two characters (B1) represent the attribution condition. For example, deciding a rule of "to select the words corresponding to the B1 condition from among the words with the attribution information B", and selecting the words corresponding to this condition from among all content databases, the condition with the B1 attribution condition is allocated to these words. The third and forth words of the COND condition represent the presentation condition. In other words, the necessary number of the words selected from among the words selected on the basis of the B1 attribution condition are allocated to the presentation condition of T1. Further, the last R01 means a repetition condition, and the necessary number of the words, which match the attribution condition B1 and are allocated to the learning condition T1, are further allocated to the repetition condition of 1. According to such a method, the COND conditions are allocated to respective words. In the meantime, the condition such as C0101 in this COND condition represents where the event cycle unit locates and where the present condition locates, and as described above, this condition is limited to the 1 even cycle unit, so that the conditions such as C0201 and C0301 are not included in this COND condition.

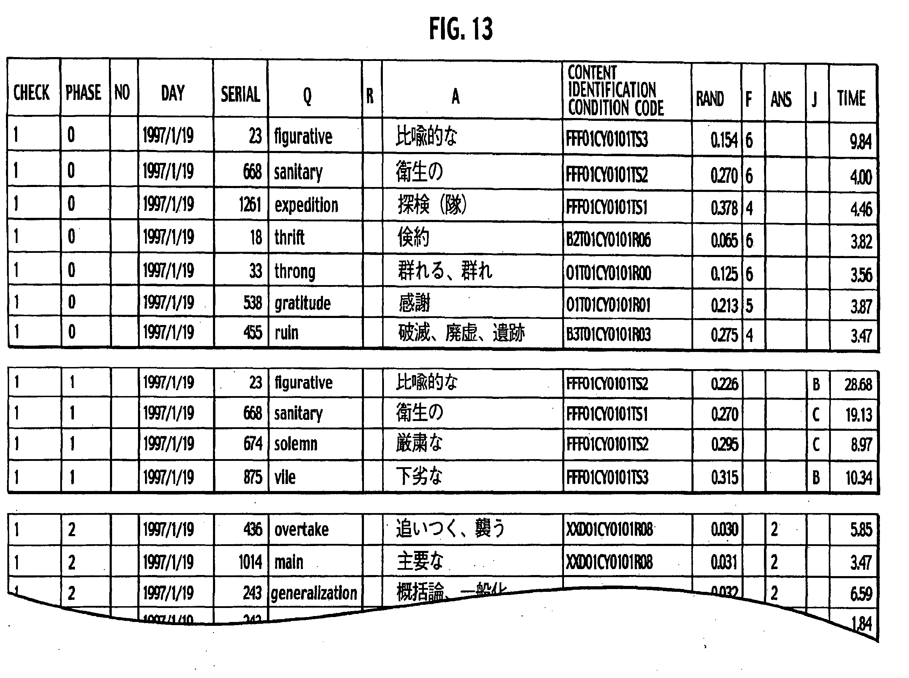

Consequently, when the schedule list and the content database are prepared thus, it is possible to generate a list to be presented by each presentation unit (FIG. 13) as follows.

FIG. 13 shows an example of the presentation list (it doubles as a reaction history list) and in this example, the order has been written in association with the learning condition and the learning has already proceeded till PHASE 2.

At first, a list of a necessary condition for an event on a specific day is taken out from the schedule list (for example, a list of the condition for the learning at the first day). Consequently, the contents in which various conditions at the above of the list are written are abstracted from the content database. Further, the list is arranged in accordance with the presentation condition in the order of presentation and this is a presentation list shown in FIG. 13. Among them, it is also written that under what condition each word is presented with reference to various presentation conditions (the process for presenting the word by a presentation program is distinguished based on this condition). Further, among them, there is a filed of CHECK. This serves to grasp whether or not the event regarding each word is terminated. If the learning of this presentation list is terminated in the middle, this field is used so as to present the words starting from the remained words. In addition, the PHASE is the information to be used upon distinguishing the different process (for example, assessment of a level of mastery, a recognition judgment, and a self assessment) at the side of the presentation program when the different process is required within one presentation unit.

In addition, with respect to each words, fields ANS, F, J, TIME or the like storing the reaction requested from the learner are prepared. The ANS is a field for writing the reaction when the learner is required to have a recognition test; the F is a part recording a value to which the learner reacts upon requiring the assessment of the level of mastery in the word with the learning method of the condition T; and the TIME is a field recording the time required by the learner against each reaction. By using this presentation list, at once the presentation of the contents are controlled sequentially and the reactions are recorded. Particularly, since each word is presented only once in the 1 event cycle unit, the schedule for one day is taken out from the schedule table and the words having the matching attribution condition and the matching presentation condition (the learning condition and the number of repetition or the like) from the content database on the basis of various condition described thereon, the list for one day can be abstracted (if it is assumed that the same word is presented two times and more within the event cycle unit, this process becomes difficult: the definition of the event cycle unit has a meaning).

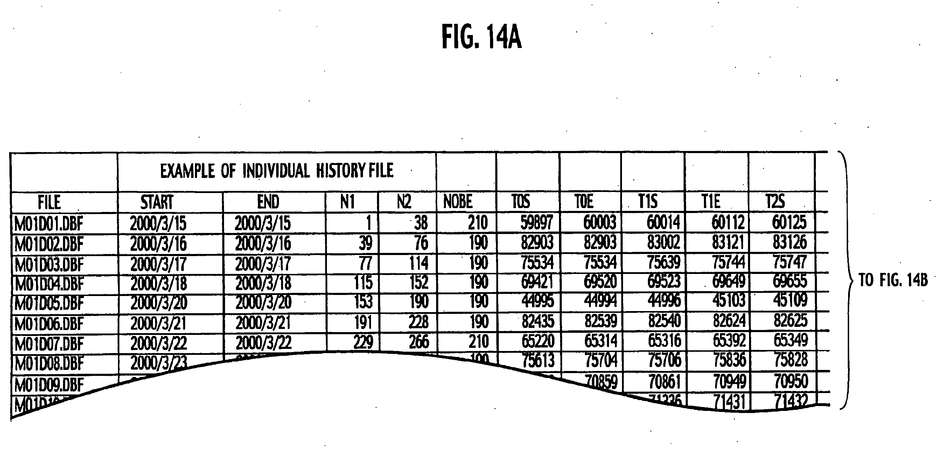

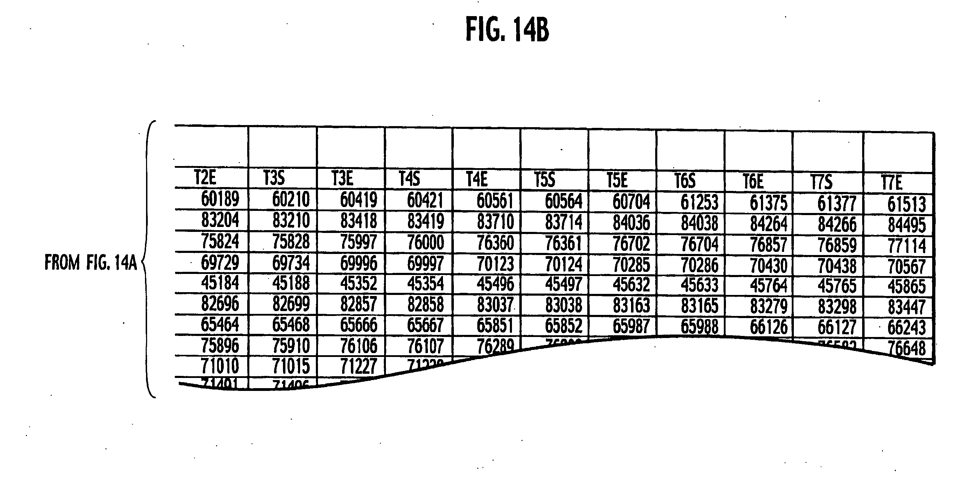

The history files shown in FIG. 14A and FIG. 14B record when each learner performs the event regarding each presentation unit and how many hours it takes. By using this, each learner can grasp in what schedule each learner performs learning in practice. FILE indicates a storage file name of the presentation list; START and END indicate a start date and an end date; and N1, N2, NOBE indicate from which number to which number of the schedule table the learner performs and how many words the learner learns. TIS, and TIE record a time when each PHASE begins and a time it ends that are represented by seconds.

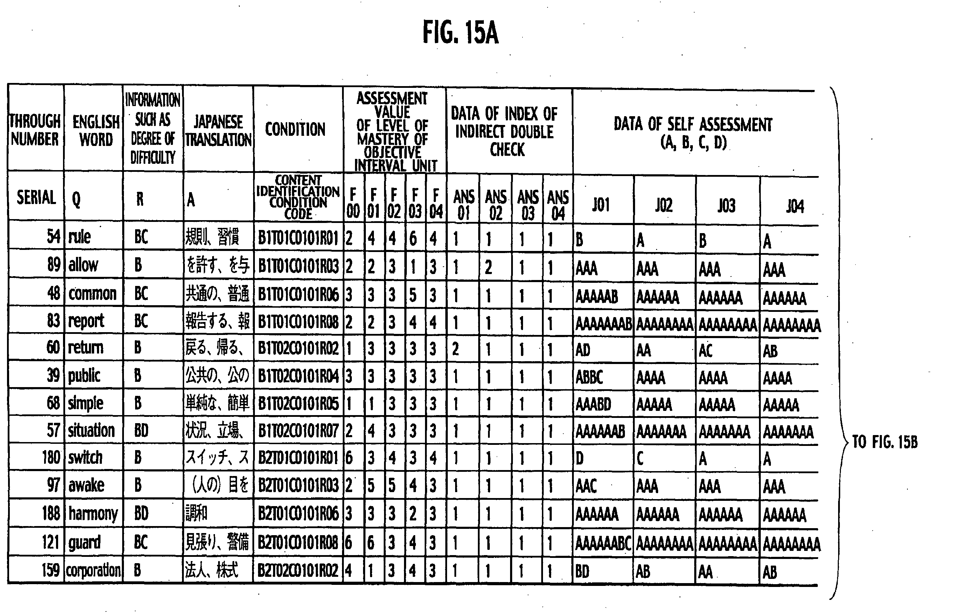

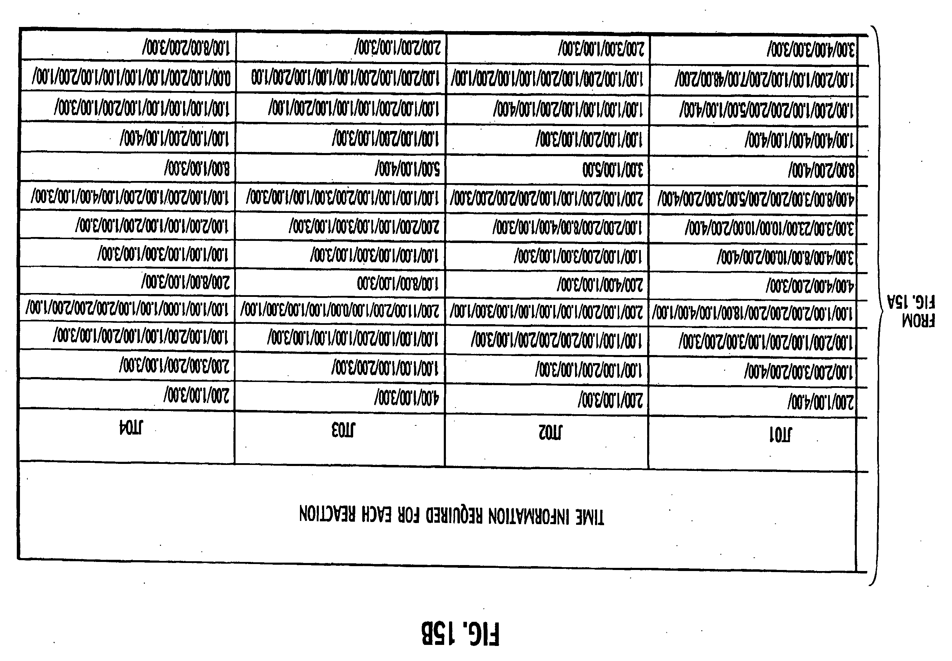

The individual reaction database shown in FIG. 15A and FIG. 15B record the reactions recorded in a presentation list that is made a record field added to a field structure that is the same as a content database as organizing the reactions by a content. The numeric characters such as F00, F01, F02, ..., ANS01, NAS02 mean what number of event cycle unit reacts. If this file is used, the change of the reaction to all learning schedules can be simply calculated.

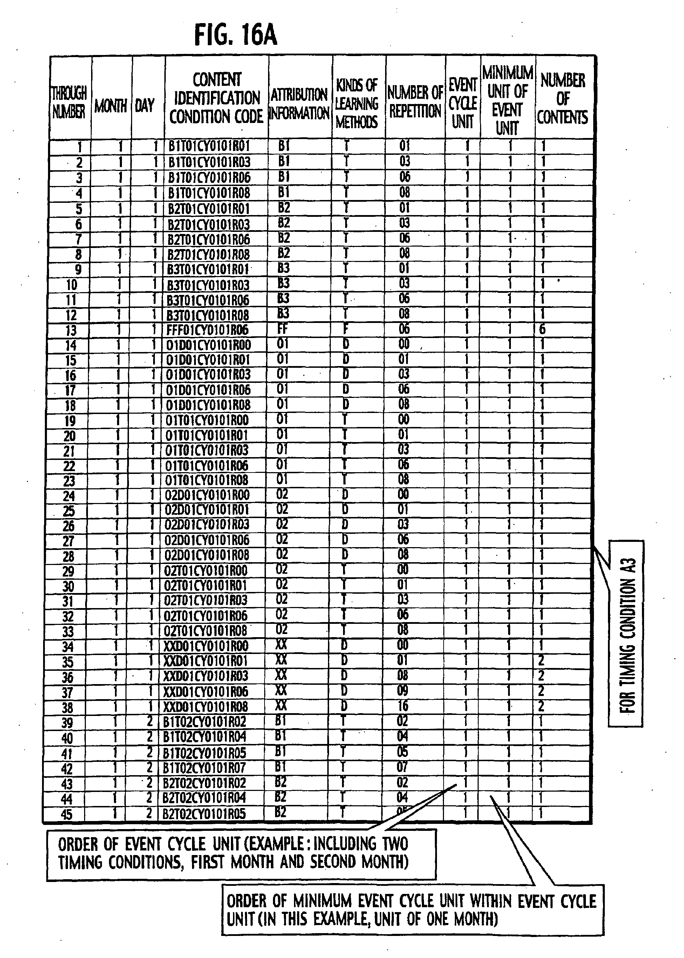

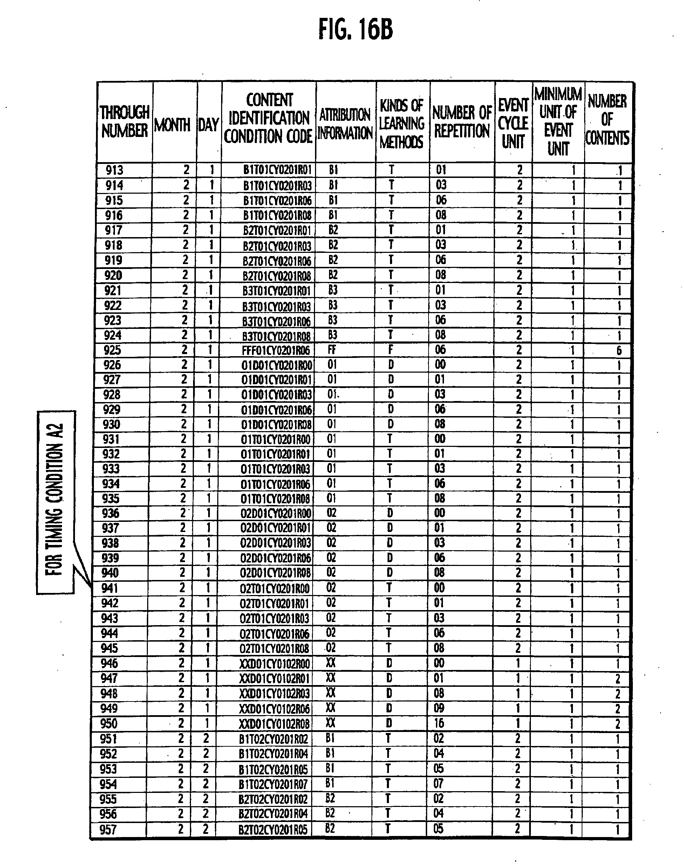

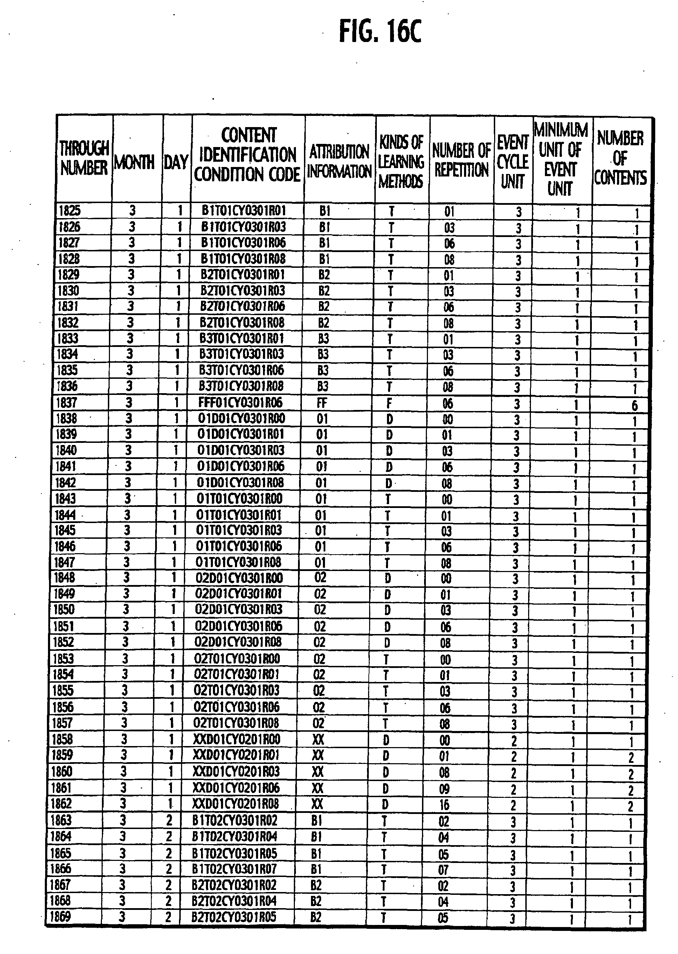

In the last FIG. 16A, FIG. 16B, and FIG. 16C, a portion of one, two, and three months is taken from the schedule table shown in FIG. 5. In these drawings , it is listed in what schedule the learning is carried out for each due date, for example, the first day on the first month. FIG. 16A shows a schedule table example at the first month (including two schedule conditions) . FIG. 16B shows a schedule table example at the second month (including two schedule conditions). FIG. 16C shows a schedule table example at the third month (including two schedule conditions).

Viewing the first month and day of the list, the first day and the second day of the first month are partially indicated. The condition allocated to the first part of a through number of the first day of the first month is the schedule condition A1, and subsequently, the conditions till the timing condition A2 are listed as the condition of the timing condition A3 .... The attribution of the word to be presented for each schedule condition and a presentation method or the like are designated as a condition. On the basis of this condition, the content describing the same COND condition (the presentation and attribution conditions) on the content database from the above is abstracted, and by using it, the presentation list for one day can be made.

As described above, it is possible to present a learning content with a plurality of schedule conditions mixed therein, and also in this example, various analysis can be performed while providing a plurality of schedule conditions to the same learner. In the schedule shown in this list, there are four timing conditions; as the attribution condition of the content, there are the conditions such as B1, B, B3, O1, and 02 or the like; as the learning method, there are the presentation conditions such as T, D, and F or the like, and further, there is the learning number condition to be required by the drill learning. For each combination thereof, progress of the learning is indicated and the relation thereof can be reviewed. The explanation will be continued only focusing on the timing conditions A1, A2, and A3 in the list (because the explanation is complicated if including the conditions A4 and A5).

(A third procedure) Writing a content identification condition code into each content on the basis of a schedule table and a content database

If the schedule table is created, a kind and the number of the content required by each identification condition code are specified. It is preferable to decide what identification conditions the contents are allocated as relating the attribution information of each content to the attribution information of the identification condition code, and further, it is preferable that they are allocated randomly as much as possible. In the meantime, as described in (9), in the case of grasping a general tendency as gathering up the data of the plural individuals by the counter balance method, on the basis of the counter balance method, the identification conditions are allocated to the contents. FIG. 12A shows an example of the content database in which the identification condition code is written in each content. FIG. 12A shows an example of a schedule (one day per month) with an interval of one month, and FIG. 12B shows a combination of an assessment event (timing of once per month) and a schedule with an interval of two months (one day per two months) as an example having a plurality of schedule conditions mixed therein. In the meantime, it is not necessary to store the detail of the content in the content database, and in place of the detail of the content, the through numbers are only recorded, and according to needs, the detail of the content may be specified with reference to the content database.

As described above, assuming that the schedule table defining a preserved schedule condition and the content database in which the identification condition code corresponding to this schedule table is appended are prepared each one, according to the following procedure, a presentation list corresponding to a presentation unit is created.

(4) Designation of a range for abstracting a presentation list

In the case of abstracting the presentation list corresponding to the presentation unit, according to need, the number of the presentation unit, to which the generated presentation list corresponds, is designated. Generally, each presentation list is abstracted in the order of the presentation units, however, it is also possible that, by designating a plurality of presentation units, all of the presentation lists for these unit are abstracted (particularly, in the case of downloading the lists through the network, they can be downloaded in gross). In the case of generating a presentation list in accordance with the same schedule table by the different terminals , by grasping which presentation unit has been already generated or the like on the basis of the schedule table, the synchronization of the histories of learning is also possible.

In other words, a range of presentation units that are made into a presentation list (that are in the condition capable of learning) is recorded as a schedule table or another file, and by using this, it is possible that a presentation list generation history is grasped, a presentation list showing the contents that are not learned appropriately and this list is provided.

(A fifth procedure) Generation of a presentation list corresponding to a presentation unit

As an example, on the basis of the schedule table shown in FIG. 16, a method for abstracting a presentation list corresponding to the presentation unit at the first day of the first month will be described below. At first, if a range to be generated is designated as the first day of the first month, a range of the schedule table corresponding to MONTH and DAY of FIG. 16A will be confined (NO1 to NO38 in FIG. 16A). Consequently, the content in which all or a part of the information of an identification condition code (COND) of this range is written is abstracted from the content database and a presentation list is structured in accordance with the presentation condition. The general explanation of this detail is not possible because it depends on the presentation condition, however, an example of the generated presentation list is shown in FIG. 13.

The field at a left end in the drawing, namely, a CHECK field shows to which field the learning is terminated, and when the learning is stopped in the middle of the presentation list, by using this information, the learning is continued. A PHASE field means a unit of the learning and other exercises (assessment of a level of mastery, a memory test, and an insertion drill or the like). NO is a field inputting the through number therein according to needs, and DAY is a field inputting a due date when the learning is performed. In the meantime, this list doubles as a history list (to be described later) , and the latter fields, namely, F, ANS, J, TIME record the reactions of the learner. This example shows a learning method to require one reaction from the learner, so that each content may have at least one reaction field and a field for recording the reaction time. Under the presentation condition requiring a plurality of reactions from one content, a plurality of reaction fields is needed.

If the identification condition of a specific presentation unit is specified in accordance with this schedule condition shown in FIG. 16, at once a necessary content is abstracted from the content database having that information written therein and the contents are arranged in the order to generate a list in accordance with the operation such as the presentation condition or the like.

(A sixth procedure) To present the contents sequentially in accordance with a presentation condition

This procedure may depend on the presentation condition of the contents and a method for learning or the like. Here, one presentation method is introduced. This method is a method for collecting the data that can be most usable and combines the learning with the test available for various contents.

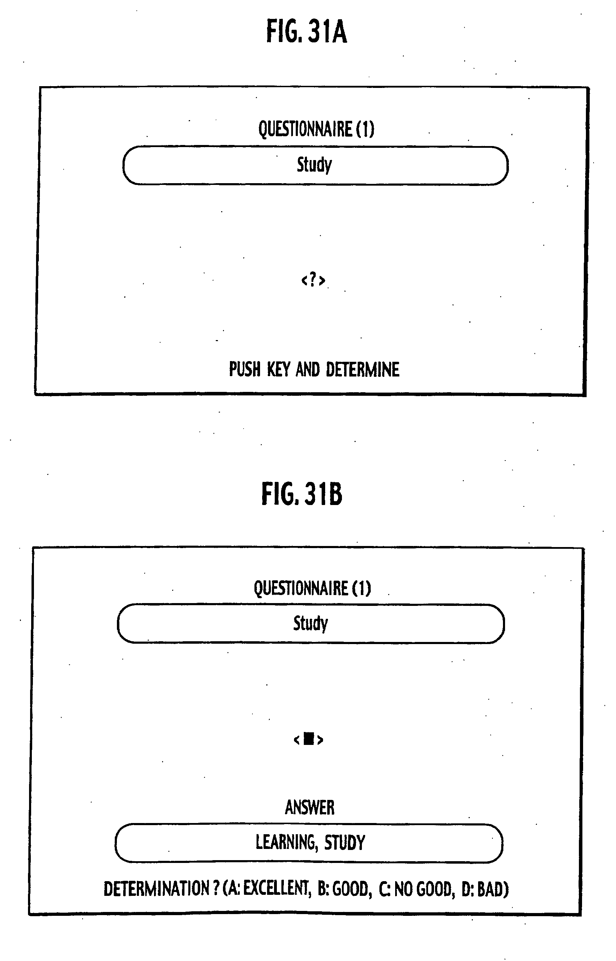

At first, as shown in FIGS. 31A and 31B, the English words are only displayed and if the learner pushes down any key, their' Japanese translations are displayed. The operation until this is display of the contents. According to this method, at a point of time when this display is competed, the learner may self-assess an acquisition level of the detail of the content. According to an example shown in FIG. 31B, the record is assessed by four stages (A: excellent, B: good, C: not good, D: bad).

This method only presents the content and if a solution is not requested, the learning is established, and this method is applicable to various contents. By converting its assessment result into a numeric character (in FIG. 31B, A = 3, B = 2, C = 1, D = 0), this method also can be treated as the record, so that particularly, in the case of the schedule setting the event cycle unit and repeating the learning at a preserved timing, a relation between the number of learning and its record can be directly reviewed, and this makes this method effective (ordinarily, if a test is conducted differently from the learning, this test event has an impact on the record hereinafter, so that it is purely difficult to review a relation between the record and the learning).

(A seventh procedure) Writing the reaction data and the learning history data

At a point of time when the content is presented in accordance with each presentation condition, the reactions to the event are written in the above-described presentation list as shown in FIG. 13 or a reaction history list. In FIG. 13, a value of assessment of a level of mastery is recorded in the F field, the reaction of the memory test is recorded in the ANS, the reaction of FIG. 31 is recorded in the J field, and a time taken for these reactions are recorded in the TIME field (if this time is analyzed, it is possible to easily grasp how long the learner takes time for each reaction and to feedback to the learner). In addition, the learning history may be recorded in an individual history data file as shown in FIG. 14. The fields shown in FIG. 14 record a presentation list file name (FILE) performing the learning; a learning start time (START); an end time (END) ; the number of the words corresponding to a prescribed condition (N1, N2, NOBE); the learning start time and the end time for each phase (T0S, T0E,,,, T7S, T7E) in association with the learning of the presentation list. In the meantime, the fields such as F, ANS, J shown in FIG. 13 are not necessary to be divided and they may record the reactions as one reaction field.

(An eighth procedure) return of a reaction history list and an individual data file

When the event regarding all presentation list is terminated, the reaction history in which the content number and the reaction or the like are written and the individual history data file (corresponding to the presentation unit) are returned to a server for data analysis through the network.

In the meantime, in the individual history data file, the through number of the presentation unit, the start time of the learning, the end time, the due data, and the start/end times of the phase disposed within the presentation unit or the like are written. If the data of the learning is analyzed on the basis of these data, the prediction such that the record is better in the learning in morning or when the learner learns, his or her record becomes better; and estimation of a personality and a learning style or the like of the learner are allowed in principle.

(A ninth procedure) Writing the content into the individual reaction database

The reaction written into the reaction history list is transcribed in the individual reaction database illustrated in FIG. 15 and the content is transcribed in the data field of a key. The individual reaction database (FIG. 15) is an example having one record filed of the data is added to the above-described content database shown in FIG. 12. According to this example, fields (F01, F02, F03, F04) writing the values of the assessment of a level of mastery from the first to fourth months therein; fields (ANS01, ANS02, ANS03, ANS04) writing the reaction of the memory test; fields (J01, J02, J03, J04) writing the value of the self-assessment; and fields (JT01, JT02, JT03, JT04) writing time taken for each reaction and others are illustrated. In the meantime, in this example, one month is used as a base because the most conscious event cycle unit is a condition of one month and a method for grasping the data is simple.

In the content database, the identification condition of each content or the like is written in accordance with a prescribed schedule table and the reaction history list (i.e. the presentation list in this example) is also created in accordance with the prescribed schedule table (memory), so that if the data of the reaction history list is transcribed in the individual reaction database, as shown in FIG. 15, the data will be recorded in association with each condition.

In the meantime, the individual reaction data' file may be created for each presentation list (only one record) and all history files of the individual may be saved at the side of the server. If the individual reaction data file is used, it is possible to grasp of what presentation unit the learner ends the learning and what presentation unit the learner does not complete the learning and to give an instruction to prompt the learning according to need. In this case, when the learning data is erased due to a communication error or the like, if the data at this part is saved at the side of a terminal, it is possible to make the data at the missing part clear after that and to prompt to transmit this data again.

(A tenth procedure) The data analyses using the individual reaction database

The identification condition code of the individual reaction database includes the presentation condition and the attribution information in addition to the schedule condition. Accordingly, using the information included in this code (it is a matter of course that the filed of the presentation condition and the filed of the attribution information may be used as they are) , the central value gathering up the reactions such as the learning record or the like to a prescribed schedule can be acquired for each event cycle unit. There are various analyzing methods, so that the detailed explanation thereof is herein omitted.

<A result of an experiment that is performed by incorporating the scheduling method>

(Explanation of a schedule condition)

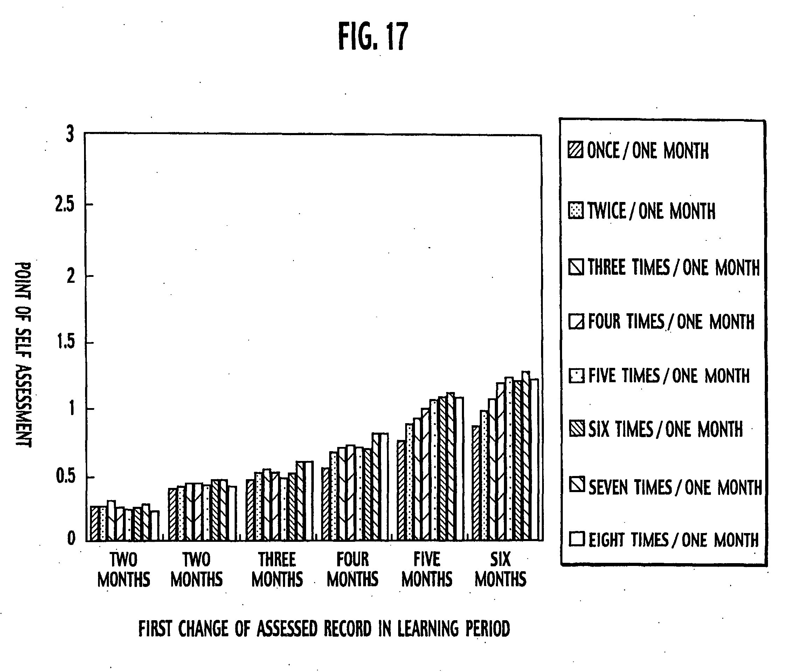

Employing the present schedule structure method and analyzing method, the experimental result that has been already performed will be introduced below. FIG. 17 shows an average manner of accumulation of the learning shown in the self-assessment value in a long-term learning experiment that a senior high student continued to learn the English words in accordance with a prescribed schedule. A horizontal axis means the order (corresponding to a month in this schedule) of interval units (24 days: about one month); each bar graph therein means a presentation condition (the learning condition of one to eighth) ; and a vertical axis means a self-assessment value (a record) corresponding to each of them.

In the meantime, this experiment considers a plurality of interval conditions in fact, however, only one condition will be described here. The schedule condition of this experiment will be represented as follows by the above-described wording. A timing condition: a condition learning once per month with an interval of one month (one month = 24 days)

Assuming that one day is the minimum event period, the days are coded as follows. One day, two days, three days, four days, ..., 24 days, 25 days, 26 days, ... 48 days, 49 days, ... : 1, 0, 0, 0, ... 0, 1, 0 ... 0, 1 ...

Assuming that one month (defined as 24 days) is the minimum event period, the months are coded as follows.

| One month | Two months | Three months | Four months | Five months | Six months |
|---|---|---|---|---|---|
| 1 | 1 | 1 | 1 | 1 | 1 |

- A presentation condition 1 (the number of repetition) : Eight conditions of 1 to 8 times in the number of repetition
- A presentation condition 2 (the learning method): D (a condition for performing the drill learning without performing assessment of a level of mastery of the English words)
- An event cycle unit: 24 days (referred to as one month)
- Under this condition, the interval and the event cycle unit are one month together and they match each other.
- A presentation unit: one day
- A condition unit: two days
- How to allocate the repetition number conditions within the presentation unit
- To odd days, the conditions of once, three times, six times, and eight times are allocated, and to even days, the conditions of twice, four times, five times, and seven times are allocated.
- The number of the words allocated to each repetition number condition within the presentation unit: four
- The total number of the repletion number conditions within the presentation unit is 1 + 3 + 6 + 8 = 18 at the odd days, and it is 2 + 4 + 5 + 7 = 18 at the even days and they are the same number. Four words are allocated to these conditions by four, so that the total number of learned words at one day (the presentation unit) is 18 × 4 = 72, and the approximately equal load is expected with respect to this schedule condition every day (the load is more than 72 pieces in fact because the other schedule condition is paralleled).
- A content group: one kind: In this experiment, the words having the equal difficulty are used.

(Acquired data)

Tracking the record of the words under the condition of learning once per month shown in FIG. 17 for each month, it is found that the record is improved. The bar graph in each month corresponds to the repetition number condition and the assessment of (A: excellent, B: good, C: not good, D: bad) representing the reaction of the self-assessment performed to the words at the first of each month as a score is represented as a point: (A = 3, B = 2, C = 1, D = 0). This assessment value is the self-assessment meaning that to what level the learner learns the meaning of the English word to be presented (this result shows that the self-assessment is a very effective index in order to predict the level of mastery of learning).

This experiment uses the condition such that the assessment of a given word is required once to eight times and then, during one month, this word is not presented and it is presented again at an interval of one month (24 days). In this experiment, if the words are limited those matching this schedule condition, the number of the words (the kinds) allocated to each learning number condition is 48 (4 × 24 days ÷ 2) (the total is 384); these 48 words are repeatedly presented in the number corresponding to each condition; and the value that respective first self-assessment values are averaged corresponds to one bar graph of each month. Assuming that the data shown in FIG. 17 is created according to the conventional method, the word learning is performed on a specific day 48 pieces × 36 = 1728 times in total, and then, the same assessment is performed at one month interval (36 is a total number of the repletion condition of once to eight times = 1 + 2 + 3 + 4 + 5 + 6 + 7 + 8). If five seconds are required for the learning of one word, it is necessary to perform the learning for 144 minuets (144 = 1728 pieces × 5 seconds).

Even the learning of substantially 384 words under the learning condition of merely once to eight times requires continuous learning during two hours from the learner. Therefore, a homogeneity of learning is far from being assured and further, it is also impossible to present an enormous amount of learning contents to the learner at once.

In other words, the total number of times of learning per day should be made less. However, if the learning per day is divided into several days, in this time, it becomes difficult to control the intervals between the learning and the test or the learning condition.

The present invention provides a method for strictly measuring an effect by making the total number of times of learning per day less while controlling the interval condition, making an amount of contents to be distributed at once less, and homogenizing learning of one day (a quality of learning).

In addition, as slightly described in a part of a method for making a presentation unit, a standard of the reaction of the rater such as the self-assessment is changed day by day. However, as a method to strictly predict the effect of the presentation condition by excluding this change and the individual difference, a method to arranging the presentation condition to be relatively compared and reviewed in the same presentation unit and to take the reaction difference against the content that is allocated to this condition may be observed.

For example, in FIG. 17, assuming the first assessment value of the word with each learning number condition of the first month as a base line, if the individual difference is subtracted from the assessment value after the second month, the individual difference can be excluded. Further, regarding the point from which the individual difference is excluded, if a difference in a point between the learning condition of eight times for each month and the learning condition of once is obtained, it is possible to predict the very strict learning effect, from which the impact of change of the determination standard in a day. However, only when the condition of the eight times and the condition of once are arranged in the same presentation unit, the change of the determination standard can be strictly excluded. Accordingly, in order to exclude such change (not limited within the condition unit), it is necessary to arrange the presentation condition capable of being compared and reviewed in the same presentation unit.

The progress of the learning in the case that the enormous amount of learning contents are learned at a preserved schedule cannot be objectively measured conventionally because the measure according to the present invention is not invented. According to the present invention, it is possible to strictly grasp the change of the reaction when the very enormous amount of contents (the objects) are learned under a prescribed interval condition (judge and assessment).

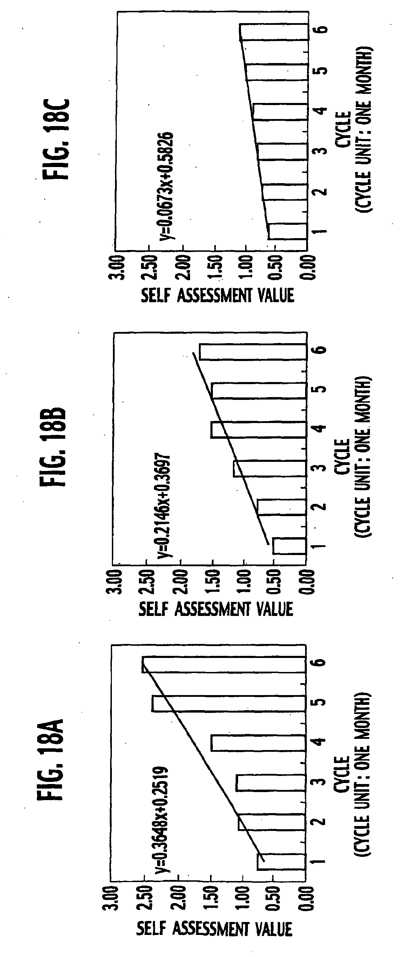

FIG . 17 is average data of twenty-three learners, however, it is also possible to illustrate the data for each individual. According to the method for converting the self assessment of a level of mastery of a learning stage that is suggested by the present invention, it is obvious that a prediction ability can be acquired, whereby the prediction of the level of mastery of each learner can be possible on the basis of the data of the individuals. FIG. 18 shows the individual data of three learners that are acquired from the actual tests and their prediction functions (a simple regression line is drawn) (the data of the experiment that is different from the learning schedule shown in FIG. 17). Various functions are considered as the prediction method, however, it is found that the accurate and objective data for the prediction can be collected by using the present invention. Further, there exists no the data illustrating the detail of the change of the learning effect for each individual as shown in FIG. 17 and FIG. 18 in the world. In addition, it is also possible to record the time required for learning of the word once as the other reaction index and an interesting fact is made clear from its analysis result, however, the detail thereof is herein omitted. FIG. 17 and FIG. 18 illustrate an effectiveness of using the self-assessment of the level of mastery as an index for grasping the level of mastery, however, by connecting the data according to this scheduling method, the very detail learning effects are illustrated in the other index.

Particularly, as this experimental example, by adopting a timing condition once per month, the reaction data is displayed in accordance with this timing, at a point of time when the learning has been continued during a given period, it is also possible to predict the progress of the learning hereinafter. According to this experiment, organizing the reaction data from the first to the third of the fourth months as shown in FIG. 18, even if the effect of the event once per month is different depending on the individual, it is possible to predict how many months are required so as to make the learning mastery level of the individual into a prescribed level. Further, if many individuals continue the learning under the same schedule condition and collect and accumulate the data, it is possible in practice to return the progress of the learning when a given individual performs the learning under this schedule condition as a prediction pattern. Particularly, if the attribution (a sexuality, a level of motivation, and a learning style or the like) of the individual to be predicted is found, it is possible to specify a group of the learners having the same attribution that has already existed as the database and to return its reaction data as an accurate prediction pattern. This becomes a prediction method by a schedule fixing method, thereby, the reaction data are collected by controlling the schedule.

(14) A method for describing a timing condition from an actual execution day

An execution day of the reaction of the rater is sometimes difficult to be strictly defined. For example, in the experiment of the English words, even if the learners are asked to strictly follow the pace of once per month, the learning is not performed at this pace in fact. When there are many contents, the execution day of the assessment depends on a free will of the individual in many cases and there are few case that the learning is performed according to plan. In such a case, it is hard to say that all of the learners perform leaning along a prescribed schedule and the control of the timing condition may be insufficient. However, by taking a method for arranging the contents in the same order by the condition unit and each event cycle unit that are suggested by the present invention, against small change of the timing condition, the data analysis such as comparison of the effects of the presentation conditions is possible in a relative high degree of accuracy.

In addition, even when the schedule cannot be effected by the originally intended timing condition and there is variation in the timing for each individual, the contents presented by the event cycle unit are presented in fact, and by recording the due data when the event arises , on the contrary, it is possible to newly describe the timing condition having the assessment performed in practice.

For example, it is assumed that the following timing condition of once per month is planned in the example of learning English words.

| A plan: a timing of once per month (assuming that the minimum event period is one month) | | | | | |
|---|---|---|---|---|---|
| One month | Two months | Three months | Four months | Five months | Six months |
| 1 | 1 | 1 | 1 | 1 | 1 |

It is assumed that the actual learner learns the words at a pace of once per month to the first, second, third months, however, the learning planned at the fourth month takes two months of the fourth and fifth months. In order to represent the timing of this case, corresponding arising of the event (namely, the timing when 1 is established by the coding) to the last day of each event cycle unit, the timing can be newly written as follows.

| Description of real timing (assuming that the event arises when the last day of the event cycle unit) | | | | | |
|---|---|---|---|---|---|
| One month | Two months | Three months | Four months | Five months | Six months |
| 1 | 1 | 1 | 1 | 1 | 1 |

In the meantime, the day when corresponding arising of the event under the timing condition can be also decided in consideration of a start day, a half day, and an actual arising density of the event other than the last day of the event cycle unit.

Regarding the coding method of the timing condition, in a supplementary explanation, it should be the above-described one month and two months are for describing the timing conditions therein and they are not actual months. Even if arising of the event is made to correspond to the last day of the event cycle unit, the coding expression when the minimum event period is assumed as one day is that 1 is established in a cell of one day as follows (it is common that the latter timing expression is deviated so that all of the events at the first day become 1).

One day, tow days, three days, four days, ..., 24 days, 25 days, 26 days, ..., 48 days, 49 days, ... 1, 0, 0 , 0, ..., 0, 1, 0 ... 0, 1, ...

(15) A method for predicting an effect of an event arising at long intervals during a short period

Taking the experimental result of the English words, from FIG. 18, we can know that it is possible to predict how the effect of learning is realized when continuing the learning (event) at a pace of once per month; and how long period is necessary to complete the learning when continuing the learning on the same schedule. However, as shown in FIGS. 18A, 18B, 18C, this prediction is difficult to introduce unless the learning is continued during three or four months. In the case of continuing the learning of about three months without a vision, a motivation of the learner has not been kept for a long time actually. In the other words, the rater sometimes wants to acquire a vision of presentation of the effect of the event such as the learning or the like is expected for a shorter period. A method to enable such prediction will be described below.

In order to make the explanation understandable, here, the explanation will be given assuming that one month is 24 days and one week is 6 days.

(a) Facing up a schedule condition with a long interval that the event arises at a pace of once per month, and a schedule condition of with short interval that the event arises at a pace of once per week as described in "(12) facing up of the different schedule conditions", the same learner continues the learning under the condition that two kinds of schedule conditions are faced up and its reaction is analyzed, so that the data as shown in FIG. 17 can be acquired for each schedule condition.

(b) If this operation is performed to many learners, two drawings such as FIG. 18 showing the average tendency are acquired. In this case, it is predicted that a level of rising of the record (for example, the self-assessment value of the level of mastery) under the short schedule condition is larger than that of the long schedule condition. Therefore, for example, if a ratio of that inclination is specified, it is possible to represent the inclination of the long schedule from the inclination of rising of the record on the short schedule.

(c) If the individual to predict how to rise the record performs the same schedule with the short schedule and the long schedule faced up for one month, the inclination of rising of the record with respect to the short schedule can be acquired. By using the ratio of that inclination and the inclination specified by (b) ; and the data under the long schedule condition collected for one month at that time as an initial value, it is possible to predict change of the record when the individual continues the learning under the long schedule condition at a point of time when he or she performs the learning for one month.

In the meantime, this prediction method can be employed not only in the schedule fixing method but also in a free accumulation method to be described later in the same way.

<A second embodiment>

A free accumulation method

This method is an action estimation method for aiming to the prediction of the reaction patterns such as change of the reaction patterns when a given person reacts to an event at an arbitrary timing on the basis of the database in which the reaction data of many persons to the events having the similar timing conditions and the learner information are accumulated.

(A usage method of a timing condition)

Conventionally, for each combination of various individual attributions such as a sexuality, an address, and an academic background, the reaction pattern of the other individual corresponding to the combination of the specific attributions has been estimated as the reference data of the reaction patterns of many persons corresponding to the combination, however, there has been no method, whereby, upon predicting the future reaction pattern of the individual who experience a given event, controlling a cause (an experience) of a temporal timing before the experience and using it. The present invention provides a method for utilizing the scheduling method or the like that has been described in the first embodiment and rising the accuracy in prediction of the reaction pattern of the individual in consideration of the case of the timing.

In order to predict the reaction of the individual who experienced the event under a prescribed timing condition, it is necessary to separate the timing condition and the schedule condition that is represented by the presentation condition. For example, since there are various kinds of academic backgrounds, it is possible to classify the individual s for each kind of academic backgrounds and at the same time, the timing condition should be represented by a prescribed frame. This method can be realized by the above-described coding method of the scheduling condition.

For example, (A1) the timing condition of learning once per month and (A2) the timing condition of learning once per four days can be represented for fifteen days with one day as the minimum period as follows.

A schedule of learning once with one day interval
A1 = (101010101010101)
A schedule of learning once with an interval of four days
A2 = (100001000010000)
Ax = (101100001011001)

By using this code, it is possible to classify the timing condition and to perform a calculation of similarity. For example, if the timing condition of a person who learned once under the above-described Ax timing condition and a degree of the similarity of the above-described two timing conditions, simply assuming that inner product is a similarity (before calculating the inner product, the exchange may be performed so as to weigh back and forth of each cell),

$$A1 * Ax = 5$$

$$A2 * Ax = 2$$

are obtained. Then, the most similar timing condition can be specified. If a typical reaction pattern is generated from the reaction data of plural persons who experiment an event under the timing condition more than a prescribed similarity, it is also possible to return the typical reaction pattern as a prediction pattern of change of the future reaction of a person who experienced the event at a random timing condition.

For example, defining the similarity of the timing as a horizontal axis, and defining the number of persons who have this similarity, it is possible to illustrate a distribution of the similarity. Viewing this distribution, if it is judged that this distribution is shaped in one mountain, by calculating the average of all similarities and a SD and limiting the learners to the learners within an average + - 2SD and an average + - 3SD, a typical value of the data about a level of mastery of the learner may be calculated. Although many methods for illustrating a typical value (a change pattern) of the data of the mastery level are to be developed, the most simple method can be considered such that, in the case that change of the mastery level linearly rises, its inclination is calculated for each individual and the average value of the inclinations of all learners included in the above-described range is used as a substitute for the inclination of the prediction value. It is a matter of course the learners can be variously classified according to various multivariate analysis method.

If the distribution could be separated into some mountains , a SD of each mountain is picked up to limit the range. Various methods for judging from how many mountains the distribution is structured may be available and hereafter, these methods are to be developed.

In other words, it is assumed that the reaction data of ten thousand persons who performed the learning of the English words for four months under the schedule with various timing conditions are collected, and each timing condition and the reaction pattern are registered in the database. Assuming that a given learner performed the learning for fifteen days at a timing of the above-described Ax at that point of time, the case of predicting the progress of the learning hereafter is considered.

An ordinary method is that the learners matching to the predicted learner attributions (sexuality and an academic background or the like) are selected from the database, the progress of the learning of the selected learners is returned as a prediction value. In this method, a timing of the learning for four months cannot be considered absolutely and the learning data for fifteen days cannot used. Therefore, by using the database also controlling the timing condition and further limiting the individual similar to the timing condition for fifteen days from the database as described above, it is possible to return the progress of the group as a prediction value. It is likely that a personality and a learning style of the individual are reflected on the timing of that individual's learning. It is conceivable that the timing condition may reflect the individual characteristic more in this meaning. A method for generating a prediction value from the data of the abstracted group can be variously thought, however, as one example, if the individual data as shown in FIG. 18 is registered for each individual, it is possible to return its average value as the prediction value.

In the meantime, the method for using the timing condition is as described above, however, there is a serious problem in order to adopt this method. In this problem, in order to establish this predicting method, the schedule condition should be that the timing conditions are only different and the other conditions such as a presentation condition or the like should be equal; and under such a schedule condition, the reaction data of many persons are collected to be made into the database. For example, it is difficult to generate a prediction pattern of a person adopts a schedule condition learning twice every one day by using the reaction data to be acquired under the schedule condition of learning once every one day.

As a method to solve this problem, two methods, namely, a presentation condition fixing method and a schedule abstracting method are suggested and they will be described below, respectively.

(A presentation condition fixing method)

According to this method, at first, by using the schedule structure method that has been described in the first embodiment, all of the conditions other than the timing condition and the attributions of the contents to be presented are controlled; the data about the timing condition are collected depending on a free will of the rater; the reaction under various timing conditions are collected; and they are coded to be made into the database. Then, according to this method, in order to predict the reaction pattern of the individual who experienced the event having the same conditions except for the timing condition at a free pace, the reaction patterns of a group having a similarity in this individual's timing condition are abstracted from the database; and its typical pattern is returned as a prediction pattern of this individual.

It is very difficult to abstract the valuable information from the reaction data against the event such as the English words having many kinds of contents, various presentation condition, and arising under the timing condition to be infinitely assumed. It is a point of this method that the timing condition is left to a free will of the rater, however, on the contrary, the kinds of the contents to be presented and the kinds of the presentation conditions are fixed to some extent to collect the data. In this case, the kinds of the contents and the presentation condition are not left to the rater, the kinds of the contents and various kinds of presentation conditions are fixed; and a timing condition of the event on the basis of them is only left to a free will of the rater.

According to this method, in the case of leaving the timing condition to the rater, all of them are freely decided. In other words, by using the schedule structure method that has been described in the first embodiment and creating a schedule assuming an exemplary timing condition, an event is performed in accordance with the basis of this schedule. In other words, a specific schedule condition is given to the rater. However, a pace for executing this schedule in practice is left to a free will of the rater. In order to prepare many schedule conditions, it is effective that various schedule conditions are set so as to collect the reaction data.

Even if the experiment is performed by the schedule fixing method according to the first embodiment, the rater does not always perform the event at a timing that is scheduled fundamentally. According to the experimental example of the learning of the English words, the learners are requested to learn every day, however, it is difficult to continue this pace more than a half year and it is common that the timing is deviated. The presentation condition fixing method never requests the learner to learn every day and the arising timings of the event that are collected under the condition that the learner learns all at one time or the learner does not learn for many days following his or her own whim is coded by the above-described method; the reaction data are accumulated in the database corresponding to the coded arising timing; and by using this data, the examinees having the similar timing conditions are unified to derive a typical prediction value.

This method is a method for constructing a database that is suitable for accurate prediction of the event in which the reaction indexes of the rater, the presentation conditions, and the kinds of the contents are wide-ranged.

(A schedule abstracting method)

A schedule abstracting method is a database constructing method for predicting the event, from which a simple judgment about a single or few contents is requested. For example, when mailing a direct mail regarding a given commodity and a given service several times or selling them over the phone, according to this method, the presentation of the explanation once is made into an event; the timing at which this event arises is coded; and the arising timing of this event and the judgment to purchase the commodity and the service or not are related each other. In the case of such an event, since the presentation condition and the contents are limited, it is conceivable that the timing condition equals to the schedule condition.

A description method of the timing is equal to (14) a method for describing a timing condition from an actual execution day again, however, the method of (14) serves to fix the schedule such as an event cycle unit or the like and to collect the data, however, according to this method, even in the case of collecting the data without fixing the schedule, the schedule condition (namely, the timing condition) can be described in the same way as follows.

At first, defining the minimum unit period of the event as the presentation unit, if the event arises within this period, 1 is given, if it does not arise, 0 is given, and the schedule conditions of all events are described. For example, it is assumed that someone performs phone-sales on May 1, 3, 4, 8, and 10. In this case, the dates on which the sales is performed through the phone can be coded when defining that the presentation unit is one day, like the following Aa, and when defining that the presentation unit is two days, like the following Ab.

$$Aa = (1, 0, 1, 1, 0, 0, 0, 1, 0, 1)$$

$$Ab = (1, 1, 0, 1, 1)$$

A method for newly defining the schedule in this way is a schedule abstracting method. Although this method itself is simple, in order to effectively utilize an enormous amount of data that have been already collected, this description is needed at first.

(An event describing method)

When repeating a simple reaction to the limited contents, by using the above-described schedule abstracting method and further, coding the reaction data, it is possible to represent a series of events. For example, it is assumed that a given commodity is sold through the phone in the presentation of the schedule with the minimum period of one day that is represented as the above-described Aa, and the reaction of a customer to this is separated as follows.

(not purchase, consider, purchase)

Making a matrix by combining this reaction with the schedule (Aa) , the event (Ea) of the individual who performs the following reaction at the timing condition Aa can be coded as follows.

A given individual's event
On May 1, "not purchase"
On May 3, "not purchase"
On May 4, "consider"
On May' 8, "not purchase"
On May 10, "purchase"

Not purchase: (1, 0, 1, 0, 0, 0, 0, 1, 0, 0)
Consider: (0, 0, 0, 1, 0, 0, 0, 0, 0, 0)
Purchase: (0, 0, 0, 0, 0, 0, 0, 0, 0, 1)

Note: Please regard the above presentations as one matrix ($3 \times 10$)
It is possible to code the event like this.

(An optimum schedule estimation method)

If various events are coded to be registered as a database according to the above-described event description method, it is also possible to estimate the optimum schedule for drawing a specific reaction.
When making a sales call for a given individual, a schedule pattern with the most events among the event data of the individual who reacts to purchase at last in the all databases may be used as the optimum schedule, or a similar and typical pattern may be newly abstracted from among many events (this method is allowed to be considered in many ways).
Further, if the reactions of the given individual (T) from the first day on which a sales call is made at an arbitrary schedule till a given day are recorded, by coding the events of T for this period by the above-described method, it is possible to specify several individuals having the event codes corresponding to this period that are similar to those of T from among the registered event data. Further, the individuals who react to "purchase" are abstracted from among them and a typical schedule is abstracted as the optimum schedule for deriving the reaction of "purchase". This abstracting method may be the most typical schedule or other method may be considered as the most typical schedule. It is a matter of course that a degree of estimation can be improved if using various individual attributions in this event as the identification information.
Thus, with respect to the event that the simple reaction is expected and the contents are limited, by coding the event, the schedule can be estimated.
As described above, by coding the schedule condition and coding the event, the schedule and the event can be clustered, and with respect the schedule and the event of which data are not collected, the prediction of the reaction or the like can be made. It is predicted that the case of the schedule has a significant meaning as a parameter for explaining the reaction data, however, in the case of incorporating the case of the schedule in the data, the data acquired in this case may include the data representing the change in a time series. By considering the case of the schedule and further, using the time series data, the prediction ability for the reaction should be increased.

(14) Estimation of a hierarchy structure of the contents

It is possible to analyses the reaction to each content group under a prescribed schedule condition. As a result, a relation between the content groups can be estimated.
For example, collecting the data on the basis of a combination of specific schedules with respect to the contents of the English words, English grammar, and interpretation of English long sentences, it is also possible to estimate a learning level of the English words and English grammar that is necessary to sufficiently interpret the English long sentences. In addition, it is possible to find the schedule whereby the record of the English long sentences can easily rise the most.

<A forth embodiment>

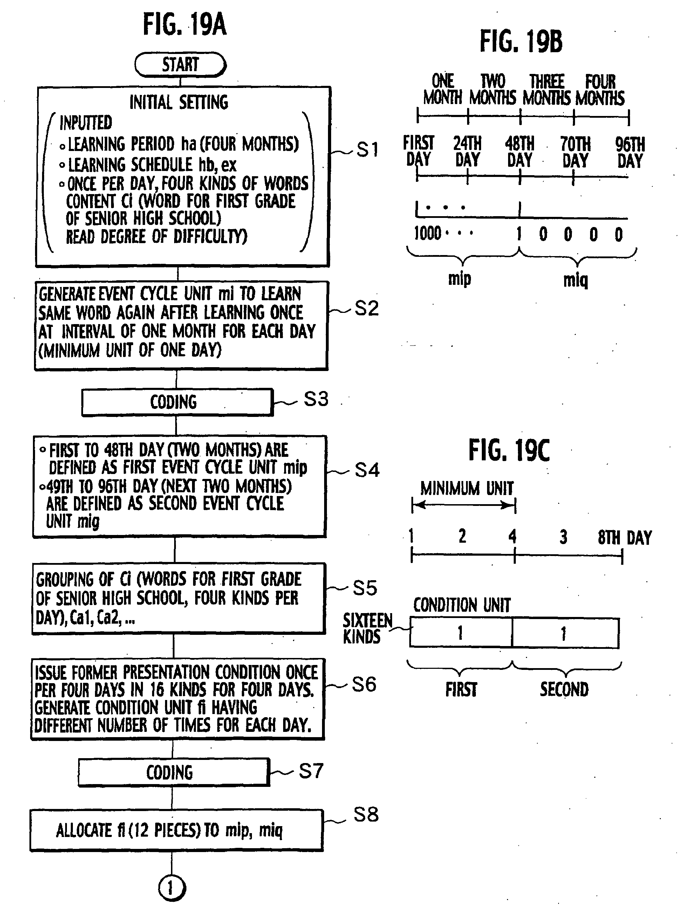

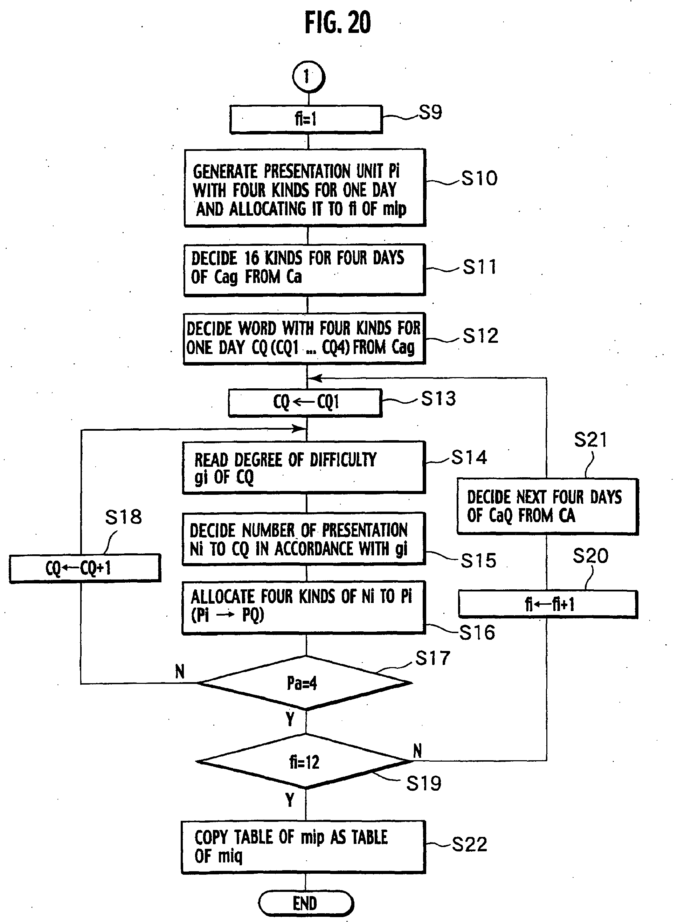

The above-described manufacturing method of a schedule table by means of a computer will be complemented with reference to a flow chart shown in FIG. 19 and FIG. 20.
As shown in FIG. 19A, for example, a learning period ha of four months, a learning schedule hb learning four kinds of the English words once per month, and a content Ci (the English words for a first grade of a senior high school), which are inputted by an operator, are read (S1).
In the next place, in the case that an event cycle unit device decodes these learning prediction conditions, and it is defined that the learning period ha is four months (one month is 24 days) , and the learning schedule hb is once per day, an event cycle unit mi for learning the same word again after learning once at an interval of one month is generated for each day with the minimum unit of one day (S2) to be coded (refer to FIG. 19B) (S3).
In the next place, the first day to the 47th day (two months) of the generated event cycle unit mi are defined as a first event cycle unit mip, and at the same time, the 49th day to the 96th day (the next two months) are defined as a second event cycle unit miq (refer to FIG. 19B) (S4).
Then, in accordance with a degree of difficulty gi, the English words of the first grade of the senior high school are grouped from the content file for every four kinds (S5).

In the next place, the former presentation condition is outputted with respect to the English words of sixteen kinds for four days once per four days, and at the same time, a condition unit fi of the different number of times is generated for each day to be coded (S6, S7).

In the next place, the unit fi is allocated to the first event cycle unit mip and the second event cycle unit miq (refer to FIG. 19C) (S8).

In other words, as shown in FIG. 4, twelve pieces of the condition units fi are allocated to the event cycle units mip, and miq.

In the next place, as shown in FIG. 20, after setting the first number of the condition unit fi, a presentation unit Pi with four kinds of contents as one day is generated to be allocated to the first event cycle unit mip (S10).

In the next place, a content Caq with sixteen kinds for four days is decided from a grouped content Ca (S11).

Then, from the decided content Caq, four kinds of words CQ for one day (CQ1, CQ2, CQ3, CQ4) are decided (S12).

Then, from this words CQ, the CQ1 is abstracted (S13), and a degree of difficulty gi of this CQ (CQ1) is read (S24). In the next place, in accordance with the degree of difficulty of the read word CQ (CQ1), the number of times Ni is decided to the CQ (S15).

Then, four kinds of content number of times, Ni (the presentation condition) is allocated to the presentation unit Pi (S16). This presentation unit allocated with the number of times may be referred to as a presentation unit PQ.

In the next place, it is judged whether or not four presentation units PQ are generated (S17). When it is judged that four presentation units PQ are not generated, updating the CQ, the processing is returned to the step S14 (S14),

In addition, when it is judged that four presentation units PQ are generated in the step S17, it is judged whether or not the condition unit fi is the twelfth one (S18).

When the fi does not reach to the twelfth one in the step S18, updating the number of the condition unit fi, the processing is returned to the step S13.

By performing such processing, it is possible to acquire a schedule table of the event cycle unit mip shown in FIG. 5.

In addition, when it is judged that there are twelve condition units fi in step 19, a table of the event cycle unit mip is defined as a table of the second event cycle unit miq (S22).

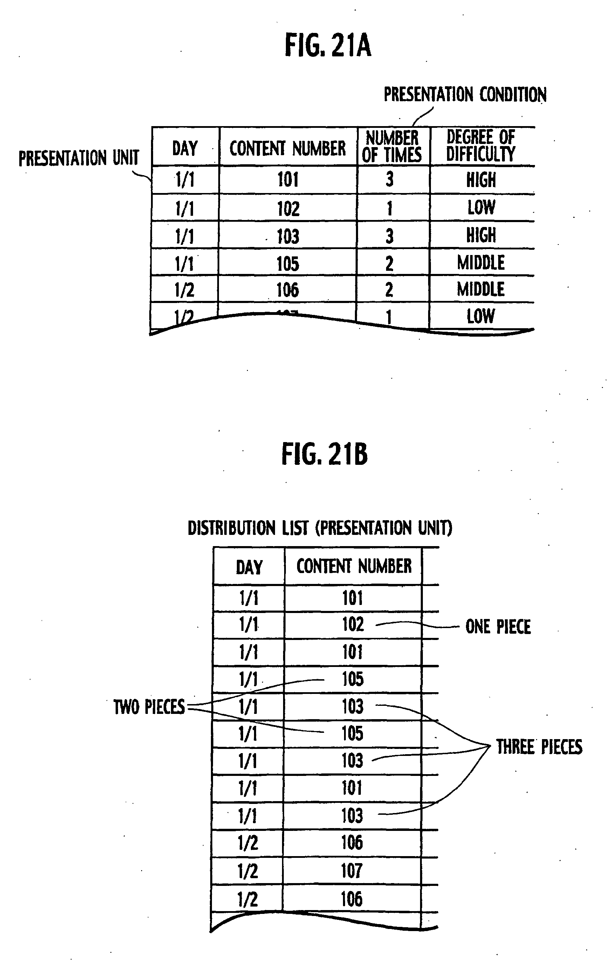

Hereby, as shown in FIG. 21(a), the schedule table can be generated, in which a through number (NO), a month and a day (MONTH/DAY), a content identification condition code to be described later (COND), a condition code (TYPE) of the attribution information (a degree of difficulty, a level of importance or the like), a condition code (IDR) showing the kinds of the learning methods, a condition code (REPEAT) showing the number of time of repetition (not illustrated), a condition code (CYCLE) for showing a unit of an event cycle unit, a condition code (INCYCLE) for showing the minimum unit of an event unit, and a condition code (N) showing the number of the contents are corresponded with each other.

Then, on the basis of this schedule table, as shown in FIG. 21 (b), when assuming that the schedule table transmits four kinds of contents (101 to 105) per day, the presentation condition of 101 is three times, 102 is once, 103 is three times, and 105 is twice, a list such that at the first day, 101, 102, 101, 105, 103, 101, 103 are given to be distributed to a terminal.

In accordance with such a schedule table, the learning is carried out, and collecting its result, the learning effect is analyzed.

<A fifth embodiment>

According to the present embodiment, a system for distributing the learning information (English words) to a learner terminal on the basis of the schedule that is prepared in advance, collecting the results that are assessed by the learner and analyzing them at a site, and distributing transit of the learning effect and an effect pattern of the optimum schedule on the basis of this analysis result will be described.

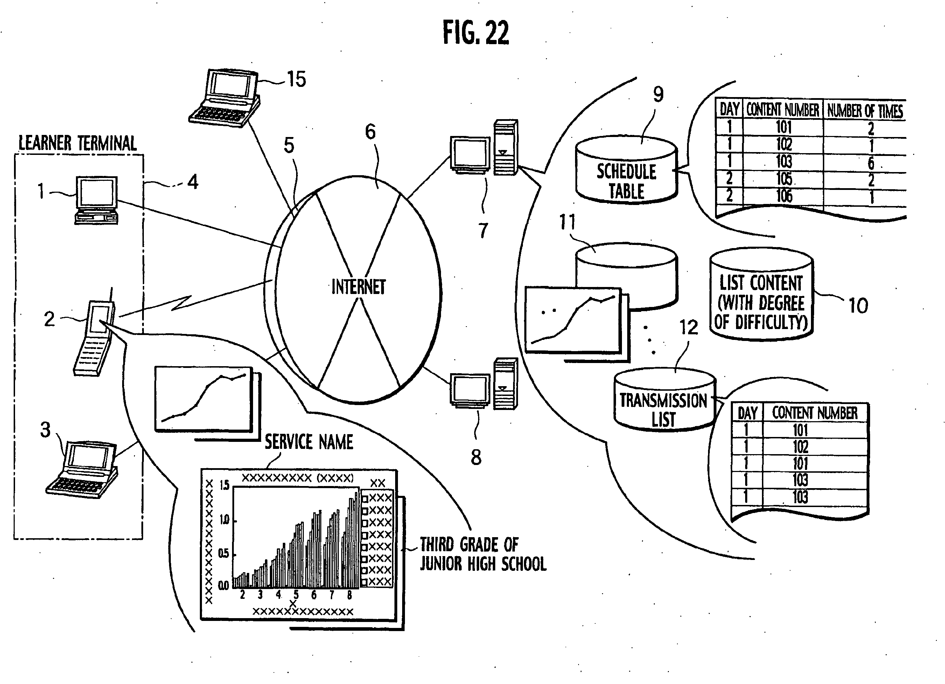

FIG. 22 is a schematic block diagram of a schedule data distribution evaluation system. As shown in FIG. 22, the system is composed of a learner terminal 4 such as a personal computer 1, a cellular phone 2, and a mobile personal computer 3 or the like, a public network 5 (including a cellular phone network and a public line), Internet 6, a learning schedule service site 7, a server 8 of a corporation, and an adviser terminal 15 or the like.

The above-described learning schedule service site 7 is at least provided with a schedule table 9, a content file 10, an individual history file 11, and a transmission list file 12 or the like. After saving a content Ci from the server 8 of the corporation in a content data file 10, a learning content of a transmission list (also referred to as a presentation list) on the basis of the schedule table that is made by a schedule generation method (to be described later) or the presentation order information are distributed to the learner terminal 4 through the corporation server 8 according to need. Then, the learner may operate the learner terminal 4 to input the reaction to this learning content and may return it to the site 7 via the Internet 6.

The learning schedule service site 7 may correspond the returned reaction data with the schedule table, may record the reaction history data of the learner in a specific schedule, may generate an analysis pattern on the basis of this history data, and may feedback the change of this analysis pattern and an appropriate advice to this or the like to the learner and a teacher or the like.

In other words, by using the learner terminal 4 and various communication network (infrastructure), each item including a service main body (site) in various contents (a category of a content to be set) is distributed once or plural times in a specific schedule, and the reactions of the learner to this content are collected.

In addition, the learning schedule service site 7 may collect set values of a plurality of learners and the data such as a month and a day or the like, may accumulate them as the history data, may analyze the data as relating it to a specific schedule or the like, and may feedback change in a condition at a point of time of the individual assessment to each content and the former conditions, prediction of the future change, and the comparison with other users or the like. Further, by analyzing the data to be accumulate, the learning schedule service site 7 may provide the assessment schedule and the advice capable of being used by the learner.

In addition, upon using the service of the present site, the sexuality, the birth year and data, the location, the grade, the desired course, and the desired occupation or the like of the learner are registered; the individual's judgment condition to the assessment items and his or her entire tendency are made clear on the basis of the history data of a plurality of raters in addition to the individual's information and his or her history data; and the information is provided to the learner or a third person (the advisor).

In the meantime, the learning schedule service site 7 and the corporation server 8 are provided with a distribution database system function representing the information as a hyper text system so as to enable to obtain the information on the Internet in a united way. The hyper text has a structure capable of jumping to the related information from a pointer that is embedded in a text; described the information in an HTML; and jumps to a new text file successively by designation of a pointer and a link to obtain the necessary information.

In other words, transferring an HTML source code of the designated home page to a browser of a client (the learner terminal 4) , the information file such as an image or the like in response to the request from a client is transmitted.

In addition, the learner terminal 4 such as the personal computer 1, the cellular phone 2, and the mobile personal computer 3 or the like is provided with a browser function, and in accordance with a URL code of a home page to be designated by the leaner, the learner terminal 4 may request from the site having this URL to transfer the information such as the HTML or the like thereto.

Then, analyzing the received HTML and displaying a displayed portion on a screen, if the link information such as the image or the like is included in this HTML, this image is requested to be transferred.

In other words, the access is carried out on the basis of the inputted (designated) URL; the transference request of its front page (a home page) is transmitted; the transmitted HTML source is analyzed to be displayed on a screen; and further, the transference request such as a CGI script or the like that is included in the HTML is transmitted.

(A structure of a site)

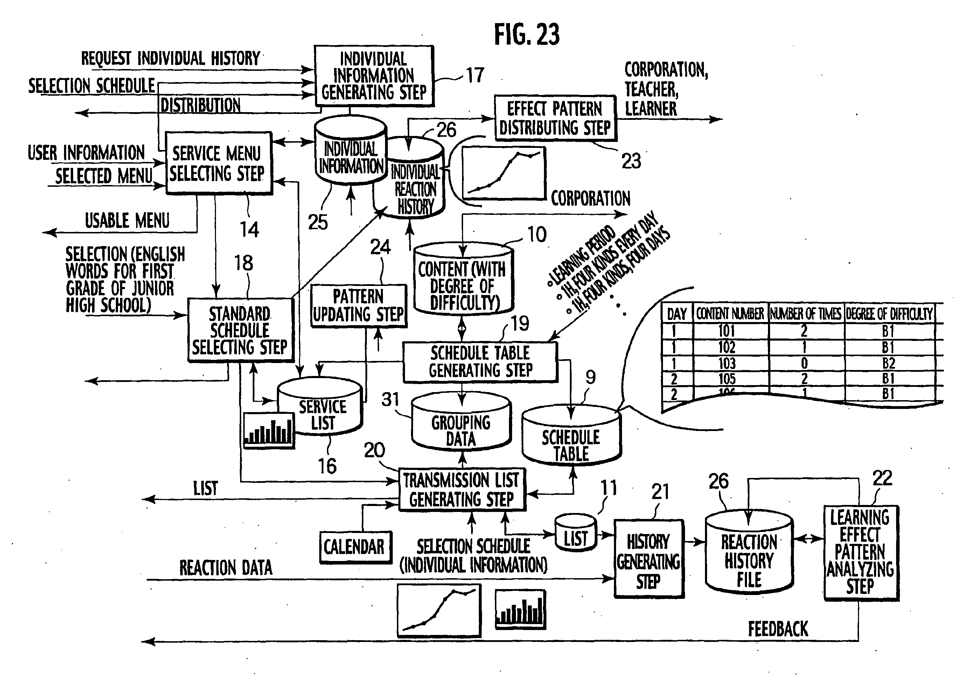

FIG. 23 is a schematic program block diagram of a site. As shown in FIG. 23, the learner schedule site 7 is provided with a service menu selecting step 14, an individual information generating step 17, a standard schedule selecting step 18, a schedule table generating step 19, a transmission list generating step 20, a history generating step 21, a learning effect pattern analyzing step 22, a pattern updating step 24, and an effect pattern distributing step 23 or the like.

In addition, the learner schedule site 7 is provided with a content table 10, a schedule table 9, a service list table 16, an individual information table 25, a individual reaction history table 26, and a transmission list table 11 or the like.

(A structure of each table)

The content table 10 stores therein the content Ci that is transmitted from the corporation server 8 via the Internet.

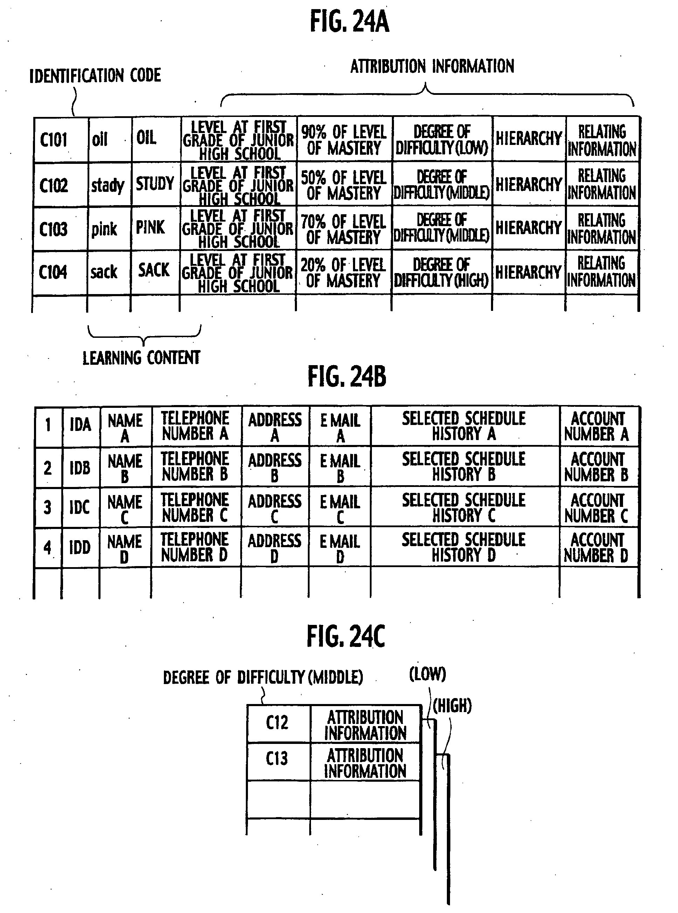

For example, as shown in FIG. 24(A), the content table 10 is structured by a record unit, in which the identification code (Ci), a learning content (a pair of an English word and a Japanese word) , and the attribution information are paired.

The above-described attribution information is composed of a level of the content, a level of mastery (a commonly-used % representing that the learner of this word is known at the learner lank) , a degree of difficulty (a degree of difficulty decided by the level of mastery) , the related information (the information judging how much the learning content of B should be learned before learning an education content of A) , and a hierarchy (a number of the content to be learned before learning the content) or the like.

In addition, the content may be not only the English words by also a learning content capable of being presented by a learner's terminal such as a calculation of an area of a triangle, an interpretation of the English long sentences, a calculation of multiplication and division or the like.

FIG 24(B) shows an individual information table, which is structured by a record unit, in which an identification number ID, a name, a telephone number, an address, an age, an E-mail address, an account number or the like (collectively referred to as the user information) , and the selected schedule are made into one group.

FIG. 24 (C) shows a content grouping table, and for example, this content grouping table is structured by a record unit in which the English words with the same level of difficulty and the attribution information are paired; and it is grouped in accordance with a schedule table to be described later.

In order to make an individual character and a common tendency clear and perform an accurate prediction, in this grouping of the contents, it is necessary to make a quality of the content from which the reaction such as the assessment or the like is requested clear (if the change in the reaction to each commodity and the English words is a matter of concern, the grouping is not necessary)

In order to observe the reaction tendency of the individual to the distributed learning contents, it is preferable that a central value of the reactions of a plurality of contents tat are transmitted to the individual is derived.

Therefore, for each combination of each interval condition Ai (a pattern of intervals of rest of the learning) and each presentation condition Bi (the number of times of the learning; a strength of the learning) , a plurality of similar contents is prepared.

For example, regarding the English words, the contents items are unified based on a predetermined attribute (the attribution information is added) such as the words having the same level of a degree of difficulty, the words necessary for each grade, the words having the same level of a degree of difficulty that are assessed by the learner, and the words having no difference between a degree of difficulty assessed by the learner and that assessed by an expert.

In a questionnaire about a calculation of an area of a triangle, it is perceivable that a questionnaire about a formula: an area = a base x an altitude/2 and a calculation of multiplication and division can be unified, however, in this case, it is preferable that the details of the contents are broken up as much as possible and the data is taken while corresponding respective contents to respective presentation conditions and respective timing conditions of the schedule.

In addition, it is conceivable that the reaction of a specific schedule are different depending on the content and an effect of the schedule to a set of the contents having a plurality of attributions is likely different if the set of the contents is changed. In other words, by separating the cause of the content from the cause of the schedule as much as possible, it is necessary to improve a degree of accuracy in analysis.

In the meantime, upon grouping the contents, by homogenizing the contents and grouping them finely as much as possible, it is possible to predict a relation between different kinds of the contents from among the schedule and the reactions to respective content groups by means of the acquired data.

For example, taking the above-described calculation of the area of the triangle, if the contents are separated into three content groups, namely, a calculation of the area of the triangle; a questionnaire about a formula: an area = a base x an altitude/2 and a calculation of multiplication and division; and the records of respective content groups are collected according to various schedules, it should be possible to predict the optimum schedule for presenting the calculation of the area of the triangle to children with corresponding to the learning schedules of the formula, and the calculation of multiplication and division.

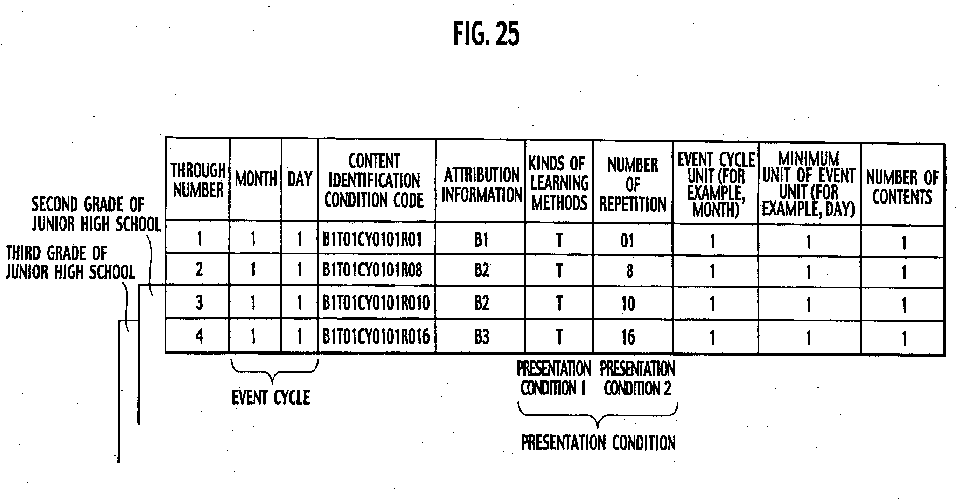

FIG. 25 is an explanatory view for explaining a schedule table. The schedule table of FIG. 25 is structured by a record having a set of a through number (NO), a month and a day (MONTH/DAY), a content identification condition code to be described later (COND), a condition code (TYPE) of the attribution information (a degree of difficulty, a level of importance or the like), a condition code (IDR) showing the kinds of the learning methods, a condition code (REPEAT) showing the number of time of repetition (not illustrated) , a condition code (CYCLE) for showing a unit of an event cycle unit, a condition code (INCYCLE) for showing the minimum unit of an event unit, and a condition code (N) showing the number of the contents.

For example, there are three kinds (TDR) of the above-described kinds of the learning methods (IDR). The one kind of method (T) is a learning method for showing an English word to be learned to the learner just before learning and making the learner to assess a level of mastery; the second kind of method (D) is a learning method to make the learner to assess the level of mastery without showing the word to the learner just before the learning; and the third kind of method (F) is, for example, an item to be used in the case of conducting the test of the mastery level at the last of January. In addition, various kinds of learning methods can be assumed depending of the difference in the learning time and in the reactions to be requested.

In addition, "MONTH" and "DAY" indicate the number representing a repetition period of an event to be learned (an event cycle unit).

In addition, the repetition number (REPEAT) may indicate the time and the strength of learning.

The above-described learning method and the repetition number correspond to the presentation condition. In other words, if various presentation conditions are coded, it is possible to predict each condition in detail.

Accordingly, the content identification condition code (COND) with a through number of "1" of the schedule table shown in FIG. 25 unifies the codes of various conditions that are made to correspond to the through number. For example, "B1TO1CY0101R01" of the through number "1" indicates the schedule data providing one content with a condition having a word with the attribution of a type of B1, a learning method T (or a presentation condition 1), a repetition number of 1 (R01; or a presentation condition 2) , an event cycle unit for one month (CY01), and the minimum unit of a day (01).

Such a schedule table has been created by a schedule table generating part (a computer) to be described later in advance.

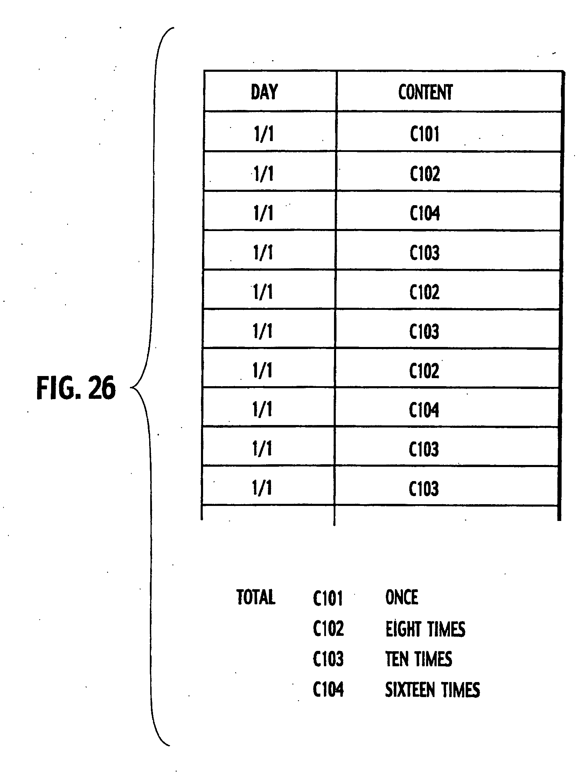

FIG. 26 is a schematic explanatory view of a learning result. This presentation list is created on the basis of the schedule table shown in FIG. 25.

This presentation list is structured by a record unit with a set of a presentation order (a month and a day) and content information (a number, an English word, a Japanese word).

For example, taking the schedule numbers 1, 2, 3, and 4 shown in FIG. 25 as an example, assuming that the content of the English word corresponding to the attribution information of B1 (a degree of difficulty: low) as "C101"; the content of the English word corresponding to the attribution information of B2 (a degree of difficulty: middle) as "C102", "C103"; and the content of the English word corresponding to the attribution information of B3 (a degree of difficulty: high) as "C104"; on January 1, "C101", "C102", "C103", and "C104" are written at once, at eight times, at ten times, and at sixteen times, respectively in the random order of the order according to a prescribed rule. In the meantime, the prescribed rule is a rule so as to prevent the same contents from being continuously presented as mush as possible, and this rule also becomes one learning method (the presentation condition).

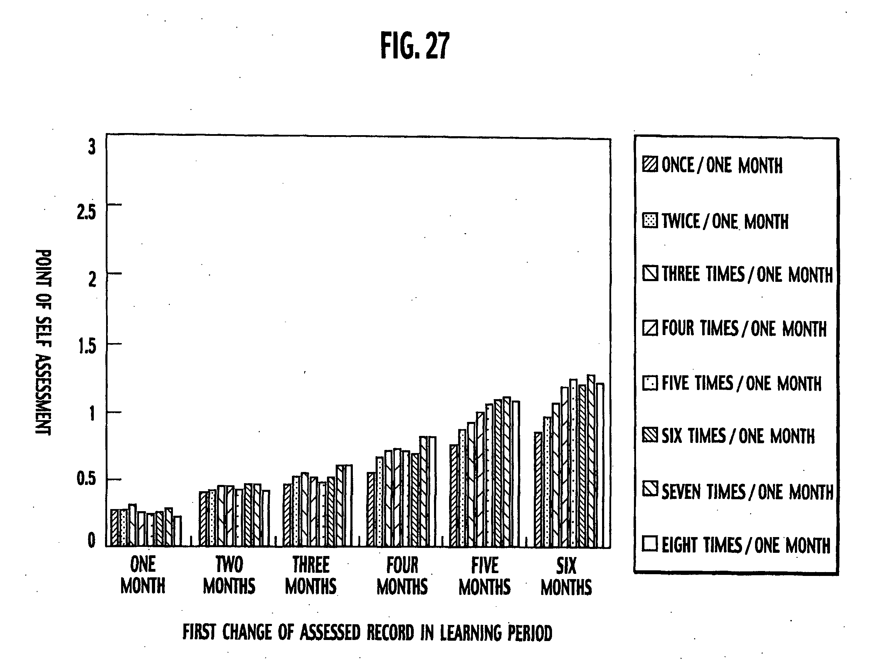

In addition, the service list table 16 stores a learning effect graph as shown in FIG. 27. This learning effect graph indicates an average effect when the learner learns in accordance with the schedule table. Each bar graph corresponds to a change rate of the effect for each learning period when learning once per day, twice per day, three times per day, five times per day, six times per day, ....

A grouping data table 31 denotes the contents that are unified by a prescribed attribution such as the above-described English words with the same level of difficulty and the English words necessary for each grade.

Specifically, reading an identification condition code of the contents corresponding to the through numbers shown in FIG. 25, retrieving the content number (the English word) corresponding to the attribution information Bi (for example, the degree of difficulty) , and allocating this content number to a month and a day in accordance with the above-described content identification condition code (the presentation condition, the event cycle, the number or the like) , the lost shown in FIG. 26 is generated.

The service menu selecting step 14 may read the user information (an ID of a user, the registration information, the service selection information or the like) that is transmitted via the Internet and the cell phone network, when the user information indicates a service offer request, the authentification using the ID of this user is carried out so as to abstract an available service menu for the user and to make the learner terminal which serves as the user to transmit the service menu.

For example, if the user is a senior high student, English, mathematics, and a physics or the like are made into a service menu, and if the user is a elementary school pupil, mathematics and Japanese or the like are made into a service menu. These menus have been stored in a service list table 16 in advance.

The individual information generating step 17 may store the analysis result that is analyzed by a learning effect pattern analyzing step 21 to be described later and the individual's reaction history that is generated by the history generating step in the history reaction history table 26 while corresponding them with each other, and when the individual history request is outputted, the analysis result and the reaction history corresponding to the ID of this individual is offered to the user.

When the available menu offered to the user is selected, the standard schedule selecting step 18 makes the user terminal to transmit a standard learning effect pattern corresponding to the menu that is selected from the service list 11.

This standard learning effect pattern is composed of a service name shown in FIG. 27, a bar graph showing a learning effect of this service name, and the selected learning number of time, for example, when the menu of learning the English words for a first grade of a senior high school is selected. In addition, with respect to the standard learning effect pattern, for example, the English words for a first grade of a junior high school are segmented depending on a degree of difficult and they are stored as a set of the standard learning patterns for the first grade of the junior high school.

The schedule table generating step 19 has created a schedule table in accordance with a learning period, a content name, and the attribution information, which are inputted by the operator, in advance and stores it in the schedule table 9. The generation of this schedule table will be described in detail later.

The transmission list generating step 20 sets aside the schedule table corresponding to the identification code of the standard learning schedule that is selected by the standard schedule selecting step 18.

Then, the transmission list generating step 20 may read all of the content identification condition codes of a month and a day corresponding to the learning period that is selected from among the set-aside schedule table.

Then, generating a presentation list to be described later corresponding the contents to a year, a month, and a day, and the presentation condition, and storing it in a transmission list table, the transmission list generating step 20 may transmit it to the learner terminal.

The history generating step 21 may collect the reaction data from the learner terminal (the content identification condition code, the learner ID, and the reaction) or the like, may store it in a reaction history file 27 as corresponding it to the content identification condition code, and further, may store it in the individual reaction history file 26.

The learning effect pattern analyzing step 22 may read the reaction history of the reaction history file 27, may feedback the most typical history selected from among the reaction history of the pattern that is similar to this content identification condition code as a patter of the learning effect hereinafter and, at the same time, may store it in the individual history reaction file. In this time, the learning effect pattern analyzing step 22 may also transmit the reaction result patterns of all learners who selected the same content identification condition code simultaneously.

The effect pattern distributing step 23 may accept the access from a corporation and an advisor and may offer the stored individual history.

The learner terminal 4 may store download the presentation list from the learning schedule service site 7; may sequentially display the contents of this presentation list on the screen on the basis of an operation instruction; and may store the contents as corresponding them to the reaction history. Then, the learner terminal 4 may transmit this reaction history to the learning schedule service site 7 by using the Internet.

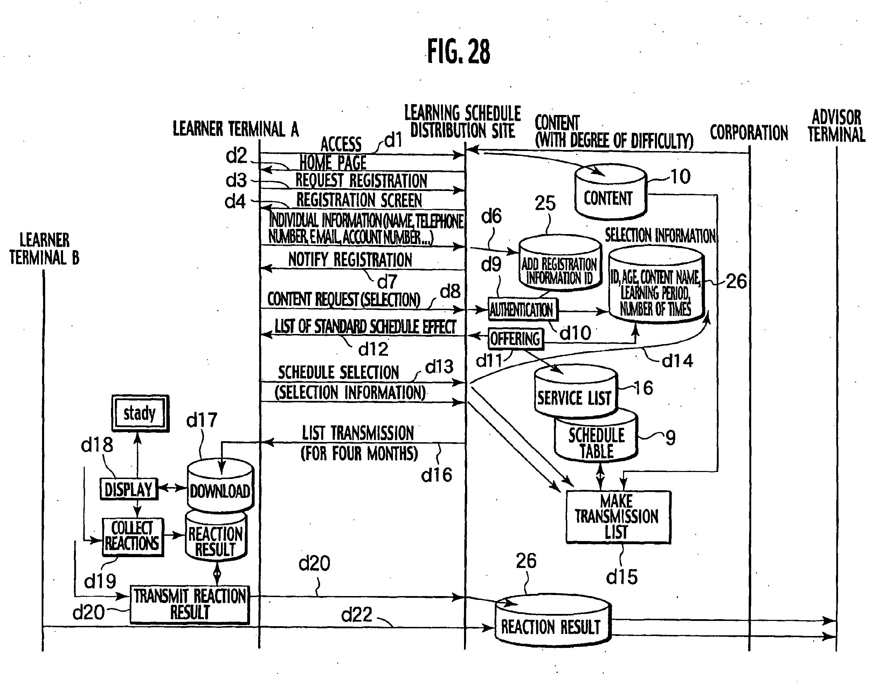

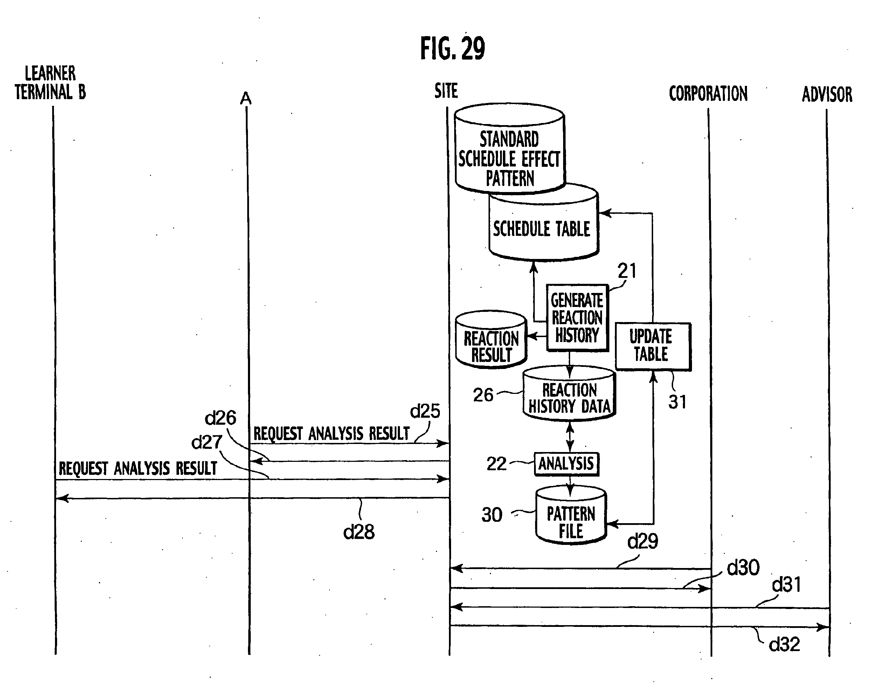

The operation of the system that is structured in the above-described way will be described below with reference to sequence drawings shown in FIG. 28 and FIG. 29.

(Registration of the learner information)

Upon receiving offering of the service of the present system, the learner may receive offering of a home page by accessing the learning schedule offer site through the Internet by means of the terminal A (d1, d2).

In the next place, selecting the registration, the learner may open an individual information registration input screen (d3, d4) , may input a name, a telephone number, an Email, an account number, an address, and an age or the like, and may transmit them (d5). The individual information generating step 17 of the learning schedule service site 7 may add these information to the ID, may store them in the individual information table 25 (d6) , and may notify the learner terminal A (2) of the registration via the Internet 6 (d7).

(Distribution of the contents)

In the next place, the learner of the learner terminal may input the ID code, the name, and the age or the like (hereinafter, referred to as the user information), and may request the content (for example, the English words for the first grade of the junior high school) (d8).

When receiving the user information, the service menu selecting step 14 of the learner schedule site 7 may compare this usage information with the individual information table 25 and authenticate it (d9). When judging that this user can use this site, the service menu selecting step 14 may store the ID code, the name, the age, and the selected content name (hereinafter, generically referred to as the user selection information) in the individual reaction history file 26 by using the individual information generating step 17 and further, may notify the standard schedule selecting step 18 (d10).

In the next place, if the authentication is approved as "available", the service menu selecting step 14 may select a service list that is available from the service list table 16 on the basis of the user selection information (d11), and may transmit it to the user terminal A (d12).

The learner terminal A displays this service list (a plurality of graphs) on the screen. For example, the learner terminal A displays it on the service list shown in FIG. 27.

In the next place, the learner of the learner terminal A may select a desired bar graph list from a plurality of graphs that is displayed on the screen, and may select a desired learner schedule at the sight of the effect of this selected bar graph list. In this selection, any month of a month axis (a learning period: for example, four months) and the number of times are selected.

The learner terminal may transmit the number of the selected graph list (also referred to as a schedule pattern), a learning period, a month, and a number of times to the site 7 via the Internet (d13).

The standard schedule selecting step 18 of the learner schedule site 7 may store the number of the schedule pattern from the learner terminal A, the learning period, the month, and the number of times in the individual reaction history file 26 while corresponding them to the user information (generically referred to as the user selection history information) (d14).

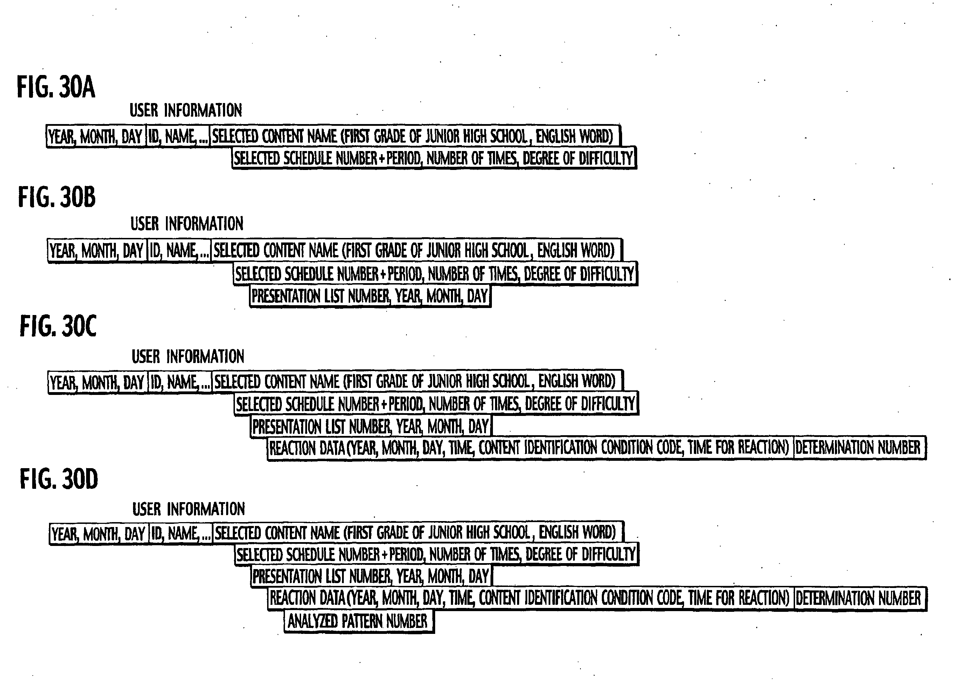

In other words, as shown in FIG. 30 (a) , the year, the month, the day, the user information, the selected content name, the selected schedule number, the selected period, the selected number of times, and the selected level of difficulty are stored in the individual reaction history file 26 with corresponded with each other.

In the next place, the standard schedule selecting step 18 of the learner schedule site 7 may notify the transmission list generating step 20 of the user selection information that is noticed from the service menu selecting step 14, the selected schedule number, the selected period, the selected number of times, and the selected level of difficulty as the user selection history information.

The transmission list generating step 20 may generate read the user selection history information and may generate, for example, a presentation list (a transmission list) shown in FIG. 26 from the schedule table 9 (d15); may transmit the contents of the presentation list and the presentation list number to the learner terminal A via the Internet and at the same time, may store them in the individual reaction history file (d16). The generation of the transmission list from this schedule table 9 will be described in detail in later. In other words, the presentation list, the year, and the day are added to the individual reaction history file.

On the other hand, the learner terminal A may receive and download the presentation list (d17), and may display the content of the year, the month, and the day inputted by the learner (d18).

For example, as shown in FIG. 31, the content of the presentation list corresponding to the inputted year, month, and day (the content corresponding to the content identification condition code) is displayed for three seconds in a frame (FIG. 31A) , and after that, this content may clear to assess the level of mastery (FIG. 31B). This assessment (reaction) of the level of mastery is collected with corresponded to the content identification condition code (d19). For example, the date when the learning is performed, the time taken for learning, and the selected determination are corresponded with each other.

Then, at a point of time when this learning is terminated, the learner terminal reads the collected reaction results from the file and sequentially transmits them to the learning schedule service site 7 via the Internet (d20).

In addition, the history generating step 21 of the learning schedule service site 7 may receive the reaction data from the learner terminal (the learner ID, the year, the month, the day, the time, the presentation list number, the content identification condition code (it may be a number of the presentation list), the time taken for learning, and the selected determination number), may set aside the individual reaction history information corresponding to the learner ID and the presentation list number from the individual reaction history file 26, and may add it to the information of this learner (d21).

In other words, in the individual reaction history file 26, as shown in FIG. 30 (c) , the reaction data composed of the year, the month, the day, the time, the content identification condition code, and the determination number or the like are sequentially added in accordance with the reply from the learner terminal.

Such a series of processing is also carried out with respect to the learner terminal B, and stores it in the individual reaction history file 26 (d22).

Accordingly, this results in that the reactions of the contents that are distributed under the schedule condition and the presentation condition of the event cycle unit of the schedule table are collected. According to the present embodiment, it is assumed that, in accordance with the schedule table, the reaction data for four months are collected.

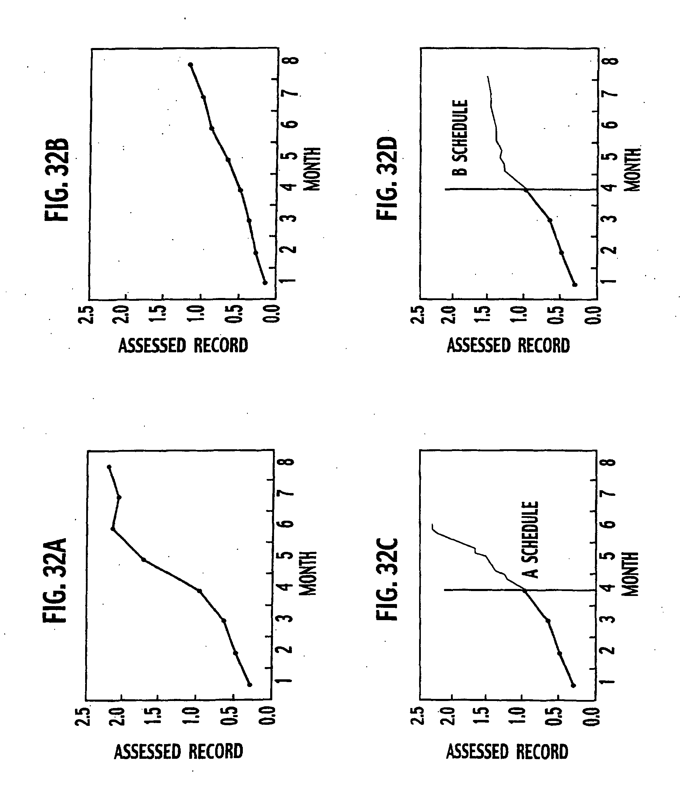

The learning effect pattern analyzing step 22 may collect the reaction results of the presentation conditions of the first event cycle unit and the second event cycle unit to generate an averaged effect pattern. The generation of this effect pattern will be described with reference to FIG. 32.

A method for tallying up the data is like "gleaning". Briefly speaking, planning of the presentation condition in the schedule table intends to distribute the content items within the interval unit in order to make the contents to be presented once less because too many contents cannot be assessed.

Further, this planning intends to solve a problem as much as possible such that the intervals and the presentation condition are very difficult to control when they are distributed.

On the other hand, upon tallying up the data, on the contrary, by collecting the reactions to the distributed contents little by little till they finally take shape, a central value is taken.

For example, FIGS. 32 (A) and (B) show a portion of the individual data of two person that is obtained by averaging the reaction result in accordance with the presentation list.

A horizontal axis indicates the number of months that have passed from the start of the learning and a vertical axis indicates the results of the self-assessment. There is a method for obtaining a prospect in such a manner that, only by using such individual data, for example, a regression function as shown in FIG. 18 is estimated and the regression function is made into a prediction value of this individual hereinafter. Here, the other method will be described. In other words, such individual data is collected for each individual, such individual data is collected regarding many persons, and a plurality of individuals of which rising of the records are similar each other is unified.

Further, even in the case of progressing the learning under an arbitrary interval condition, if an enormous amount of individual data can be acquired, a plurality of learners who learned under the similar interval conditions is united. Further, a plurality of learners showing the similar progresses of learning is collected from among them. In addition, it may be possible to collect a plurality of individuals of which individual attributions are similar with each other.

Then, according to the free accumulation method, by enlarging a parent population of the rater in this way, the raters showing the similar interval patterns and the similar assessment patterns are specified and a central value of the patterns of a group of these raters is made into a prediction pattern.

For example, it is assumed that a learning progress pattern of a given individual who have continued learning for four months under an interval condition (schedule) , X indicates a pattern as shown in the drawing. Here, a method for predicting a learning progress pattern of this learner after four months will be considered.

In addition, for example, it is assumed that there are many learners who have continued the learning for twelve months. Among these examinees, by collecting a learner group in which a learning progress patterns till the fourth month are similar to a learning progress pattern till the fourth month of a given individual to be predicted; and a group of which individual attributions such as an interval condition till the fourth month, a class of school, and a location or the like are similar with each other; and further, a learner belonging to the both groups is abstracted. From the data of the abstracted group, a learning progress pattern (for example, the average or the like) representing this group is synthesized. A learning progress pattern on and after fifth months of this synthesized center pattern is used as a prediction pattern of the individual of interest.

More specifically, in the case that many persons who change the interval condition of the learning an and after fifth month from a X schedule condition into any of A and B are collected, with reference to the data of the learner group indicating a pattern of a timing condition of the individual to be predicted till the fourth month and a pattern that is similar to the pattern of the learning record, it is predicted on which schedule of A or B on and after fifth month, this individual likely rise the record. For example, in the case of a learning pattern of given individual till fourth month, at first, many of the learner data of which individual schedule condition and individual attribution or the like are similar to this pattern are collected.

If a learning progress pattern of a person having a schedule A on and after fifth month is as shown in FIG. 32 (C) and the person who having a schedule B is as shown in FIG. 32 (D) among this group, it can be predicted that the schedule A is likely more effective for the learner continuing the learning till fourth month as the schedule to be adopted on and after fifth month, so that this schedule A is distributed as the optimum schedule pattern of the learner hereinafter.

In other words, in the learning effect pattern analyzing step 22, the analyzed individual pattern that is analyzed into is stored in the pattern file 30, and the pattern number is stored in the individual reaction history file 26 (refer to d of FIG. 30).

Then, as shown in FIG. 29, when the learner terminal A requests the analysis result (the year, the month, the day, and the ID or the like) (d25) , the learner terminal A may read the pattern number of the individual reaction history file 26 and may transmit the analysis pattern corresponding to this pattern number to the learner terminal (d26). In this time, the learner terminal A may also transmit a pattern of an entire tendency (refer to FIG. 27).

In addition, when the learner terminal B requests the analysis result (the year, the month, the day, and the ID or the like) , the learner terminal B may read a pattern number of the individual reaction history file 26 and may transmit an analysis pattern corresponding to this pattern number to the learner terminal (d27, d28). In addition, in accordance with this pattern, the learner terminal B may update the schedule table.

Further, by a request from a corporation terminal or an advisor terminal, the information and the pattern of the individual reaction history is offered (d29, d30, d31, d32).

(An explanation of a schedule table)

The present schedule table is used for offering the information serving as an index of a time and a labor to be needed for obtaining a given learning content to the learner. In other words, a table intends to indicate how many times the learning should be repeated to realize an effect or how the learning progresses.

In order to incorporate the schedule pattern into the analysis, an experimental planning idea is introduced into a conventional inspection method.

In order to consider the cause of the schedule, it is not rational that the schedule capable of being assumed infinitely is made into an object of analysis from the first. As a result, it is necessary that, limiting the schedule to be presented to the user (also referred to as a control learning) , the data are collected corresponding to this and are analyzed.

In other words, in order to incorporate the schedule pattern into the analysis, the schedule to be presented should be limited (a plurality of standard schedules is prepared in advance).

<A sixth embodiment>

An e-learning system (e-learning: evaluated-e-learning (double-e-learning) we-learning) emphasizing on grasp and evaluation of the record of the learner will be described below.

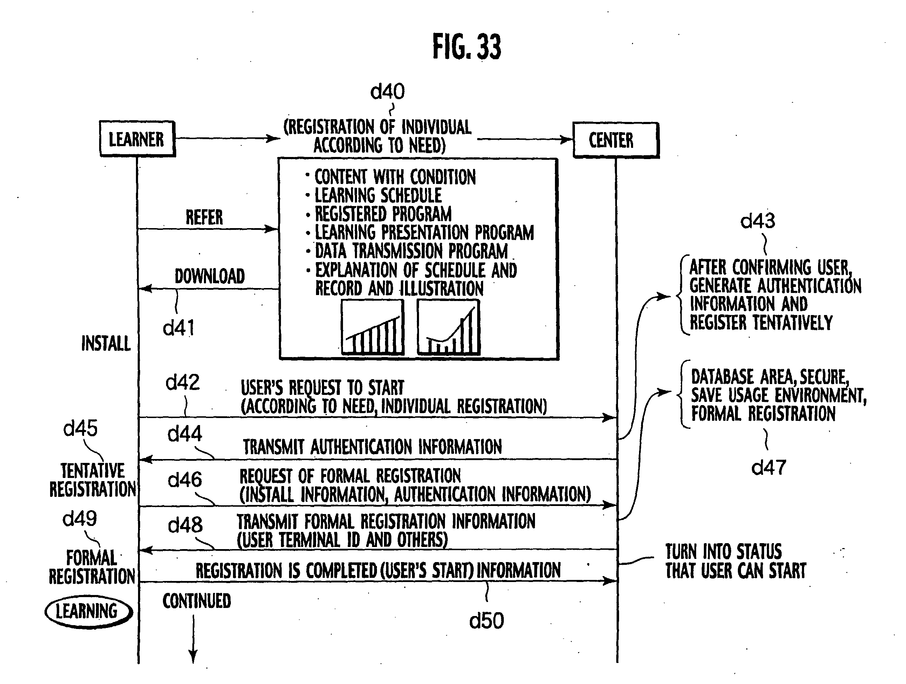

Due to diffusion of the Internet, an environment anytime and anywhere the learner can learn is constructed, however, this involves a problem such that grasp of the record of the learner and the evaluation on the basis of this are made difficult. This system is a service that emphasizes not on offering of a learning environment that is not conventional to a conventional e-learning but on offering the evaluation of the individual's record and revision or the like. A conventional system offers the environment anytime and anywhere the learner can learn, however, it makes difficult to manage and use the data such as the learning record or the like that an individual and a teacher need most. The present system is a learning system for incorporating a frame to make the experiences of the learner into a variable, to accumulate it as the data and to use it for various analysis and prediction of behaviors. With respect to FIG. 33

At first, a data center or a content offer corporation (referred to as a center) may upload a file that various conditions such as a schedule or the like are described on a content, a schedule table corresponding to this content, a learning presentation program, and a data transmission program to a home page. In addition, with respect to various contents, a common change of the record when the learner learns in accordance with various schedule conditions can be refereed as an example.

(d 40) The learner hoping for the following service may register the individual information (an address and a mail address or the like) according to need. In the meantime, at this point of time, the individual information is not always registered and it may be registered in (d 42).

(d 41) When the learner refers to the home page of the center and is interested in it or would like to used it, downloading this content and a set of a schedule table and a presentation program corresponding to this content, the learner may install them into his or her own learning terminal.

(d 42) After installing, the learner may return a request to start the learning on the basis of the schedule of the content of interest (hereinafter, referred to as a scheduled learning (SL)) to the center. In addition, according to need, the learner may register the individual information in this time.

(d 43) The center may confirm the user whether or not the individual information is registered, and then, the authentication information for using this SL service is generated and recorded, and then,

(d 44) The center may transmit it to the learner that has been registered in advance.

(d 45) The learner may install and tentatively register the service at the side of the terminal by using this authentication information, (d 46) and may transmit its tentatively-registered information (the learning environment information such as an install directory or the like, the authentication information) to the center

(d 47) When the tentatively-registered information arrives and the authentication is confirmed, the center may secure an area in which the reaction or the like corresponding to the corresponding content database is recorded (the content itself is not always needed and at least the content number or the like is necessary) , may record the terminal environment and the install status of the user therein, may allocate the terminal ID to be used by the individual (d 48) and may transmit the information such as this ID or the like to the learner as the present registration file (the present registration is competed at the side of the center).

(d 49) The learner completes the present registration at the side of the terminal by using the transmitted present registration file,

(d 50) according to need, may transmit the information about completion of registration to the center together with the information of the status that the registration is finally completed (a destination of install and a transmission mail address or the like).

The summary of registration of the SL service is as described above. In the meantime, the SL service is absolutely performed to a combination of the schedule and the content. In addition, various change such as the change of the schedule and the transmission mail address are treated by transmitting the information of (d 50) to the center.

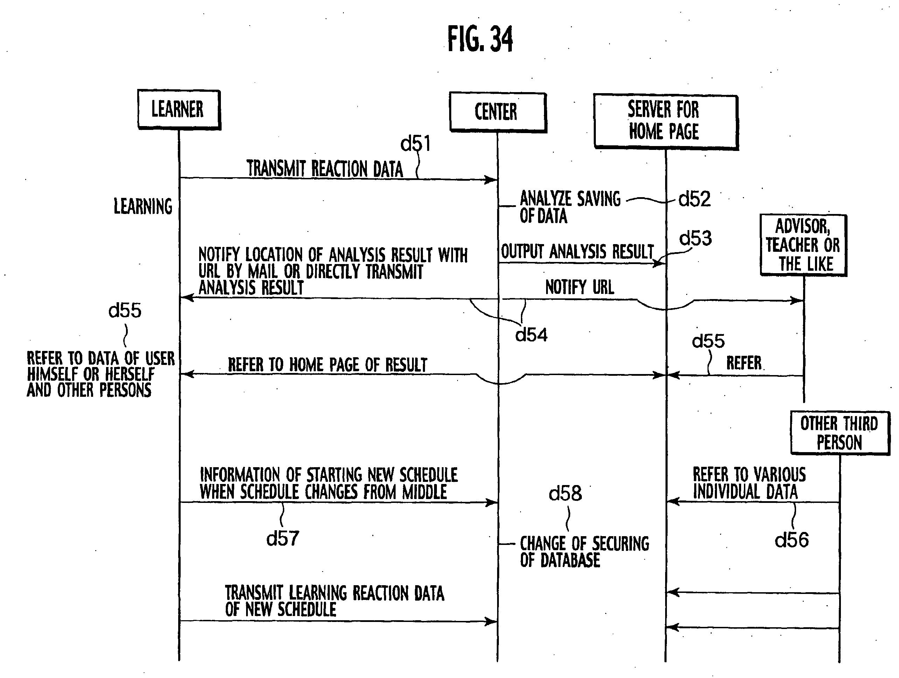

In addition, registering the individual information or the like in the center separately in advance, a registration operation may be started from (d 44) or (d 48) With respect to FIG. 34

The exchange of the information after completion of the registration of the SL service will be described below.

(d 51) The learner progresses the learning at a prescribed schedule and the reaction of the learning's result is recorded at the side of the terminal. In the process of progressing the learning, if the learner hopes to refer to the analysis result, he or she transmits the learning reaction data to the center. This data may include the number of the content, the number of the schedule, the number of the presentation unit in the schedule, the reaction and the reaction time to each content, the number of the content, the day of the learning, the learning start time and end time, the number of the presentation unit, and the terminal ID or the like according to need.

(d 52) The center may save the received learning reaction data for each individual, may use the data and the other learner's data according to need, may analyze the progress of the learning,

(d 53) may place its result on the home page.

(d 54) At the same time, the center may transmit a URL of the home page and a pass word or the like according to need to that learner, an advisor such as a teacher according to need and a third person according to need. It is a matter of course that the analysis result that is placed on the home page may be directly transmitted to the learner and the third person or the like as a file.

(d 55) The learner, the teacher, and the third person can refer to the analysis data such as the progress and the prediction of the learning of that learner at anytime.

(d 56) The records and the change data or the like of all individuals are placed on the home page in a form that cannot be specified by the individual so that anyone including a researcher or the like can refer to it.

(d 57) Depending on the schedule of the learner, the schedule condition can be constructed again on the basis of the records of the individuals. In this case, the learner may transmit the information of reconstruction from the side of the terminal to the center,

(d 58) The center may secure the database for recording the reaction data on the basis of the information of reconstruction or by adding change to the structure, the center makes it possible to recreate the status of the terminal of the learner.

In the meantime, it is also possible that the reaction data that is saved in (d 52) may be transmitted to the third person such as the researcher or the like in a form that cannot be specified by the individual or a form that can be specified by the individual.

## Claims

1. A schedule making method for expressing a schedule condition under which an event relating to a given content arises by a combination of the kinds of a timing condition and a presentation condition.

2. The schedule making method according to claim 1, wherein said timing condition defines the minimum period during which an event relating to a content as a presentation unit; and by corresponding presence or absence of arising of the event in the presentation unit that is included in a given period to 1 - 0 without relating to a kind of this arising condition, a timing condition under which a specific event arises during this period is expressed (coded).

3. The schedule making method according to claim 1 or 2, wherein said presentation condition is defined as the number of repetition of the event arising relating to the same content within the same presentation unit, a presentation order of the content within the same presentation unit, and a presentation method of the content.

4. The schedule making method according to claims 1 to 3, wherein, with respect to a set composed of one or a plurality of contents, in order to generate a schedule under which events relating to all contents repeatedly arise at a preserved timing, a short preserved period that is not shorter than said presentation unit relating to arising of the event and is not longer than a period from start of a given event till before a next event arises is provided as an event cycle unit; and a content is arranged so that a specific event relating to each content arises once within that event cycle unit.

5. The schedule making method according to claims 1 to 4, wherein contents are arranged so that the events relating to each of said contents arise in the same order as much as possible in each of said plural event cycle units.

6. The schedule making method according to claims 1 to 5, wherein, when the events relating to the plural contents arise under plural different presentation conditions, one or a plurality of periods that are not shorter than said presentation unit and are not longer than said event cycle unit are set as a condition unit; and the conditions are arranged so that all of presentation conditions to be weighed appear within this condition unit.

7. The schedule making method according to claims 1 to 6, wherein the number of presentation condition and the number of content of each presentation condition are combined so that a total amount, a time, and a burden of the arising events or the like are made equal as much as possible upon arranging the presentation condition and the content within said event cycle unit.

8. A storage media storing a schedule table, having one or a plurality of schedule data, wherein the attribution information of the contents to be presented within the presentation unit; the number of repetition of the contents within this presentation unit; a presentation method of the contents; and the number of the contents to execute the events matching a combination condition thereof are corresponded to the order of repetition of said event cycle unit and the order of the presentation unit to be executed within each event cycle unit, and they are provided with an execution expected date or a through number.

9.   The storage media according to claim 8, wherein said attribution information includes a degree of difficulty and a level of importance or the like of the contents.

10.  A presentation list making method comprising the steps of:

generating a schedule table by deciding a stage for storing many and various contents to which the attribution information is added in a database, a timing condition, a length of an event cycle unit, a length of a presentation unit, a length of a condition unit, a presentation condition, the attribution information of the content, and the number of repetition of the content;
writing a condition code made by combining a timing condition, a number of a presentation unit, the attribution information of the content, the number of repetition of the content, and a presentation method of the content on the basis of said schedule table while corresponding it to each content of a content database;
designating a kind of the content, a schedule condition, and a number or a through number of a presentation unit; and
corresponding the designated content database to the schedule table, abstracting the content corresponding to the designated presentation unit as a presentation list together with various information, and deciding the order of presentation and a presentation method of the contents so that the contents that are abstracted according to need can be presented in accordance with a presentation condition of the schedule table.

11.  The presentation list making method according to claim 10,
wherein, by using the information recording the history generating said presentation list while corresponding it to the schedule table, it is grasped which presentation unit haws been already generated as a presentation list; and the information recording the history generating said presentation list is displayed so as to designate a presentation unit of which presentation list is not generated.

12.  A learning schedule data distribution evaluating method for distributing a presentation unit of learning from a site to a learner terminal by a computer system via a network and evaluating an effect,
wherein said site having
a stage wherein, with respect to a set composed of one or a plurality of contents, in order to generate a schedule under which events relating to all contents repeatedly arise at a preserved timing, a period (referred to as an interval) that is not shorter than said presentation unit relating to arising of the event and is not longer than a period from start of a given event till before a next event arises is provided as an event cycle unit; and a content is arranged so that a specific event relating to each content arises once within that event cycle unit or the information for arranging the content is transmitted to said learner terminal;
a stage for adding an evaluating event such as a test to the event of said event cycle unit; and
a stage for offering the reaction to the content of the event arising under a specific schedule before said distributed event cycle unit from said learner terminal and measuring and evaluating an effect of this event.

13.  The learning schedule data distribution evaluating method according to claim 12,
wherein, by comparing a first event cycle unit in the schedule that is arranged according to claim 12 with the individual's reaction from said learner terminal to the evaluating event in a specific event cycle unit, said site evaluates the effect of the event of the event cycle units till a specific event cycle unit.

14.  The learning schedule data distribution evaluating method according to claim 12 or 13,
wherein, upon measuring and comparing the effect of the event arising in accordance with a given schedule with a period required for measurement shorter than the event cycle unit for each presentation condition, said site selects the same number of the contents of the presentation condition to be compared from among respective condition units; unifies the reactions to these as a point; and compares and evaluates an effect of each presentation condition.

15.  The learning schedule data distribution evaluating method according to claims 12 to 14,
wherein said site collects the changes of the reactions to the individual's event of said learner terminal who experienced the event in accordance with the schedule condition; unifies the changes for a plurality of individuals; and accumulates a typical pattern of the reaction change as a standard in a database.

16.  The learning schedule data distribution evaluating method according to claim 15,

wherein said schedule condition defines an interval at which an event relating to a given content arises by a combination of the kinds of a timing condition and a presentation condition.

17. The learning schedule data distribution evaluating method according to claims 12 to 16,
wherein said database accumulates a typical pattern of the reaction change of a group as a standard; in said group, various individual attributions such as a personality, a sexuality, and a location or the like also correspond with each other in addition to the schedule condition.

18. A learning schedule data distribution evaluating method,
wherein, upon predicting the changes of the reaction pattern hereafter of the individual's learner terminal who experienced a given event in accordance with a specific schedule condition, said site uses said database, has the same attribution as that individual's attribution, experiences the event in accordance with the same or similar schedule, and further, returns the reaction change pattern indicated by the group indicating the similar reaction pattern to said learner terminal as a prediction pattern of that individual's reaction.

19. The learning schedule data distribution evaluating method according to claim 18, including
a stage for collecting the reaction data to the event arising under the schedule condition mixing a schedule of a timing condition with a short interval and a schedule of a timing condition with a long interval from a plurality of leaner terminals, and specifying a functional relation between the change of the reaction under the short timing condition and the change of the reaction under the long timing condition; and
a stage for collecting the reactions to the event arising under the short timing condition at a separate and different individual's learner terminal, and predicting a reaction change pattern under the long timing condition from the functional relation that is specified as this pattern.

20. The learning schedule data distribution evaluating method according to claims 12 to 19,
wherein said site requests said learner terminal to perform a self-assessment of the known or learned level of each content of a content list in accordance with a criterion of a prescribed stage; and collects and stores the stage of assessment of the learner at said learner terminal and according to need, the reaction time from presentation of the content till the self-assessment as the individual reaction data corresponding to one event relating to this content.

21. The learning schedule data distribution evaluating method according to claims 12 to 20,
wherein said site comprises
a stage for recording the reaction data to each content of said presentation list in an individual reaction database while corresponding it to each content;
a stage for unifying the contents equivalent to a combination of a timing condition, the attribution information, and a presentation condition such as the number of repetition or the like by using a condition code that is allocated to each content, and calculating a central value of the reactions to these contents; and
a stage for outputting this central value as a reaction change pattern under its schedule condition.

22. The learning schedule data distribution evaluating method according to claims 12 to 21, comprising
a stage for grasping which presentation unit has been generated as a presentation list by using the information that is recorded while corresponding the' history generating said presentation list to a schedule table; and
a stage for distributing a presentation unit of which said presentation list is not generated to said learner terminal so that said learner terminal can designate said presentation unit and displaying said presentation unit.

23. The learning schedule data distribution evaluating method according to claims 12 to 22,
wherein, when colleting the reaction data from said learner terminal, and when the originally-predicted schedule is deviated from a timing condition, the deviated timing condition is described again at a typical due date such as an end day, a start day, and a central day in practice of a period of each event cycle unit.

24. The learning schedule data distribution evaluating method according to claim 23,
wherein said timing condition to be described and a schedule condition are corresponded to the reaction data of a rater; and the rater data is made into a database.

25. The learning schedule data distribution evaluating method according to claims 12 to 24,
wherein, when the reaction data to an event that arises under various timing conditions and is transmitted is transmitted from said learner terminal, said site defines the minimum period during which the event arises, and describes an arising timing condition of the event depending on whether or not the event arises during this period.

26. The learning schedule data distribution evaluating method according to claim 25,
   wherein the reaction of the individual who experienced each event is coded with respect to said timing condition which is described according to claim 25; and the individual's experience is expressed by a combination of this timing condition and the code of the reaction.

27. The learning schedule data distribution evaluating method according to claim 26,
   wherein said site registers the event expression that is expressed according to claim 26 as a database; predicts the reaction to an arbitrary individual's event or predicts said reaction and the timing by estimating a timing condition expected to have a specific reaction.

28. A learning schedule data distribution evaluating system for offering index information that is required to master a learning content from the side of a server via a computer network,
   wherein said learning schedule offering device having:

   means for prompting a learner terminal to input a content name to be learned, in accordance with input of said content name, making said learner terminal to display a plurality of learning effect patterns corresponding to said content name that has been stored therein in advance, and prompting said learner terminal to select any one of said plural learning effect patterns;
   means for generating a presentation list corresponding a month and a day to the content when said learner terminal selects said learning pattern on the basis of a schedule table defining a distribution schedule of said selected content by the number of repetition and the attribution information, and transmitting said presentation list to said learner terminal; and
   means for collecting an assessment result of each content with respect to said presentation list at a learner terminal of said learner; collecting said assessment results having similar individual attribution and schedule; selecting a central value from among them; predicting an effect to said selected content hereafter; and transmitting the predicted effect to said learner terminal;

   wherein said learner terminal having:

   means for displaying many learning effect patterns from said learning schedule offering device, and transmitting a content name of the selected learning effect pattern to said learning schedule offering device; and
   means for storing a presentation list from said learning schedule offering device, sequentially displaying each content of said presentation list on a screen, displaying the prescribed number of question items after a prescribed time has passed to select any one of the question items, and transmitting said selected question item to said learning schedule offering device as said assessment result.

29. The learning schedule data distribution evaluating system according to claim 28,
   wherein said learning schedule offering device has means for obtaining a prediction result of a learner himself or herself to each content with respect to said presentation list and an average of other learners, and transmitting said prediction result of the learner himself or herself and this entire prediction result to said learner terminal.

30. The learning schedule data distribution evaluating system according to claim 28 or 29,
   wherein said learning schedule offering device groups many contents to which the attribution are added by said attribution information; on the basis of inputted learning period and learning date, defines said learning period of a cycle unit learning again for each of said grouped contents after learning said content at a prescribed interval; defines the number of learning of each of said grouped contents for said cycle unit; and has a schedule table in which the number of learning of these contents are allocated evenly at each date of said learning period for each of said grouped contents; and
   when said learner terminal selects said learning pattern, said learning schedule offering device generates a presentation list in which the contents to be learned for each month and day are allocated from the schedule table corresponding to the content name of said learning pattern; and transmits said presentation list to said learner terminal.

# FIG. 1

|  | ONE DAY | TWO DAYS | THREE DAYS | FOUR DAYS | FIVE DAYS | SIX DAYS | SEVEN DAYS | EIGHT DAYS | NINE DAYS | TEN DAYS |
|---|---|---|---|---|---|---|---|---|---|---|
| SCHEDULE A | ONCE | ONCE | ONCE | ONCE | ONCE | ONCE | ONCE | ONCE | ONCE | ONCE |
| SCHEDULE B | FIVE TIMES |  |  |  |  | FIVE TIMES |  |  |  |  |
| SCHEDULE C | ONCE |  |  |  |  | ONCE |  |  |  |  |

# FIG. 2

TIMING CONDITION (Ai)

| PRESENTATION CONDITION (Bi) |  | ONE DAY | TWO DAYS | THREE DAYS | FOUR DAYS | FIVE DAYS | SIX DAYS | SEVEN DAYS | EIGHT DAYS | NINE DAYS | TEN DAYS |
|---|---|---|---|---|---|---|---|---|---|---|---|
| SCHEDULE A | 1 | 1 | 1 | 1 | 1 | 1 | 1 | 1 | 1 | 1 | 1 |
| SCHEDULE B | 5 | 1 | 0 | 0 | 0 | 0 | 1 | 0 | 0 | 0 | 0 |
| SCHEDULE C | 1 | 1 | 0 | 0 | 0 | 0 | 1 | 0 | 0 | 0 | 0 |

# FIG. 3

| | ONE DAY | TWO DAYS | THREE DAYS | FOUR DAYS | FIVE DAYS | SIX DAYS | SEVEN DAYS | EIGHT DAYS | NINE DAYS | TEN DAYS |
|---|---|---|---|---|---|---|---|---|---|---|
| TIMING CONDITION (Ai) OF SCHEDULE B | 1 | 0 | 0 | 0 | 0 | 1 | 0 | 0 | 0 | 0 |

PRESENTATION UNIT ←→

INTERVAL ←————————————→ INTERVAL ←————————————→

EVENT CYCLE UNIT EXAMPLE 1 — ←——— EVENT CYCLE UNIT EXAMPLE 1 ———→ ←——— EVENT CYCLE UNIT EXAMPLE 1 ———→

EVENT CYCLE UNIT EXAMPLE 2 — ←—— EVENT CYCLE UNIT EXAMPLE 2 ——→ ←—— EVENT CYCLE UNIT EXAMPLE 2 ——→

EP 1 450 280 A1

# FIG. 4

EP 1 450 280 A1

THE ORDER OF ARRANGEMENT OF CONTENT ITEMS (AND PRESENTATION CONDITIONS) WITHIN EACH INTERVAL UNIT ARE MADE EQUAL AS MUCH AS POSSIBLE

# FIG. 5

| | THROUGH NUMBER | MONTH | DAY | CONTENT IDENTIFICATION CONDITION CODE | ATTRIBUTION INFORMATION | KINDS OF LEARNING METHODS | NUMBER OF REPETITION | EVENT CYCLE UNIT (FOR EXAMPLE, MONTH) | MINIMUM UNIT OF EVENT UNIT (FOR EXAMPLE, ONE DAY) | NUMBER OF CONTENTS |
|---|---|---|---|---|---|---|---|---|---|---|
| | 1 | 1 | 1 | B1T01CY0101R01 | B1 | T | 01 | 1 | 1 | 1 |
| | 2 | 1 | 1 | B1T01CY0101R03 | B1 | T | 03 | 1 | 1 | 1 |
| | 3 | 1 | 1 | B1T01CY0101R06 | B1 | T | 06 | 1 | 1 | 1 |
| | 4 | 1 | 1 | B1T01CY0101R08 | B1 | T | 08 | 1 | 1 | 1 |
| | 5 | 1 | 1 | B2T01CY0101R01 | B2 | T | 01 | 1 | 1 | 1 |
| | 6 | 1 | 1 | B2T01CY0101R03 | B2 | T | 03 | 1 | 1 | 1 |
| | 7 | 1 | 1 | B2T01CY0101R06 | B2 | T | 06 | 1 | 1 | 1 |
| | 8 | 1 | 1 | B2T01CY0101R08 | B2 | T | 08 | 1 | 1 | 1 |
| | 9 | 1 | 1 | B3T01CY0101R01 | B3 | T | 01 | 1 | 1 | 1 |
| | 10 | 1 | 1 | B3T01CY0101R03 | B3 | T | 03 | 1 | 1 | 1 |
| | 11 | 1 | 1 | B3T01CY0101R06 | B3 | T | 06 | 1 | 1 | 1 |
| | 12 | 1 | 1 | B3T01CY0101R08 | B3 | T | 08 | 1 | 1 | 1 |
| | 13 | 1 | 1 | FFF01CY0101R06 | FF | F | 06 | 1 | 1 | 6 |

THIRD GRADE OF SENIOR HIGH SCHOOL

FIRST GRAD OF JUNIOR HIGH SCHOOL

FIRST PRESENTATION CONDITION    SECOND PRESENTATION CONDITION

PRESENTATION CONDITION

EP 1 450 280 A1

# FIG. 6

| TIMING CONDITION A1 | | |
|---|---|---|
| INTERVAL | 24 | DAY |
| EVENT CYCLE UNIT | 24 | DAY |
| CONDITION UNIT | 2 | DAY |

● LIST FOR DESIGNATING NUMBER OF CONTENT ITEMS FOR EACH ATTRIBUTION CONDITION AND PRESENTATION CONDITION WITHIN ONE CONDITION UNIT

| | PRESENTATION CONDITION | | | | | | | | | | | | | | | |
|---|---|---|---|---|---|---|---|---|---|---|---|---|---|---|---|---|
| | T CONDITION | | | | | | | | D CONDITION | | | | | | | |
| | CONDITION OF NUMBER OF TIMES OF DRILL LEARNING | | | | | | | | CONDITION OF NUMBER OF TIMES OF DRILL LEARNING | | | | | | | |
| ATTRIBUTION CONDITION | 1 | 2 | 3 | 4 | 5 | 6 | 7 | 8 | 1 | 2 | 3 | 4 | 5 | 6 | 7 | 8 |
| B1 (LEVEL 1) | 1 | 1 | 1 | 1 | 1 | 1 | 1 | 1 | 0 | 0 | 0 | 0 | 0 | 0 | 0 | 0 |
| B2 (LEVEL 2) | 1 | 1 | 1 | 1 | 1 | 1 | 1 | 1 | 0 | 0 | 0 | 0 | 0 | 0 | 0 | 0 |
| B3 (LEVEL 3) | 1 | 1 | 1 | 1 | 1 | 1 | 1 | 1 | 0 | 0 | 0 | 0 | 0 | 0 | 0 | 0 |
| 01 (OTHER 1) | 1 | 1 | 1 | 1 | 1 | 1 | 1 | 1 | 1 | 1 | 1 | 1 | 1 | 1 | 1 | 1 |
| 02 (OTHER 2) | 1 | 1 | 1 | 1 | 1 | 1 | 1 | 1 | 1 | 1 | 1 | 1 | 1 | 1 | 1 | 1 |
| NUMBER OF NECESSARY CONTENT ITEMS | 5 | 5 | 5 | 5 | 5 | 5 | 5 | 5 | 2 | 2 | 2 | 2 | 2 | 2 | 2 | 2 |
| TOTAL NUMBER OF DRILL ITEMS | 5 | 10 | 15 | 20 | 25 | 30 | 35 | 40 | 2 | 4 | 6 | 8 | 10 | 12 | 14 | 16 |

TOTAL: 56 KINDS / 252 TIMES

AVERAGE OF TOTAL NUMBER OF DRILL ITEMS IN EACH PRESENTATION UNIT = 126 TIMES

NECESSARY NUMBER OF ITEMS IN ONE EVENT CYCLE UNIT = 672 KINDS

● LIST FOR CONSIDERING HOW TO ALLOCATE PRESENTATION NUMBER CONDITION (ONCE TO EIGHT TIMES) WITHIN CONDITION UNIT

| LIST STRUCTURE OF BASIC LEARNING | CONDITION OF NUMBER OF TIMES OF LEARNING | | | | | TOTAL |
|---|---|---|---|---|---|---|
| ODD DAY | 1 | 3 | | 6 | 8 | 18 |
| EVEN DAY | | 2 | 4 | 5 | 7 | 18 |

# FIG. 7

| TIMING CONDITION A2 | | |
|---|---|---|
| INTERVAL | 48 | DAY |
| EVENT CYCLE UNIT | 48 | DAY |
| CONDITION UNIT | 4 | DAY |

● LIST FOR DESIGNATING NUMBER OF CONTENT ITEMS FOR EACH ATTRIBUTION CONDITION AND PRESENTATION CONDITION WITHIN ONE CONDITION UNIT

| | PRESENTATION CONDITION | | | | | | | | | | | | | | | | |
|---|---|---|---|---|---|---|---|---|---|---|---|---|---|---|---|---|---|
| | D CONDITION | | | | | | | | | | | | | | | | |
| | CONDITION OF NUMBER OF TIMES OF DRILL LEARNING | | | | | | | | | | | | | | | | |
| ATTRIBUTION CONDITION | 1 | 2 | 3 | 4 | 5 | 6 | 7 | 8 | 9 | 10 | 11 | 12 | 13 | 14 | 15 | 16 | |
| XX (CONTROL LEVEL) | 2 | 2 | 2 | 2 | 2 | 2 | 2 | 2 | 2 | 2 | 2 | 2 | 2 | 2 | 2 | 2 | |
| NUMBER OF NECESSARY CONTENT ITEMS | 2 | 2 | 2 | 2 | 2 | 2 | 2 | 2 | 2 | 2 | 2 | 2 | 2 | 2 | 2 | 2 | 32 KINDS |
| TOTAL NUMBER OF DRILL ITEMS | 2 | 4 | 6 | 8 | 10 | 12 | 14 | 16 | 18 | 20 | 22 | 24 | 26 | 28 | 30 | 32 | 272 TIMES |

AVERAGE OF TOTAL NUMBER OF DRILL ITEMS IN EACH PRESENTATION UNIT = 68 TIMES

NUMBER OF NECESSARY ITEMS IN ONE EVENT CYCLE UNIT = 384 KINDS

● LIST FOR CONSIDERING HOW TO ALLOCATE PRESENTATION NUMBER CONDITION (ONCE TO EIGHT TIMES) WITHIN CONDITION UNIT

| LIST STRUCTURE OF BASIC LEARNING ONE ROUND FOR FOUR DAYS | CONDITION OF NUMBER OF TIMES OF LEARNING | | | | | | | | | | | | | | | | TOTAL |
|---|---|---|---|---|---|---|---|---|---|---|---|---|---|---|---|---|---|
| FIRST DAY | 1 | | | | | | | 8 | 9 | | | | | | | 16 | 34 |
| SECOND DAY | | 2 | | | | | 7 | | | 10 | | | | | 15 | | 34 |
| THIRD DAY | | | 3 | | | 6 | | | | | 11 | | | 14 | | | 34 |
| FOURTH DAY | | | | 4 | 5 | | | | | | | 12 | 13 | | | | 34 |

EP 1 450 280 A1

# FIG. 8

| TIMING CONDITION A3 | | |
|---|---|---|
| INTERVAL | 24 | DAY |
| EVENT CYCLE UNIT | 24 | DAY |
| CONDITION UNIT | 1 | DAY |

● LIST FOR DESIGNATING NUMBER OF CONTENT ITEMS FOR EACH ATTRIBUTION CONDITION AND PRESENTATION CONDITION WITHIN ONE CONDITION UNIT

| | PRESENTATION CONDITION<br><br>F CONDITION<br><br>CONDITION OF NUMBER OF TIMES OF DRILL LEARNING | |
|---|---|---|
| ATTRIBUTION CONDITION | 5 | |
| 03 (OTHER 3) | 6 | |
| NUMBER OF NECESSARY CONTENT ITEMS | 6 | 6 KINDS |
| TOTAL NUMBER OF DRILL ITEMS | 30 | 30 TIMES |
| AVERAGE OF TOTAL NUMBER OF DRILL ITEMS IN EACH PRESENTATION UNIT = | | 30 TIMES |

NUMBER OF NECESSARY ITEMS IN ONE EVENT CYCLE UNIT = 144 KINDS

EP 1 450 280 A1

# FIG. 9

| TIMING CONDITION A4 | | |
|---|---|---|
| INTERVAL | 24 | DAY |
| EVENT CYCLE UNIT | 24 | DAY |
| CONDITION UNIT | 1 | DAY |

● LIST FOR DESIGNATING NUMBER OF CONTENT ITEMS FOR EACH ATTRIBUTION CONDITION AND PRESENTATION CONDITION WITHIN ONE CONDITION UNIT

| | PRESENTATION CONDITION | | |
|---|---|---|---|
| | T CONDITION | D CONDITION | |
| | CONDITION OF NUMBER OF TIMES OF DRILL LEARNING | | |
| ATTRIBUTION CONDITION | 0 | 0 | |
| 01 (OTHER 1) | 1 | 1 | |
| 02 (OTHER 2) | 1 | 1 | |
| NUMBER OF NECESSARY CONTENT ITEMS | 2 | 2 | 4 KINDS |
| TOTAL NUMBER OF DRILL ITEMS | 0 | 0 | 0 TIMES |

AVERAGE OF TOTAL NUMBER OF DRILL ITEMS IN EACH PRESENTATION UNIT = | 0 TIMES |

NUMBER OF NECESSARY ITEMS IN ONE EVENT CYCLE UNIT = | 96 KINDS |

EP 1 450 280 A1

# FIG. 10

| TIMING CONDITION A5 | | |
|---|---|---|
| INTERVAL | 48 | DAY |
| EVENT CYCLE UNIT | 48 | DAY |
| CONDITION UNIT | 1 | DAY |

● LIST FOR DESIGNATING NUMBER OF CONTENT ITEMS FOR EACH ATTRIBUTION CONDITION AND PRESENTATION CONDITION WITHIN ONE CONDITION UNIT

| | PRESENTATION CONDITION | |
|---|---|---|
| | D CONDITION | |
| | CONDITION OF NUMBER OF TIMES OF DRILL LEARNING | |
| ATTRIBUTION CONDITION | 0 | |
| 03 (OTHER 3) | 1 | |
| NUMBER OF NECESSARY CONTENT ITEMS | 1 | 1 KINDS |
| TOTAL NUMBER OF DRILL ITEMS | 0 | 0 TIMES |
| AVERAGE OF TOTAL NUMBER OF DRILL ITEMS IN EACH PRESENTATION UNIT = | | 0 TIMES |

NUMBER OF NECESSARY ITEMS IN ONE EVENT CYCLE UNIT = 48 KINDS

# FIG. 11

**SUMMARY OF ITEMS GENERALIZING ALL CONDITIONS AND LEARNING HOURS TO BE PREDICTED**

| SUMMARY OF NUMBER OF USED ITEMS | |
|---|---|
| TOTAL NUMBER OF ITEMS USED UNDER CONDITION DEFINING TWO MONTHS AS EVENT CYCLE UNIT (CONTROL LEARNING) | 432 |
| TOTAL NUMBER OF ITEMS USED UNDER CONDITION DEFINING ONE MONTH AS EVENT CYCLE UNIT (BASIC LEARNING) | 768 |
| TOTAL NUMBER OF ITEMS USED FOR SCHEDULE DEFINED AS EVENT CYCLE UNIT (= FILLER ITEM) | 144 |

| TOTAL NUMBER OF USED WORDS | 1344 |
|---|---|
| TOTAL NUMBER OF USABLE WORDS | 1495 |
| REMAINED WORDS | 151 |

| PREDICTION OF DRILL LEARNING TIME | |
|---|---|
| LEARNING TIME PER WORD | 4 SECONDS |
| TIME REQUIRED FOR LEARNING (BASIC LEARNING + CONTROL LEARNING + FILLER LEARNING) | 14.9 MINUTES |

(EXCLUDE ASSESSMENT OF LEVEL OF MASTERY AND TIME FOR RECONFIRMATION TEST)

| DOUBLE CHECK TEST STRUCTURE | BASIC | CONTROL | TOTAL |
|---|---|---|---|
| NUMBER OF TARGETS IN ONE PRESENTATION UNIT = LEVEL OF MASTERY ASSESSMENT ITEM | 28 | 0 | 28 |
| NUMBER OF DESTRUCTOR IN ONE PRESENTATION UNIT | 10 | 9 | 19 |
| NUMBER OF WORS OF DOUBLE CHECK TEST LIST | 38 | 9 | 47 |

EP 1 450 280 A1

# FIG. 12A

| THROUGH NUMBER | ENGLISH WORD | INFORMATION SUCH AS DEGREE OF DIFFICULTY | JAPANESE TRANSLATION | CONDITION |
|---|---|---|---|---|
| SERIAL | Q | R | A | CONTENT IDENTIFICATION CONDITION CODE |
| 54 | rule | BC | 規則、習慣 | B1T01C0101R01 |
| 89 | allow | B | を許す、を与 | B1T01C0101R03 |
| 48 | common | BC | 共通の、普通 | B1T01C0101R06 |
| 83 | report | BC | 報告する、報 | B1T01C0101R08 |
| 60 | return | B | 戻る、帰る、 | B1T02C0101R02 |
| 39 | public | B | 公共の、公の | B1T02C0101R04 |
| 68 | simple | B | 単純な、簡単 | B1T02C0101R05 |
| 57 | situation | BD | 状況、立場、 | B1T02C0101R07 |
| 180 | switch | B | スイッチ、ス | B2T01C0101R01 |
| 97 | awake | B | （人の）目を | B2T01C0101R03 |
| 188 | harmony | BD | 調和 | B2T01C0101R06 |
| 121 | guard | BC | 見張り、警備 | B2T01C0101R08 |
| 159 | corporation | B | 法人、株式 | B2T02C0101R02 |
| 116 | string | BC | ひも、糸、弦 | B2T02C0101R04 |
| 98 | insurance | BD | 保険、保険金 | B2T02C0101R05 |
| 158 | witness | BD | 目撃者、（法 | B2T02C0101R07 |
| 264 | forward | B | 前方へに、前 | B3T01C0101R01 |
| 223 | waste | BDC | を無駄に使う | B3T01C0101R03 |
| 265 | friendly | B | 親しい、好意 | B3T01C0101R06 |
| 285 | reunion | B | 同窓会、再会 | B3T01C0101R08 |
| 217 | steep | BD | （傾斜が）急 | B3T02C0101R02 |
| 246 | delicious | B | | |

## FIG. 12B

| THROUGH NUMBER | ENGLISH WORD | INFORMATION SUCH AS DEGREE OF DIFFICULTY | JAPANESE TRANSLATION | CONDITION |
|---|---|---|---|---|
| SERIAL | Q | R | A | CONTENT IDENTIFICATION CONDITION CODE |
| 515 | utilty | D | 有益、効用 | ・・・・・・・・TS1 |
| 742 | suspect | D | 疑う、たぶん | ・・・・・・・・TS1 |
| 1099 | snare | D | わな（にかけ | ・・・・・・・・TS2 |
| 1392 | withhold | D | 差し控える、 | ・・・・・・・・TS2 |
| 526 | issue | D | 問題、発行、 | ・・・・・・・・TS3 |
| 952 | resort | D | 手段、遊山 | ・・・・・・・・TS3 |
| 1310 | determine | D | 決定する、 | XXD01CY0101R00 |
| 333 | sympathy | D | 同情、共感 | XXD01CY0101R01 |
| 1241 | credulous | D | 信じやすい、 | XXD01CY0101R01 |
| 1375 | defy | D | 無視する、い | XXD01CY0101R08 |
| 300 | hypocrisy | D | 偽善 | XXD01CY0101R08 |
| 1459 | bid | D | 命じる、述べ | XXD01CY0101R09 |
| 1199 | haughty | D | ごう慢な | XXD01CY0101R09 |
| 1082 | renown | D | 名声 | XXD01CY0101R16 |
| 1404 | detach | D | 引き離す、派 | XXD01CY0101R16 |
| 430 | thrift | D | 倹約 | XXD01CY0102R00 |
| 619 | solemn | D | 厳粛な | XXD01CY0102R03 |
| 876 | enbark | D | 乗船する（ | XXD01CY0102R03 |
| 976 | alternative | D | 他の、別の | XXD01CY0102R06 |
| 733 | embody | D | 具体化する | XXD01CY0102R06 |
| 1421 | sneer | D | 冷笑する | XXD01CY0102R11 |
| 376 | pity | D | | |

## FIG. 13

| CHECK | PHASE | NO | DAY | SERIAL | Q | R | A | CONTENT IDENTIFICATION CONDITION CODE | RAND | F | ANS | J | TIME |
|---|---|---|---|---|---|---|---|---|---|---|---|---|---|
| 1 | 0 | | 1997/1/19 | 23 | figurative | | 比喩的な | FFF01CY0101TS3 | 0.154 | 6 | | | 9.84 |
| 1 | 0 | | 1997/1/19 | 668 | sanitary | | 衛生の | FFF01CY0101TS2 | 0.270 | 6 | | | 4.00 |
| 1 | 0 | | 1997/1/19 | 1261 | expedition | | 探検（隊） | FFF01CY0101TS1 | 0.378 | 4 | | | 4.46 |
| 1 | 0 | | 1997/1/19 | 18 | thrift | | 倹約 | B2T01CY0101R06 | 0.065 | 6 | | | 3.82 |
| 1 | 0 | | 1997/1/19 | 33 | throng | | 群れる、群れ | 01T01CY0101R00 | 0.125 | 6 | | | 3.56 |
| 1 | 0 | | 1997/1/19 | 538 | gratitude | | 感謝 | 01T01CY0101R01 | 0.213 | 5 | | | 3.87 |
| 1 | 0 | | 1997/1/19 | 455 | ruin | | 破滅、廃虚、遺跡 | B3T01CY0101R03 | 0.275 | 4 | | | 3.47 |
| 1 | 1 | | 1997/1/19 | 23 | figurative | | 比喩的な | FFF01CY0101TS2 | 0.226 | | | B | 28.68 |
| 1 | 1 | | 1997/1/19 | 668 | sanitary | | 衛生の | FFF01CY0101TS1 | 0.270 | | | C | 19.13 |
| 1 | 1 | | 1997/1/19 | 674 | solemn | | 厳粛な | FFF01CY0101TS2 | 0.295 | | | C | 8.97 |
| 1 | 1 | | 1997/1/19 | 875 | vile | | 下劣な | FFF01CY0101TS3 | 0.315 | | | B | 10.34 |
| 1 | 2 | | 1997/1/19 | 436 | overtake | | 追いつく、襲う | XXD01CY0101R08 | 0.030 | | 2 | | 5.85 |
| 1 | 2 | | 1997/1/19 | 1014 | main | | 主要な | XXD01CY0101R08 | 0.031 | | 2 | | 3.47 |
| 1 | 2 | | 1997/1/19 | 243 | generalization | | 概括論、一般化 | | 0.032 | | 2 | | 6.59 |
| 1 | 2 | | 1997/1/19 | 243 | | | | | | | | | 1.84 |

EP 1 450 280 A1

## FIG. 14A

| FILE | START | END | N1 | N2 | NOBE | T0S | T0E | T1S | T1E | T2S |
|---|---|---|---|---|---|---|---|---|---|---|
| | EXAMPLE OF INDIVIDUAL HISTORY FILE | | | | | | | | | |
| M01D01.DBF | 2000/3/15 | 2000/3/15 | 1 | 38 | 210 | 59897 | 60003 | 60014 | 60112 | 60125 |
| M01D02.DBF | 2000/3/16 | 2000/3/16 | 39 | 76 | 190 | 82903 | 82903 | 83002 | 83121 | 83126 |
| M01D03.DBF | 2000/3/17 | 2000/3/17 | 77 | 114 | 190 | 75534 | 75534 | 75639 | 75744 | 75747 |
| M01D04.DBF | 2000/3/18 | 2000/3/18 | 115 | 152 | 190 | 69421 | 69520 | 69523 | 69649 | 69655 |
| M01D05.DBF | 2000/3/20 | 2000/3/20 | 153 | 190 | 190 | 44995 | 44994 | 44996 | 45103 | 45109 |
| M01D06.DBF | 2000/3/21 | 2000/3/21 | 191 | 228 | 190 | 82435 | 82539 | 82540 | 82624 | 82625 |
| M01D07.DBF | 2000/3/22 | 2000/3/22 | 229 | 266 | 210 | 65220 | 65314 | 65316 | 65392 | 65349 |
| M01D08.DBF | 2000/3/23 | | | | 100 | 75613 | 75704 | 75706 | 75836 | 75828 |
| M01D09.DBF | | | | | | | 70859 | 70861 | 70949 | 70950 |
| M01D10 | | | | | | | 71326 | 71431 | 71432 | |

TO FIG. 14B

EP 1 450 280 A1

# FIG. 14B

FROM FIG. 14A

| T2E | T3S | T3E | T4S | T4E | T5S | T5E | T6S | T6E | T7S | T7E |
|-----|-----|-----|-----|-----|-----|-----|-----|-----|-----|-----|
| 60189 | 60210 | 60419 | 60421 | 60561 | 60564 | 60704 | 61253 | 61375 | 61377 | 61513 |
| 83204 | 83210 | 83418 | 83419 | 83710 | 83714 | 84036 | 84038 | 84264 | 84266 | 84495 |
| 75824 | 75828 | 75997 | 76000 | 76360 | 76361 | 76702 | 76704 | 76857 | 76859 | 77114 |
| 69729 | 69734 | 69996 | 69997 | 70123 | 70124 | 70285 | 70286 | 70430 | 70438 | 70567 |
| 45184 | 45188 | 45352 | 45354 | 45496 | 45497 | 45632 | 45633 | 45764 | 45765 | 45865 |
| 82696 | 82699 | 82857 | 82858 | 83037 | 83038 | 83163 | 83165 | 83279 | 83298 | 83447 |
| 65464 | 65468 | 65666 | 65667 | 65851 | 65852 | 65987 | 65988 | 66126 | 66127 | 66243 |
| 75896 | 75910 | 76106 | 76107 | 76289 | | | | | | 76648 |
| 71010 | 71015 | 71227 | | | | | | | | |
| 71401 | 71406 | | | | | | | | | |

## FIG. 15A

| THROUGH NUMBER | ENGLISH WORD | INFORMATION SUCH AS DEGREE OF DIFFICULTY | JAPANESE TRANSLATION | CONDITION | ASSESSMENT VALUE OF LEVEL OF MASTERY OF OBJECTIVE INTERVAL UNIT | | | | | DATA OF INDEX OF INDIRECT DOUBLE CHECK | | | | DATA OF SELF ASSESSMENT (A, B, C, D) | | | |
|---|---|---|---|---|---|---|---|---|---|---|---|---|---|---|---|---|---|
| SERIAL | Q | R | A | CONTENT IDENTIFICATION CONDITION CODE | F 00 | F 01 | F 02 | F 03 | F 04 | ANS 01 | ANS 02 | ANS 03 | ANS 04 | J01 | J02 | J03 | J04 |
| 54 | rule | BC | 規則、習慣 | B1T01C0101R01 | 2 | 4 | 4 | 6 | 4 | 1 | 1 | 1 | 1 | B | A | B | A |
| 89 | allow | B | を許す、を与 | B1T01C0101R03 | 2 | 2 | 3 | 1 | 3 | 1 | 2 | 1 | 1 | AAA | AAA | AAA | AAA |
| 48 | common | BC | 共通の、普通 | B1T01C0101R06 | 3 | 3 | 3 | 5 | 3 | 1 | 1 | 1 | 1 | AAAAAB | AAAAAA | AAAAAA | AAAAAA |
| 83 | report | BC | 報告する、報 | B1T01C0101R08 | 2 | 2 | 3 | 4 | 4 | 1 | 1 | 1 | 1 | AAAAAAAB | AAAAAAAA | AAAAAAAA | AAAAAAAA |
| 60 | return | B | 戻る、帰る、 | B1T02C0101R02 | 1 | 3 | 3 | 3 | 3 | 2 | 1 | 1 | 1 | AD | AA | AC | AB |
| 39 | public | B | 公共の、公の | B1T02C0101R04 | 3 | 3 | 3 | 3 | 3 | 1 | 1 | 1 | 1 | ABBC | AAAA | AAAA | AAAA |
| 68 | simple | B | 単純な、簡単 | B1T02C0101R05 | 1 | 1 | 3 | 3 | 3 | 1 | 1 | 1 | 1 | AAABD | AAAAA | AAAAA | AAAAA |
| 57 | situation | BD | 状況、立場、 | B1T02C0101R07 | 2 | 4 | 3 | 3 | 3 | 1 | 1 | 1 | 1 | AAAAAAB | AAAAAAA | AAAAAAA | AAAAAAA |
| 180 | switch | B | スイッチ、ス | B2T01C0101R01 | 6 | 3 | 4 | 3 | 4 | 1 | 1 | 1 | 1 | D | C | A | A |
| 97 | awake | B | （人の）目を | B2T01C0101R03 | 2 | 5 | 5 | 4 | 3 | 1 | 1 | 1 | 1 | AAC | AAA | AAA | AAA |
| 188 | harmony | BD | 調和 | B2T01C0101R06 | 3 | 3 | 3 | 2 | 3 | 1 | 1 | 1 | 1 | AAAAAA | AAAAAA | AAAAAA | AAAAAA |
| 121 | guard | BC | 見張り、警備 | B2T01C0101R08 | 6 | 6 | 3 | 4 | 3 | 1 | 1 | 1 | 1 | AAAAAABC | AAAAAAAA | AAAAAAAA | AAAAAAAA |
| 159 | corporation | B | 法人、株式 | B2T02C0101R02 | 4 | 1 | 3 | 4 | 3 | 1 | 1 | 1 | 1 | BD | AB | AA | AB |

TO FIG. 15B

EP 1 450 280 A1

## FIG. 15B

| TIME INFORMATION REQUIRED FOR EACH REACTION | | | |
|---|---|---|---|
| JT01 | JT02 | JT03 | JT04 |
| 2.00/1.00/4.00/ | 2.00/1.00/3.00/ | 4.00/1.00/3.00/ | 2.00/1.00/3.00/ |
| 1.00/2.00/3.00/2.00/4.00/ | 1.00/1.00/2.00/1.00/3.00/ | 1.00/1.00/1.00/2.00/3.00/ | 2.00/3.00/2.00/1.00/3.00/ |
| 1.00/2.00/1.00/2.00/1.00/3.00/2.00/3.00/ | 1.00/1.00/1.00/2.00/2.00/2.00/1.00/3.00/ | 1.00/1.00/1.00/2.00/1.00/1.00/1.00/3.00/ | 1.00/1.00/2.00/1.00/1.00/2.00/1.00/3.00/ |
| 1.00/1.00/2.00/2.00/2.00/18.00/1.00/4.00/1.00/ | 2.00/1.00/2.00/1.00/1.00/1.00/1.00/3.00/1.00/ | 2.00/11.00/2.00/1.00/0.00/1.00/1.00/3.00/1.00/ | 1.00/1.00/1.000/1.00/1.00/2.00/2.00/2.00/1.00/ |
| 4.00/4.00/2.00/3.00/ | 2.00/4.00/1.00/3.00/ | 1.00/8.00/1.00/3.00 | 2.00/8.00/1.00/3.00/ |
| 3.00/4.00/8.00/10.00/2.00/4.00/ | 1.00/1.00/2.00/3.00/1.00/3.00/ | 1.00/1.00/1.00/3.00/1.00/3.00/ | 1.00/1.00/1.00/3.00/1.00/3.00/ |
| 3.00/3.00/23.00/10.00/10.00/2.00/4.00/ | 1.00/2.00/2.00/8.00/4.00/1.00/3.00/ | 2.00/2.00/1.00/1.00/3.00/1.00/3.00/ | 1.00/2.00/1.00/1.00/2.00/1.00/3.00/ |
| 4.00/8.00/3.00/2.00/2.00/5.00/3.00/2.00/4.00/ | 2.00/1.00/2.00/1.00/1.00/2.00/2.00/2.00/3.00/ | 1.00/1.00/1.00/1.00/2.00/3.00/1.00/1.00/3.00/ | 1.00/1.00/2.00/1.00/2.00/1.00/4.00/1.00/3.00/ |
| 8.00/2.00/4.00/ | 3.00/1.00/5.00 | 5.00/1.00/4.00/ | 8.00/1.00/3.00/ |
| 1.00/4.00/4.00/1.00/4.00/ | 1.00/1.00/2.00/1.00/3.00/ | 1.00/1.00/2.00/1.00/3.00/ | 1.00/1.00/2.00/1.00/4.00/ |
| 1.00/2.00/1.00/2.00/2.00/5.00/1.00/4.00/ | 1.00/1.00/1.00/1.00/2.00/1.00/4.00/ | 1.00/1.00/2.00/1.00/1.00/1.00/2.00/1.00/ | 1.00/1.00/1.00/1.00/1.00/2.00/1.00/3.00/ |
| 1.00/2.00/1.00/1.00/2.00/7.00/48.00/2.00/ | 1.00/1.00/2.00/1.00/2.00/1.00/1.00/2.00/1.00/ | 1.00/2.00/1.00/2.00/1.00/1.00/1.00/2.00/1.00 | 0.00/1.00/2.00/1.00/1.00/1.00/1.00/2.00/1.00/ |
| 3.00/4.00/3.00/3.00/ | 2.00/3.00/1.00/3.00/ | 2.00/2.00/1.00/3.00/ | 1.00/8.00/2.00/3.00/ |

EP 1 450 280 A1

## FIG. 16A

| THROUGH NUMBER | MONTH | DAY | CONTENT IDENTIFICATION CONDITION CODE | ATTRIBUTION INFORMATION | KINDS OF LEARNING METHODS | NUMBER OF REPETITION | EVENT CYCLE UNIT | MINIMUM UNIT OF EVENT UNIT | NUMBER OF CONTENTS |
|---|---|---|---|---|---|---|---|---|---|
| 1 | 1 | 1 | B1T01CY0101R01 | B1 | T | 01 | 1 | 1 | 1 |
| 2 | 1 | 1 | B1T01CY0101R03 | B1 | T | 03 | 1 | 1 | 1 |
| 3 | 1 | 1 | B1T01CY0101R06 | B1 | T | 06 | 1 | 1 | 1 |
| 4 | 1 | 1 | B1T01CY0101R08 | B1 | T | 08 | 1 | 1 | 1 |
| 5 | 1 | 1 | B2T01CY0101R01 | B2 | T | 01 | 1 | 1 | 1 |
| 6 | 1 | 1 | B2T01CY0101R03 | B2 | T | 03 | 1 | 1 | 1 |
| 7 | 1 | 1 | B2T01CY0101R06 | B2 | T | 06 | 1 | 1 | 1 |
| 8 | 1 | 1 | B2T01CY0101R08 | B2 | T | 08 | 1 | 1 | 1 |
| 9 | 1 | 1 | B3T01CY0101R01 | B3 | T | 01 | 1 | 1 | 1 |
| 10 | 1 | 1 | B3T01CY0101R03 | B3 | T | 03 | 1 | 1 | 1 |
| 11 | 1 | 1 | B3T01CY0101R06 | B3 | T | 06 | 1 | 1 | 1 |
| 12 | 1 | 1 | B3T01CY0101R08 | B3 | T | 08 | 1 | 1 | 1 |
| 13 | 1 | 1 | FFF01CY0101R06 | FF | F | 06 | 1 | 1 | 6 |
| 14 | 1 | 1 | 01D01CY0101R00 | 01 | D | 00 | 1 | 1 | 1 |
| 15 | 1 | 1 | 01D01CY0101R01 | 01 | D | 01 | 1 | 1 | 1 |
| 16 | 1 | 1 | 01D01CY0101R03 | 01 | D | 03 | 1 | 1 | 1 |
| 17 | 1 | 1 | 01D01CY0101R06 | 01 | D | 06 | 1 | 1 | 1 |
| 18 | 1 | 1 | 01D01CY0101R08 | 01 | D | 08 | 1 | 1 | 1 |
| 19 | 1 | 1 | 01T01CY0101R00 | 01 | T | 00 | 1 | 1 | 1 |
| 20 | 1 | 1 | 01T01CY0101R01 | 01 | T | 01 | 1 | 1 | 1 |
| 21 | 1 | 1 | 01T01CY0101R03 | 01 | T | 03 | 1 | 1 | 1 |
| 22 | 1 | 1 | 01T01CY0101R06 | 01 | T | 06 | 1 | 1 | 1 |
| 23 | 1 | 1 | 01T01CY0101R08 | 01 | T | 08 | 1 | 1 | 1 |
| 24 | 1 | 1 | 02D01CY0101R00 | 02 | D | 00 | 1 | 1 | 1 |
| 25 | 1 | 1 | 02D01CY0101R01 | 02 | D | 01 | 1 | 1 | 1 |
| 26 | 1 | 1 | 02D01CY0101R03 | 02 | D | 03 | 1 | 1 | 1 |
| 27 | 1 | 1 | 02D01CY0101R06 | 02 | D | 06 | 1 | 1 | 1 |
| 28 | 1 | 1 | 02D01CY0101R08 | 02 | D | 08 | 1 | 1 | 1 |
| 29 | 1 | 1 | 02T01CY0101R00 | 02 | T | 00 | 1 | 1 | 1 |
| 30 | 1 | 1 | 02T01CY0101R01 | 02 | T | 01 | 1 | 1 | 1 |
| 31 | 1 | 1 | 02T01CY0101R03 | 02 | T | 03 | 1 | 1 | 1 |
| 32 | 1 | 1 | 02T01CY0101R06 | 02 | T | 06 | 1 | 1 | 1 |
| 33 | 1 | 1 | 02T01CY0101R08 | 02 | T | 08 | 1 | 1 | 1 |
| 34 | 1 | 1 | XXD01CY0101R00 | XX | D | 00 | 1 | 1 | 1 |
| 35 | 1 | 1 | XXD01CY0101R01 | XX | D | 01 | 1 | 1 | 2 |
| 36 | 1 | 1 | XXD01CY0101R03 | XX | D | 08 | 1 | 1 | 2 |
| 37 | 1 | 1 | XXD01CY0101R06 | XX | D | 09 | 1 | 1 | 2 |
| 38 | 1 | 1 | XXD01CY0101R08 | XX | D | 16 | 1 | 1 | 2 |
| 39 | 1 | 2 | B1T02CY0101R02 | B1 | T | 02 | 1 | 1 | 1 |
| 40 | 1 | 2 | B1T02CY0101R04 | B1 | T | 04 | 1 | 1 | 1 |
| 41 | 1 | 2 | B1T02CY0101R05 | B1 | T | 05 | 1 | 1 | 1 |
| 42 | 1 | 2 | B1T02CY0101R07 | B1 | T | 07 | 1 | 1 | 1 |
| 43 | 1 | 2 | B2T02CY0101R02 | B2 | T | 02 | 1 | 1 | 1 |
| 44 | 1 | 2 | B2T02CY0101R04 | B2 | T | 04 | 1 | 1 | 1 |
| 45 | 1 | 2 | B2T02CY0101R05 | B2 | T | 05 | 1 | 1 | 1 |

FOR TIMING CONDITION A3

ORDER OF EVENT CYCLE UNIT (EXAMPLE: INCLUDING TWO TIMING CONDITIONS, FIRST MONTH AND SECOND MONTH)

ORDER OF MINIMUM EVENT CYCLE UNIT WITHIN EVENT CYCLE UNIT (IN THIS EXAMPLE, UNIT OF ONE MONTH)

# FIG. 16B

| THROUGH NUMBER | MONTH | DAY | CONTENT IDENTIFICATION CONDITION CODE | ATTRIBUTION INFORMATION | KINDS OF LEARNING METHODS | NUMBER OF REPETITION | EVENT CYCLE UNIT | MINIMUM UNIT OF EVENT UNIT | NUMBER OF CONTENTS |
|---|---|---|---|---|---|---|---|---|---|
| 913 | 2 | 1 | B1T01CY0201R01 | B1 | T | 01 | 2 | 1 | 1 |
| 914 | 2 | 1 | B1T01CY0201R03 | B1 | T | 03 | 2 | 1 | 1 |
| 915 | 2 | 1 | B1T01CY0201R06 | B1 | T | 06 | 2 | 1 | 1 |
| 916 | 2 | 1 | B1T01CY0201R08 | B1 | T | 08 | 2 | 1 | 1 |
| 917 | 2 | 1 | B2T01CY0201R01 | B2 | T | 01 | 2 | 1 | 1 |
| 918 | 2 | 1 | B2T01CY0201R03 | B2 | T | 03 | 2 | 1 | 1 |
| 919 | 2 | 1 | B2T01CY0201R06 | B2 | T | 06 | 2 | 1 | 1 |
| 920 | 2 | 1 | B2T01CY0201R08 | B2 | T | 08 | 2 | 1 | 1 |
| 921 | 2 | 1 | B3T01CY0201R01 | B3 | T | 01 | 2 | 1 | 1 |
| 922 | 2 | 1 | B3T01CY0201R03 | B3 | T | 03 | 2 | 1 | 1 |
| 923 | 2 | 1 | B3T01CY0201R06 | B3 | T | 06 | 2 | 1 | 1 |
| 924 | 2 | 1 | B3T01CY0201R08 | B3 | T | 08 | 2 | 1 | 1 |
| 925 | 2 | 1 | FFF01CY0201R06 | FF | F | 06 | 2 | 1 | 6 |
| 926 | 2 | 1 | 01D01CY0201R00 | 01 | D | 00 | 2 | 1 | 1 |
| 927 | 2 | 1 | 01D01CY0201R01 | 01 | D | 01 | 2 | 1 | 1 |
| 928 | 2 | 1 | 01D01CY0201R03 | 01 | D | 03 | 2 | 1 | 1 |
| 929 | 2 | 1 | 01D01CY0201R06 | 01 | D | 06 | 2 | 1 | 1 |
| 930 | 2 | 1 | 01D01CY0201R08 | 01 | D | 08 | 2 | 1 | 1 |
| 931 | 2 | 1 | 01T01CY0201R00 | 01 | T | 00 | 2 | 1 | 1 |
| 932 | 2 | 1 | 01T01CY0201R01 | 01 | T | 01 | 2 | 1 | 1 |
| 933 | 2 | 1 | 01T01CY0201R03 | 01 | T | 03 | 2 | 1 | 1 |
| 934 | 2 | 1 | 01T01CY0201R06 | 01 | T | 06 | 2 | 1 | 1 |
| 935 | 2 | 1 | 01T01CY0201R08 | 01 | T | 08 | 2 | 1 | 1 |
| 936 | 2 | 1 | 02D01CY0201R00 | 02 | D | 00 | 2 | 1 | 1 |
| 937 | 2 | 1 | 02D01CY0201R01 | 02 | D | 01 | 2 | 1 | 1 |
| 938 | 2 | 1 | 02D01CY0201R03 | 02 | D | 03 | 2 | 1 | 1 |
| 939 | 2 | 1 | 02D01CY0201R06 | 02 | D | 06 | 2 | 1 | 1 |
| 940 | 2 | 1 | 02D01CY0201R08 | 02 | D | 08 | 2 | 1 | 1 |
| 941 | 2 | 1 | 02T01CY0201R00 | 02 | T | 00 | 2 | 1 | 1 |
| 942 | 2 | 1 | 02T01CY0201R01 | 02 | T | 01 | 2 | 1 | 1 |
| 943 | 2 | 1 | 02T01CY0201R03 | 02 | T | 03 | 2 | 1 | 1 |
| 944 | 2 | 1 | 02T01CY0201R06 | 02 | T | 06 | 2 | 1 | 1 |
| 945 | 2 | 1 | 02T01CY0201R08 | 02 | T | 08 | 2 | 1 | 1 |
| 946 | 2 | 1 | XXD01CY0102R00 | XX | D | 00 | 1 | 1 | 1 |
| 947 | 2 | 1 | XXD01CY0102R01 | XX | D | 01 | 1 | 1 | 2 |
| 948 | 2 | 1 | XXD01CY0102R03 | XX | D | 08 | 1 | 1 | 2 |
| 949 | 2 | 1 | XXD01CY0102R06 | XX | D | 09 | 1 | 1 | 2 |
| 950 | 2 | 1 | XXD01CY0102R08 | XX | D | 16 | 1 | 1 | 2 |
| 951 | 2 | 2 | B1T02CY0201R02 | B1 | T | 02 | 2 | 1 | 1 |
| 952 | 2 | 2 | B1T02CY0201R04 | B1 | T | 04 | 2 | 1 | 1 |
| 953 | 2 | 2 | B1T02CY0201R05 | B1 | T | 05 | 2 | 1 | 1 |
| 954 | 2 | 2 | B1T02CY0201R07 | B1 | T | 07 | 2 | 1 | 1 |
| 955 | 2 | 2 | B2T02CY0201R02 | B2 | T | 02 | 2 | 1 | 1 |
| 956 | 2 | 2 | B2T02CY0201R04 | B2 | T | 04 | 2 | 1 | 1 |
| 957 | 2 | 2 | B2T02CY0201R05 | B2 | T | 05 | 2 | 1 | 1 |

FOR TIMING CONDITION A2

# FIG. 16C

| THROUGH NUMBER | MONTH | DAY | CONTENT IDENTIFICATION CONDITION CODE | ATTRIBUTION INFORMATION | KINDS OF LEARNING METHODS | NUMBER OF REPETITION | EVENT CYCLE UNIT | MINIMUM UNIT OF EVENT UNIT | NUMBER OF CONTENTS |
|---|---|---|---|---|---|---|---|---|---|
| 1825 | 3 | 1 | B1T01CY0301R01 | B1 | T | 01 | 3 | 1 | 1 |
| 1826 | 3 | 1 | B1T01CY0301R03 | B1 | T | 03 | 3 | 1 | 1 |
| 1827 | 3 | 1 | B1T01CY0301R06 | B1 | T | 06 | 3 | 1 | 1 |
| 1828 | 3 | 1 | B1T01CY0301R08 | B1 | T | 08 | 3 | 1 | 1 |
| 1829 | 3 | 1 | B2T01CY0301R01 | B2 | T | 01 | 3 | 1 | 1 |
| 1830 | 3 | 1 | B2T01CY0301R03 | B2 | T | 03 | 3 | 1 | 1 |
| 1831 | 3 | 1 | B2T01CY0301R06 | B2 | T | 06 | 3 | 1 | 1 |
| 1832 | 3 | 1 | B2T01CY0301R08 | B2 | T | 08 | 3 | 1 | 1 |
| 1833 | 3 | 1 | B3T01CY0301R01 | B3 | T | 01 | 3 | 1 | 1 |
| 1834 | 3 | 1 | B3T01CY0301R03 | B3 | T | 03 | 3 | 1 | 1 |
| 1835 | 3 | 1 | B3T01CY0301R06 | B3 | T | 06 | 3 | 1 | 1 |
| 1836 | 3 | 1 | B3T01CY0301R08 | B3 | T | 08 | 3 | 1 | 1 |
| 1837 | 3 | 1 | FFF01CY0301R06 | FF | F | 06 | 3 | 1 | 6 |
| 1838 | 3 | 1 | 01D01CY0301R00 | 01 | D | 00 | 3 | 1 | 1 |
| 1839 | 3 | 1 | 01D01CY0301R01 | 01 | D | 01 | 3 | 1 | 1 |
| 1840 | 3 | 1 | 01D01CY0301R03 | 01 | D | 03 | 3 | 1 | 1 |
| 1841 | 3 | 1 | 01D01CY0301R06 | 01 | D | 06 | 3 | 1 | 1 |
| 1842 | 3 | 1 | 01D01CY0301R08 | 01 | D | 08 | 3 | 1 | 1 |
| 1843 | 3 | 1 | 01T01CY0301R00 | 01 | T | 00 | 3 | 1 | 1 |
| 1844 | 3 | 1 | 01T01CY0301R01 | 01 | T | 01 | 3 | 1 | 1 |
| 1845 | 3 | 1 | 01T01CY0301R03 | 01 | T | 03 | 3 | 1 | 1 |
| 1846 | 3 | 1 | 01T01CY0301R06 | 01 | T | 06 | 3 | 1 | 1 |
| 1847 | 3 | 1 | 01T01CY0301R08 | 01 | T | 08 | 3 | 1 | 1 |
| 1848 | 3 | 1 | 02D01CY0301R00 | 02 | D | 00 | 3 | 1 | 1 |
| 1849 | 3 | 1 | 02D01CY0301R01 | 02 | D | 01 | 3 | 1 | 1 |
| 1850 | 3 | 1 | 02D01CY0301R03 | 02 | D | 03 | 3 | 1 | 1 |
| 1851 | 3 | 1 | 02D01CY0301R06 | 02 | D | 06 | 3 | 1 | 1 |
| 1852 | 3 | 1 | 02D01CY0301R08 | 02 | D | 08 | 3 | 1 | 1 |
| 1853 | 3 | 1 | 02T01CY0301R00 | 02 | T | 00 | 3 | 1 | 1 |
| 1854 | 3 | 1 | 02T01CY0301R01 | 02 | T | 01 | 3 | 1 | 1 |
| 1855 | 3 | 1 | 02T01CY0301R03 | 02 | T | 03 | 3 | 1 | 1 |
| 1856 | 3 | 1 | 02T01CY0301R06 | 02 | T | 06 | 3 | 1 | 1 |
| 1857 | 3 | 1 | 02T01CY0301R08 | 02 | T | 08 | 3 | 1 | 1 |
| 1858 | 3 | 1 | XXD01CY0201R00 | XX | D | 00 | 2 | 1 | 1 |
| 1859 | 3 | 1 | XXD01CY0201R01 | XX | D | 01 | 2 | 1 | 2 |
| 1860 | 3 | 1 | XXD01CY0201R03 | XX | D | 08 | 2 | 1 | 2 |
| 1861 | 3 | 1 | XXD01CY0201R06 | XX | D | 09 | 2 | 1 | 2 |
| 1862 | 3 | 1 | XXD01CY0201R08 | XX | D | 16 | 2 | 1 | 2 |
| 1863 | 3 | 2 | B1T02CY0301R02 | B1 | T | 02 | 3 | 1 | 1 |
| 1864 | 3 | 2 | B1T02CY0301R04 | B1 | T | 04 | 3 | 1 | 1 |
| 1865 | 3 | 2 | B1T02CY0301R05 | B1 | T | 05 | 3 | 1 | 1 |
| 1866 | 3 | 2 | B1T02CY0301R07 | B1 | T | 07 | 3 | 1 | 1 |
| 1867 | 3 | 2 | B2T02CY0301R02 | B2 | T | 02 | 3 | 1 | 1 |
| 1868 | 3 | 2 | B2T02CY0301R04 | B2 | T | 04 | 3 | 1 | 1 |
| 1869 | 3 | 2 | B2T02CY0301R05 | B2 | T | 05 | 3 | 1 | 1 |

## FIG. 17

Legend:
- ONCE / ONE MONTH
- TWICE / ONE MONTH
- THREE TIMES / ONE MONTH
- FOUR TIMES / ONE MONTH
- FIVE TIMES / ONE MONTH
- SIX TIMES / ONE MONTH
- SEVEN TIMES / ONE MONTH
- EIGHT TIMES / ONE MONTH

POINT OF SELF ASSESSMENT (y-axis: 0, 0.5, 1, 1.5, 2, 2.5, 3)

x-axis categories: TWO MONTHS, TWO MONTHS, THREE MONTHS, FOUR MONTHS, FIVE MONTHS, SIX MONTHS

FIRST CHANGE OF ASSESSED RECORD IN LEARNING PERIOD

EP 1 450 280 A1

## FIG. 18A

y=0.3648x+0.2519

SELF ASSESSMENT VALUE

3.00
2.50
2.00
1.50
1.00
0.50
0.00

1　2　3　4　5　6

CYCLE
(CYCLE UNIT: ONE MONTH)

## FIG. 18B

y=0.2146x+0.3697

SELF ASSESSMENT VALUE

3.00
2.50
2.00
1.50
1.00
0.50
0.00

1　2　3　4　5　6

CYCLE
(CYCLE UNIT: ONE MONTH)

## FIG. 18C

y=0.0673x+0.5826

SELF ASSESSMENT VALUE

3.00
2.50
2.00
1.50
1.00
0.50
0.00

1　2　3　4　5　6

CYCLE
(CYCLE UNIT: ONE MONTH)

EP 1 450 280 A1

# FIG. 19A

**START**

**INITIAL SETTING**
( INPUTTED )
- o LEARNING PERIOD ha (FOUR MONTHS)
- o LEARNING SCHEDULE hb, ex
- o ONCE PER DAY, FOUR KINDS OF WORDS
  CONTENT Ci (WORD FOR FIRST GRADE
  OF SENIOR HIGH SCHOOL)
  READ DEGREE OF DIFFICULTY)

~ S1

GENERATE EVENT CYCLE UNIT mi TO LEARN
SAME WORD AGAIN AFTER LEARNING ONCE
AT INTERVAL OF ONE MONTH FOR EACH DAY
(MINIMUM UNIT OF ONE DAY)

~ S2

**CODING** ~ S3

- o FIRST TO 48TH DAY (TWO MONTHS) ARE
  DEFINED AS FIRST EVENT CYCLE UNIT mip
- o 49TH TO 96TH DAY (NEXT TWO MONTHS)
  ARE DEFINED AS SECOND EVENT CYCLE
  UNIT miq

~ S4

GROUPING OF Ci (WORDS FOR FIRST GRADE
OF SENIOR HIGH SCHOOL, FOUR KINDS PER
DAY), Ca1, Ca2, ...

~ S5

ISSUE FORMER PRESENTATION CONDITION ONCE
PER FOUR DAYS IN 16 KINDS FOR FOUR DAYS.
GENERATE CONDITION UNIT fi HAVING
DIFFERENT NUMBER OF TIMES FOR EACH DAY.

~ S6

**CODING** ~ S7

ALLOCATE fi (12 PIECES) TO mip, miq ~ S8

①

# FIG. 19B

| ONE MONTH | TWO MONTHS | THREE MONTHS | FOUR MONTHS |

| FIRST DAY | 24TH DAY | 48TH DAY | 70TH DAY | 96TH DAY |

1000 · · ·    1   0   0   0   0

mip      miq

# FIG. 19C

MINIMUM UNIT

| 1 | 2 | 4 | 3 | 8TH DAY |

CONDITION UNIT

SIXTEEN KINDS

| 1 | 1 |

FIRST     SECOND

## FIG. 20

①

fi=1 —— S9

GENERATE PRESENTATION UNIT Pi
WITH FOUR KINDS FOR ONE DAY
AND ALLOCATING IT TO fi OF mip —— S10

DECIDE 16 KINDS FOR FOUR DAYS
OF Cag FROM Ca —— S11

DECIDE WORD WITH FOUR KINDS FOR
ONE DAY CQ (CQ1 ... CQ4) FROM Cag —— S12

CQ ← CQ1 —— S13

READ DEGREE OF DIFFICULTY
gi OF CQ —— S14

S18

CQ ← CQ+1

DECIDE NUMBER OF PRESENTATION
Ni TO CQ IN ACCORDANCE WITH gi —— S15

S21

DECIDE NEXT FOUR DAYS
OF CaQ FROM CA

ALLOCATE FOUR KINDS OF Ni TO Pi
(Pi → PQ) —— S16

S20

fi ← fi+1

N ⟵ Pa=4 —— S17

Y

fi=12 ⟶ N —— S19

Y

COPY TABLE OF mip AS TABLE
OF miq —— S22

END

# FIG. 21A

PRESENTATION CONDITION

PRESENTATION UNIT

| DAY | CONTENT NUMBER | NUMBER OF TIMES | DEGREE OF DIFFICULTY |
|---|---|---|---|
| 1/1 | 101 | 3 | HIGH |
| 1/1 | 102 | 1 | LOW |
| 1/1 | 103 | 3 | HIGH |
| 1/1 | 105 | 2 | MIDDLE |
| 1/2 | 106 | 2 | MIDDLE |
| 1/2 |  | 1 | LOW |

# FIG. 21B

DISTRIBUTION LIST (PRESENTATION UNIT)

| DAY | CONTENT NUMBER |
|---|---|
| 1/1 | 101 |
| 1/1 | 102 |
| 1/1 | 101 |
| 1/1 | 105 |
| 1/1 | 103 |
| 1/1 | 105 |
| 1/1 | 103 |
| 1/1 | 101 |
| 1/1 | 103 |
| 1/2 | 106 |
| 1/2 | 107 |
| 1/2 | 106 |

ONE PIECE

TWO PIECES

THREE PIECES

# FIG. 22

EP 1 450 280 A1

LEARNER TERMINAL

SERVICE NAME

THIRD GRADE OF
JUNIOR HIGH SCHOOL

INTERNET

SCHEDULE
TABLE

| DAY | CONTENT NUMBER | NUMBER OF TIMES |
|-----|----------------|-----------------|
| 1 | 101 | 2 |
| 1 | 102 | 1 |
| 1 | 103 | 6 |
| 2 | 105 | 2 |
| 2 | 106 | 1 |

LIST CONTENT
(WITH DEGREE
OF DIFFICULTY)

TRANSMISSION
LIST

| DAY | CONTENT NUMBER |
|-----|----------------|
| 1 | 101 |
| 1 | 102 |
| 1 | 101 |
| 1 | 103 |
| 1 | 103 |

# FIG. 23

EP 1 450 280 A1

| DAY | CONTENT NUMBER | NUMBER OF TIMES | DEGREE OF DIFFICULTY |
|-----|----------------|-----------------|----------------------|
| 1 | 101 | 2 | B1 |
| 1 | 102 | 1 | B1 |
| 1 | 103 | 0 | B2 |
| 2 | 105 | 2 | B1 |
| 2 | 106 | 1 | B1 |

## FIG. 24A

IDENTIFICATION CODE        ATTRIBUTION INFORMATION

| C101 | oil | OIL | LEVEL AT FIRST GRADE OF JUNIOR HIGH SCHOOL | 90% OF LEVEL OF MASTERY | DEGREE OF DIFFICULTY (LOW) | HIERARCHY | RELATING INFORMATION |
|---|---|---|---|---|---|---|---|
| C102 | stady | STUDY | LEVEL AT FIRST GRADE OF JUNIOR HIGH SCHOOL | 50% OF LEVEL OF MASTERY | DEGREE OF DIFFICULTY (MIDDLE) | HIERARCHY | RELATING INFORMATION |
| C103 | pink | PINK | LEVEL AT FIRST GRADE OF JUNIOR HIGH SCHOOL | 70% OF LEVEL OF MASTERY | DEGREE OF DIFFICULTY (MIDDLE) | HIERARCHY | RELATING INFORMATION |
| C104 | sack | SACK | LEVEL AT FIRST GRADE OF JUNIOR HIGH SCHOOL | 20% OF LEVEL OF MASTERY | DEGREE OF DIFFICULTY (HIGH) | HIERARCHY | RELATING INFORMATION |
| | | | | | | | |

LEARNING CONTENT

## FIG. 24B

| 1 | IDA | NAME A | TELEPHONE NUMBER A | ADDRESS A | E MAIL A | SELECTED SCHEDULE HISTORY A | ACCOUNT NUMBER A |
|---|---|---|---|---|---|---|---|
| 2 | IDB | NAME B | TELEPHONE NUMBER B | ADDRESS B | E MAIL B | SELECTED SCHEDULE HISTORY B | ACCOUNT NUMBER B |
| 3 | IDC | NAME C | TELEPHONE NUMBER C | ADDRESS C | E MAIL C | SELECTED SCHEDULE HISTORY C | ACCOUNT NUMBER C |
| 4 | IDD | NAME D | TELEPHONE NUMBER D | ADDRESS D | E MAIL D | SELECTED SCHEDULE HISTORY D | ACCOUNT NUMBER D |
| | | | | | | | |

## FIG. 24C

DEGREE OF DIFFICULTY (MIDDLE)    (LOW)    (HIGH)

| C12 | ATTRIBUTION INFORMATION |
|---|---|
| C13 | ATTRIBUTION INFORMATION |
| | |

## FIG. 25

| THROUGH NUMBER | MONTH | DAY | CONTENT IDENTIFICATION CONDITION CODE | ATTRIBUTION INFORMATION | KINDS OF LEARNING METHODS | NUMBER OF REPETITION | EVENT CYCLE UNIT (FOR EXAMPLE, MONTH) | MINIMUM UNIT OF EVENT UNIT (FOR EXAMPLE, DAY) | NUMBER OF CONTENTS |
|---|---|---|---|---|---|---|---|---|---|
| 1 | 1 | 1 | B1T01CY0101R01 | B1 | T | 01 | 1 | 1 | 1 |
| 2 | 1 | 1 | B1T01CY0101R08 | B2 | T | 8 | 1 | 1 | 1 |
| 3 | 1 | 1 | B1T01CY0101R010 | B2 | T | 10 | 1 | 1 | 1 |
| 4 | 1 | 1 | B1T01CY0101R016 | B3 | T | 16 | 1 | 1 | 1 |

SECOND GRADE OF JUNIOR HIGH SCHOOL

THIRD GRADE OF JUNIOR HIGH SCHOOL

EVENT CYCLE

PRESENTATION CONDITION 1    PRESENTATION CONDITION 2

PRESENTATION CONDITION

EP 1 450 280 A1

**FIG. 26**

| DAY | CONTENT |
|-----|---------|
| 1/1 | C101 |
| 1/1 | C102 |
| 1/1 | C104 |
| 1/1 | C103 |
| 1/1 | C102 |
| 1/1 | C103 |
| 1/1 | C102 |
| 1/1 | C104 |
| 1/1 | C103 |
| 1/1 | C103 |

TOTAL    C101    ONCE

C102    EIGHT TIMES

C103    TEN TIMES

C104    SIXTEEN TIMES

# FIG. 27

FIRST CHANGE OF ASSESSED RECORD IN LEARNING PERIOD

Y-axis: POINT OF SELF ASSESSMENT

X-axis categories: ONE MONTH, TWO MONTHS, THREE MONTHS, FOUR MONTHS, FIVE MONTHS, SIX MONTHS

Legend:
- ONCE / ONE MONTH
- TWICE / ONE MONTH
- THREE TIMES / ONE MONTH
- FOUR TIMES / ONE MONTH
- FIVE TIMES / ONE MONTH
- SIX TIMES / ONE MONTH
- SEVEN TIMES / ONE MONTH
- EIGHT TIMES / ONE MONTH

EP 1 450 280 A1

# FIG. 28

LEARNING SCHEDULE DISTRIBUTION SITE

CONTENT (WITH DEGREE OF DIFFICULTY)

LEARNER TERMINAL A

CORPORATION

ADVISOR TERMINAL

ACCESS d1

d2 HOME PAGE

d3 REQUEST REGISTRATION

d4 REGISTRATION SCREEN

INDIVIDUAL INFORMATION (NAME, TELEPHONE NUMBER, E MAIL, ACCOUNT NUMBER...)

NOTIFY REGISTRATION

d7

CONTENT REQUEST (SELECTION) d8

LIST OF STANDARD SCHEDULE EFFECT

d12

SCHEDULE SELECTION d13

(SELECTION INFORMATION)

LEARNER TERMINAL B

stady

d17

LIST TRANSMISSION

(FOR FOUR MONTHS)

d16

d18

DISPLAY ⟷ DOWNLOAD

COLLECT REACTIONS / REACTION RESULT

d19

d20 TRANSMIT REACTION RESULT

d20

d20

d22

CONTENT 10

25

d6

ADD REGISTRATION INFORMATION ID

d9

AUTHENTICATION

OFFERING d10

d11

SERVICE LIST 16

SCHEDULE TABLE 9

MAKE TRANSMISSION LIST

d15

SELECTION INFORMATION

ID, AGE, CONTENT NAME, LEARNING PERIOD, NUMBER OF TIMES 26

d14

26

REACTION RESULT

EP 1 450 280 A1

## FIG. 29

# FIG. 30A

USER INFORMATION

| YEAR, MONTH, DAY | ID, NAME, ... | SELECTED CONTENT NAME (FIRST GRADE OF JUNIOR HIGH SCHOOL, ENGLISH WORD) |

SELECTED SCHEDULE NUMBER + PERIOD, NUMBER OF TIMES, DEGREE OF DIFFICULTY

# FIG. 30B

USER INFORMATION

| YEAR, MONTH, DAY | ID, NAME, ... | SELECTED CONTENT NAME (FIRST GRADE OF JUNIOR HIGH SCHOOL, ENGLISH WORD) |

SELECTED SCHEDULE NUMBER + PERIOD, NUMBER OF TIMES, DEGREE OF DIFFICULTY

PRESENTATION LIST NUMBER, YEAR, MONTH, DAY

# FIG. 30C

USER INFORMATION

| YEAR, MONTH, DAY | ID, NAME, ... | SELECTED CONTENT NAME (FIRST GRADE OF JUNIOR HIGH SCHOOL, ENGLISH WORD) |

SELECTED SCHEDULE NUMBER + PERIOD, NUMBER OF TIMES, DEGREE OF DIFFICULTY

PRESENTATION LIST NUMBER, YEAR, MONTH, DAY

REACTION DATA (YEAR, MONTH, DAY, TIME, CONTENT IDENTIFICATION CONDITION CODE, TIME FOR REACTION) | DETERMINATION NUMBER

# FIG. 30D

USER INFORMATION

| YEAR, MONTH, DAY | ID, NAME, ... | SELECTED CONTENT NAME (FIRST GRADE OF JUNIOR HIGH SCHOOL, ENGLISH WORD) |

SELECTED SCHEDULE NUMBER + PERIOD, NUMBER OF TIMES, DEGREE OF DIFFICULTY

PRESENTATION LIST NUMBER, YEAR, MONTH, DAY

REACTION DATA (YEAR, MONTH, DAY, TIME, CONTENT IDENTIFICATION CONDITION CODE, TIME FOR REACTION) | DETERMINATION NUMBER

ANALYZED PATTERN NUMBER

EP 1 450 280 A1

## FIG. 31A

QUESTIONNAIRE (1)

Study

<?>

PUSH KEY AND DETERMINE

## FIG. 31B

QUESTIONNAIRE (1)

Study

<■>

ANSWER

LEARNING, STUDY

DETERMINATION ? (A: EXCELLENT, B: GOOD, C: NO GOOD, D: BAD)

FIG. 32B

FIG. 32A

FIG. 32D

FIG. 32C

## FIG. 33

d40 (REGISTRATION OF INDIVIDUAL ACCORDING TO NEED)

LEARNER → CENTER

CONTENT BOX:
- CONTENT WITH CONDITION
- LEARNING SCHEDULE
- REGISTERED PROGRAM
- LEARNING PRESENTATION PROGRAM
- DATA TRANSMISSION PROGRAM
- EXPLANATION OF SCHEDULE AND RECORD AND ILLUSTRATION

REFER

DOWNLOAD

d41

INSTALL

d43
AFTER CONFIRMING USER, GENERATE AUTHENTICATION INFORMATION AND REGISTER TENTATIVELY

d42 USER'S REQUEST TO START (ACCORDING TO NEED, INDIVIDUAL REGISTRATION)

DATABASE AREA, SECURE, SAVE USAGE ENVIRONMENT, FORMAL REGISTRATION
d47

d45
d44 TRANSMIT AUTHENTICATION INFORMATION

TENTATIVE REGISTRATION
d46 REQUEST OF FORMAL REGISTRATION (INSTALL INFORMATION, AUTHENTICATION INFORMATION)

d49
d48 TRANSMIT FORMAL REGISTRATION INFORMATION (USER TERMINAL ID AND OTHERS)

FORMAL REGISTRATION
REGISTRATION IS COMPLETED (USER'S START) INFORMATION

TURN INTO STATUS THAT USER CAN START

(LEARNING)  CONTINUED

d50

EP 1 450 280 A1

# FIG. 34

| LEARNER | | CENTER | | SERVER FOR HOME PAGE |
|---|---|---|---|---|

TRANSMIT REACTION DATA — d51

LEARNING

ANALYZE SAVING OF DATA — d52

NOTIFY LOCATION OF ANALYSIS RESULT WITH URL BY MAIL OR DIRECTLY TRANSMIT ANALYSIS RESULT

OUTPUT ANALYSIS RESULT d53

| ADVISOR, TEACHER OR THE LIKE |
|---|

NOTIFY URL

d55

d54

d55

REFER TO DATA OF USER HIMSELF OR HERSELF AND OTHER PERSONS

REFER TO HOME PAGE OF RESULT

REFER

| OTHER THIRD PERSON |
|---|

INFORMATION OF STARTING NEW SCHEDULE WHEN SCHEDULE CHANGES FROM MIDDLE

d58

REFER TO VARIOUS INDIVIDUAL DATA

d57

CHANGE OF SECURING OF DATABASE

d56

TRANSMIT LEARNING REACTION DATA OF NEW SCHEDULE

EP 1 450 280 A1

## INTERNATIONAL SEARCH REPORT

| | International application No. |
|---|---|
| | PCT/JP02/11611 |

**A. CLASSIFICATION OF SUBJECT MATTER**
    Int.Cl⁷  G06F17/60

According to International Patent Classification (IPC) or to both national classification and IPC

**B. FIELDS SEARCHED**

Minimum documentation searched (classification system followed by classification symbols)
    Int.Cl⁷  G06F17/60, G09B7/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Shin'ya KOJIMA, "Kogyo Eitango Gakushu System ni yoru Gakushu Koka", 2000 nen Joho·System Society Taikai Koen Ronbunshu, The Institute of Electronics, Information and Communication Engineers, 07 September, 2000 (07.09.00), page 296 | 12-30 |
| A | JP 5-150710 A (Hitachi Software Engineering Co., Ltd.), 18 June, 1993 (18.06.93), Full text; Figs. 1 to 19 (Family: none) | 12-30 |
| A | JP 11-15361 A (Yukio WATANABE), 22 January, 1999 (22.01.99), Full text; Figs. 1 to 7 (Family: none) | 12-30 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07 January, 2003 (07.01.03) | 21 January, 2003 (21.01.03) |

| Name and mailing address of the ISA/<br>    Japanese Patent Office | Authorized officer |
|---|---|
| Facsimile No. | Telephone No. |

Form PCT/ISA/210 (second sheet) (July 1998)

## INTERNATIONAL SEARCH REPORT

| | International application No. |
|---|---|
| | PCT/JP02/11611 |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2000-267554 A (Kabushiki Kaisha Gakushu Kankyo Kenkyusho), 29 September, 2000 (29.09.00) Full text; Figs. 1 to 5 (Family: none) | 28-30 |

Form PCT/ISA/210 (continuation of second sheet) (July 1998)

**INTERNATIONAL SEARCH REPORT**

International application No.

PCT/JP02/11611

---

**Box I    Observations where certain claims were found unsearchable (Continuation of item 2 of first sheet)**

This international search report has not been established in respect of certain claims under Article 17(2)(a) for the following reasons:

1. [X] Claims Nos.: 1-11

   because they relate to subject matter not required to be searched by this Authority, namely:
   The inventions of claims 1-7, 10-11 relate to a method of making a schedule, and consequently to a method of performing a purely mental act.
   The inventions of claims 8-9 relate to a storage medium where a schedule table is stored, and to mere presentation of information.

2. [ ] Claims Nos.:

   because they relate to parts of the international application that do not comply with the prescribed requirements to such an extent that no meaningful international search can be carried out, specifically:

3. [ ] Claims Nos.:

   because they are dependent claims and are not drafted in accordance with the second and third sentences of Rule 6.4(a).

---

**Box II    Observations where unity of invention is lacking (Continuation of item 3 of first sheet)**

This International Searching Authority found multiple inventions in this international application, as follows:

1. [ ] As all required additional search fees were timely paid by the applicant, this international search report covers all searchable claims.

2. [ ] As all searchable claims could be searched without effort justifying an additional fee, this Authority did not invite payment of any additional fee.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ]    The additional search fees were accompanied by the applicant's protest.

[ ]    No protest accompanied the payment of additional search fees.

---

Form PCT/ISA/210 (continuation of first sheet (1)) (July 1998)